(19) Europäisches Patentamt
European Patent Office
Office européen des brevets

(11) **EP 2 012 409 A2**

(12) **EUROPEAN PATENT APPLICATION**

(43) Date of publication:
**07.01.2009 Bulletin 2009/02**

(51) Int Cl.:
**H02K 1/14** (2006.01)    **H02K 1/27** (2006.01)

(21) Application number: **08011066.1**

(22) Date of filing: **18.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.06.2007   JP 2007160981**
**19.06.2007   JP 2007160849**
**23.10.2007   JP 2007274578**
**23.10.2007   JP 2007274580**

(71) Applicant: **Hitachi, Ltd.**
**Tokyo 100-8280 (JP)**

(72) Inventors:
• **Enomoto, Yuji**
**Tokyo 100-8220 (JP)**

• **Miyata, Kenji**
**Tokyo 100-8220 (JP)**
• **Ishikawa, Yoshihisa**
**Tokyo 100-8220 (JP)**
• **Makiyama, Takahiro**
**Tokyo 100-8220 (JP)**
• **Ito, Motoya**
**Tokyo 100-8220 (JP)**
• **Koyama, Takayuki**
**Tokyo 100-8220 (JP)**
• **Kanazawa, Hiroshi**
**Tokyo 100-8220 (JP)**

(74) Representative: **Beetz & Partner**
**Patentanwälte**
**Steinsdorfstrasse 10**
**80538 München (DE)**

(54) **Rotating electrical machine**

(57)    A rotating electrical machine includes: a claw pole stator constituted with a stator core that includes a plurality of claw poles and a stator coil wound inside the stator core; and a rotor rotatably disposed at a position facing opposite the claw poles. The stator core is constituted of split blocks each corresponding to at least one of magnetic pole pairs each made up with two claw poles assuming different magnetic polarities when an electric current is supplied to the stator coil.

FIG.1B

## Description

The disclosures of the following priority applications are herein incorporated by reference:

Japanese Patent Application No. 2007-160849 filed June 19, 2007
Japanese Patent Application No. 2007-160981 filed June 19, 2007
Japanese Patent Application No. 2007-274578 filed October 23, 2007
Japanese Patent Application No. 2007-274580 filed October 23, 2007

The present invention relates to a rotating electrical machine such as a motor or a generator used in a wide range of applications including industrial applications, home appliance applications and automotive applications.

Today, rotating electrical machines in diverse forms, such as induction motors, permanent magnet synchronous motors, DC commutator motors and various types of generators, are utilized in a wide range of applications. Such a rotating electrical machine may be used as a motor by adopting a principle whereby a stator or a rotor is constituted with a coil and a core and a rotational force is obtained via an electromagnet formed at the core as a current is supplied to the coil.

The need to assure better efficiency in a rotating electrical machine is now more urgent than ever. In order to achieve better efficiency, it is crucial to minimize loss. For instance, Japanese Laid Open Patent Publication No. 2006-180646 discloses a structure that includes a coil wound in a ring-shaped layout so as to eliminate coil ends and a high-density powder core formed by compressing magnetic powder coated with an insulating material so as to assure high resistance characteristics and reduced core loss.

However, there are issues yet to be effectively addressed in the related art in that the structure with the entire coil covered with a magnetic material leads to a significant inductance and that the stator coil assuming a complex structure cannot be manufactured with a high level of productivity.

The present invention is to provide a rotating electrical machine with improved productivity and efficiency.

In order to achieve the above mentioned object, a rotating electrical machine according to the present invention includes: a claw pole stator constituted with a stator core that comprises a plurality of claw poles and a stator coil wound inside the stator core; and a rotor rotatably disposed at a position facing opposite the claw poles, wherein: the stator core is constituted of split blocks each corresponding to at least one of magnetic pole pairs each made up with two claw poles assuming different magnetic polarities when an electric current is supplied to the stator coil.

Another rotating electrical machine according to the present invention includes: a stator constituted with a stator core that comprises a plurality of claw poles and a stator coil wound inside the stator core; and a rotor rotatably disposed at a position facing opposite the claw poles, wherein: the stator core comprises a plurality of magnetic pole pairs each made up with at least two claw poles to assume different magnetic polarities, with the plurality of magnetic pole pairs disposed with an interval set therebetween along a circumferential direction.

Another rotating electrical machine according to the present invention includes: a stator constituted with a stator core formed by laminating magnetic sheets and a stator coil wound inside the stator core; and a rotor rotatably disposed relative to the stator, wherein: the stator core comprises first claw poles extending from one side toward another side along an axial direction and second claw poles extending from the other side toward the one side along the axial direction, with the first claw poles and the second claw poles disposed so as to alternate with each other along a circumferential direction at the stator core; and at the first claw poles and the second claw poles, the magnetic sheets are laminated one on top of another along the circumferential direction so that layered surfaces face opposite the rotor.

BRIEF DESCRIPTION OF THE DRAWINGS

FIG. 1A is a perspective of a motor achieved in a first embodiment;
FIG. 1B is an exploded perspective of the motor;
FIG. 2A is a perspective of the end bracket located on the output shaft side;
FIG. 2B is a perspective of the end bracket located on the opposite end along the axial direction;
FIG. 3 is a perspective of the U-phase stator achieved in the first embodiment;
FIG. 4 is a perspective of the stator corresponding to the three phases in the first embodiment;
FIG. 5 is an exploded perspective of the phase stator corresponding to a given phase;
FIG. 6A is a perspective of a given block;
FIG. 6B shows the block viewed substantially along the axial direction;
FIG. 6C is a perspective of a split block;
FIG. 7 is a perspective presenting another example of a block;

FIG. 8A presents the waveform of an AC current example;

FIG. 8B shows a claw pole magnetized to achieve S polarity;

FIG. 8C shows a claw pole magnetized to achieve N polarity;

FIG. 8D shows the relationship between the stator magnetic poles and the rotor magnetic poles achieved at a time point T1;

FIG. 8E shows the relationship between the stator magnetic poles and the rotor magnetic poles achieved at a time point T2;

FIG. 9A is a perspective of the stator taken over a predetermined angle range;

FIG. 9B is a sectional view of the U-phase stator in FIG. 9A;

FIG. 9C is a sectional view of the V-phase stator in FIG. 9A;

FIG. 9D is a sectional view of the W-phase stator in FIG. 9A;

FIG. 10A is a perspective showing a block holding surface of a holding plate achieved in a second embodiment;

FIG. 10B is a perspective showing the rear surface of one of the holding plates;

FIG. 10C is a perspective showing the rear surface of the other holding plate;

FIG. 11A is a perspective of the end bracket located on the output shaft side;

FIG. 11B is a perspective of the end bracket located on the opposite end along the axial direction;

FIG. 12A is a perspective showing a block holding surface of a holding plate achieved in a third embodiment;

FIG. 12B is a perspective showing the surface of the holding plate on the opposite side from the holding surface;

FIG. 13A is a perspective showing a block holding surface of a holding plate achieved in a fourth embodiment;

FIG. 13B is a perspective showing part of the stator with one of the holding plates disengaged;

FIG. 13C is a perspective of the phase stator corresponding to a given phase;

FIG. 13D is a perspective of the stator corresponding to the three phases;

FIG. 14A is a perspective of a steel sheet used to constitute a split block in a fifth embodiment;

FIG. 14B is a perspective of a plurality of steel sheets layered one on top of another;

FIG. 14C is a sectional view of a split block forming die taken through a side surface thereof;

FIG. 14D is a perspective of the split block;

FIG. 15 is a diagram showing the relationships each observed with regard to the magnetic flux density (B) and the magnetic field (H) in correspondence to a specific material;

FIG. 16 is a perspective of a split block achieved in a sixth embodiment;

FIG. 17A shows a laminated assembly to be used to form a block in a seventh embodiment;

FIG. 17B shows the block that is ultimately formed;

FIG. 18 is a sectional view of an automotive alternator taken through a side surface thereof;

FIG. 19 is a perspective of the rotor in the automotive alternator;

FIG. 20 is a perspective showing the automotive alternator in a partial sectional view;

FIG. 21 is a circuit diagram of the automotive alternator;

FIG. 22 shows the layout adopted for the stator cores in the claw pole rotating electrical machine achieved in a ninth embodiment;

FIG. 23A shows a blank;

FIG. 23B shows a laminated assembly;

FIG. 23C shows a laminated assembly having been deformed in correspondence to the claw pole shape to be achieved;

FIG. 23D is a plan view of a deformed laminated assembly;

FIG. 23E is a perspective of the claw pole;

FIG. 23F is a plan view of the claw pole;

FIG. 24A is a perspective of the claw poles and the holding plate;

FIG. 24B shows a half phase stator 3 to constitute half of a phase stator corresponding to a given phase with the claw poles disposed at the holding plate;

FIG. 24C shows a coil disposed at the half phase stator;

FIG. 24D shows a phase stator corresponding to a given phase;

FIG. 24E is a plan view of the phase stator corresponding to a given phase, viewed along the axial direction;

FIG. 25 is a sectional view showing the structure assumed at the phase stator corresponding to a given phase;

FIG. 26 shows the positional arrangement adopted for the phase stators each corresponding to a specific phase at a three-phase stator;

FIG. 27 is a perspective of the three-phase stator;

FIG. 28 is a perspective of the three-phase stator after its inner circumferential surface and the outer circumferential surface are machined;

FIG. 29 presents an exploded perspective of a motor that includes the three-phase stator and an external view of the assembled motor;

FIG. 30A is a perspective showing a shape that may be adopted for a holding plate;

FIG. 30B is a perspective presenting another example of a holding plate;

FIG. 30C is a perspective of a holding plate that includes an outer circumferential side wall;

FIG. 31A shows a half phase stator corresponding to a given phase;

FIG. 31B shows a half phase stator that includes a holding plate portion;

FIG. 31C schematically illustrates a die;

FIG. 32A shows a phase stator corresponding to a given phase;

FIG. 32B shows a phase stator that includes holding plates that cover the outer circumferential-side surfaces of the claw poles;

FIG. 32C schematically illustrates how the phase stator achieved in an 11th embodiment may be formed;

FIG. 33 shows claw poles achieved in a 12th embodiment;

FIG. 34A shows a specific claw shape;

FIG. 34B shows the relationship between Gs/Bs and the induction voltage;

FIG. 34C shows the relationship between the Gs/Bs and the output current;

FIG. 35A shows stator claw poles;

FIG. 35B shows the relationship between the stator claw pole skew angle and the induction voltage;

FIG. 35C shows the relationship between the stator claw pole skew angle and the ripple voltage;

FIG. 36A presents an example of a positional arrangement that may be adopted in the 32 claw pole configuration in a 13th embodiment, with a vernier tooth pitch assumed in two separate groups of claw poles;

FIG. 36B presents an example of a positional arrangement of the claw poles assuming a vernier tooth pitch in four separate groups;

FIG. 37A shows a claw pole achieved in a 14th embodiment;

FIG. 37B shows how the annular coil may be disposed;

FIG. 37C shows the overall stator corresponding to the three phases;

FIG. 38A is a perspective of the coil bobbin achieved in a 15th embodiment;

FIG. 38B presents a front view and a side elevation of the coil bobbin;

FIG. 39 shows the structure of the coil bobbin in a sectional view;

FIG. 40A illustrates how the coil bobbin and the claw poles may be incorporated;

FIG. 40B is a perspective showing a phase stator in the assembled state;

FIG. 41A shows a blank used in a 16th embodiment, having a caulking portion formed therein;

FIG. 41B is a laminated assembly formed by layering blanks with an offset;

FIG. 41C shows a pair of laminated assemblies disposed along the circumferential direction, viewed along the axial direction;

FIG. 42A presents a first example of a claw pole achieved in a 17th embodiment;

FIG. 42B presents a second example of a claw pole achieved in the 17th embodiment;

FIG. 42C presents a third example of a claw pole achieved in the 17th embodiment;

FIG. 42D presents a fourth example of a claw pole achieved in the 17th embodiment;

FIG. 42E presents a fifth example of a claw pole achieved in the 17th embodiment;

FIG. 42F presents a sixth example of a claw pole achieved in the 17th embodiment;

FIG. 42G presents a seventh example of a claw pole achieved in the 17th embodiment;

FIG. 43A presents a first example that may be adopted to fix laminated core assemblies to each other in an 18th embodiment;

FIG. 43B presents a second example that may be adopted to fix laminated core assemblies to each other in the 18th embodiment;

FIG. 43C presents a third example that may be adopted to fix laminated core assemblies to each other in the 18th embodiment;

FIG. 44A presents a fourth example that may be adopted to fix laminated core assemblies to each other in the 18th embodiment;

FIG. 44B presents a fifth example that may be adopted to fix laminated core assemblies to each other in the 18th embodiment;

FIG. 44C presents a sixth example that may be adopted to fix laminated core assemblies to each other in the 18th embodiment;

FIG. 45A illustrates how a laminated assembly may be formed through caulking;

FIG. 45B is a sectional view of the laminated assembly held together through caulking;

FIG. 46A shows a fastening method achieved through taping;

FIG. 46B shows a fastening method achieved through the use of an adhesive;

FIG. 47A presents a first example of a coil shape that may be adopted in a 19th embodiment;

FIG. 47B presents a second example of a coil shape that may be adopted in the 19th embodiment;

FIG. 48A is a perspective of the rotor achieved in a 20th embodiment;

FIG. 48B presents a first example of grooves;

FIG. 48C presents a second example of grooves;

FIG. 49A illustrates the grooves formed at the rotor claw poles;

FIG. 49B shows the relationship of the groove pitch/groove width ratio to the eddy current loss and the induction voltage;

FIG. 49C shows the relationship of the groove depth/groove width ratio to the eddy current loss and the induction voltage;

FIG. 50A presents a first example of a rotor claw shape that may be adopted in a 21st embodiment;

FIG. 50B presents a second example of a rotor claw shape that may be adopted in the 21st embodiment;

FIG. 50C is a perspective of the rotor;

FIG. 50D is a sectional view of a rotor claw pole taken over a front surface thereof;

FIG. 51A shows a stator structure that may be adopted in a motor that includes powder cores;

FIG. 51B illustrates magnetic fluxes generated at the claw poles of the motor that includes powder cores;

FIG. 52 shows a stator core positional arrangement that may be adopted in the claw pole rotating electrical machine achieved in a 22nd embodiment;

FIG. 53A shows a blank to constitute part of a laminated assembly used to form a claw pole;

FIG. 53B shows a claw pole formed by layering a plurality of blanks one on top of another;

FIG. 54A shows the shape of a metal plate used to form a yoke portion assuming a ring shape;

FIG. 54B is a perspective of a yoke portion;

FIG. 54C shows the yoke portion in a partial enlargement;

FIG. 55A shows claw poles assuming a ten-pole arrangement and the corresponding holding plate;

FIG. 55B shows a half phase stator corresponding to a given phase;

FIG. 55C shows a half phase stator with a yoke portion and a coil disposed thereat;

FIG. 56A presents an external view of a phase stator corresponding to a given phase;

FIG. 56B shows the positional relationship between the projections and the grooves as observed at the phase stator;

FIG. 57 shows the structure assumed at the half phase stator with the yoke portion and the coil disposed thereat in a sectional view;

FIG. 58 presents an example of a positional arrangement that may be adopted for the phase stators each corresponding to a specific phase at a three-phase stator;

FIG. 59 shows the three-phase stator in the assembled state;

FIG. 60 is a perspective of the three-phase stator after its inner circumferential surface and the outer circumferential surface are machined;

FIG. 61 is a perspective showing the structure of a holding plate achieved in the 22nd embodiment;

FIG. 62 is a perspective showing the structure of a holding plate achieved in a 23rd embodiment;

FIG. 63 is a perspective of a phase stator corresponding to a given phase achieved in the 23rd embodiment;

FIG. 64 is a perspective of a stator constituted with three individual phase stators;

FIG. 65A is a perspective of the coil bobbin achieved in a 24th embodiment;

FIG. 65B presents a front view and a side elevation of the coil bobbin;

FIG. 66 shows the structure of the coil bobbin in a sectional view;

FIG. 67A shows the coil bobbin with claw poles disposed inside the grooves present at the rear surface thereof;

FIG. 67B shows the coil bobbin with a yoke portion set on the outer circumferential side of the annular coil;

FIG. 67C shows a given phase stator in the assembled state;

FIG. 68 shows a claw pole achieved in a 25th embodiment;

FIG. 69A shows claw poles, the coil and the yoke portion achieved in a 26th embodiment;

FIG. 69B presents a diagram of the induction voltage measured with/without slits formed at the claw poles;

FIG. 70 shows a yoke portion split into a plurality of portions;

FIG. 71 shows a structure that may be adopted at a holding plate used to hold the split yoke portions;

FIG. 72 shows the positional arrangement adopted for the claw poles in the claw pole rotating electrical machine achieved in a 28th embodiment;

FIG. 73 is an exploded perspective of the stator achieved in the 28th embodiment;

FIG. 74A shows a shape that may be assumed for the blanks used to form a laminated assembly in the 28th embodiment;

FIG. 74B shows the laminated assembly;

FIG. 75A shows a shape that may be assumed for the blanks used to form a laminated assembly in the 28th embodiment;

FIG. 75B shows the laminated assembly;

FIG. 76 is a sectional view of the slots where the annular coil is housed;

FIG. 77 is a perspective showing the basic structure adopted at the stator in a 29th embodiment;

FIG. 78A is a perspective showing the overall basic structure of the stator;

FIG. 78B shows the basic structure of the stator in FIG. 78A in a partial sectional view;

FIG. 78C also shows the basic structure of the stator in FIG. 78A in a partial sectional view taken along a different direction;

FIG. 78D shows the basic structure of the stator in FIG. 78A in a partial sectional view taken along a direction perpendicular to the rotational axis;

FIG. 79 is a perspective of a stator core that may be included in the basic structure of the stator in FIG. 77;

FIG. 80 is a perspective presenting another example of a stator core that may be included in the basic structure;

FIG. 81 is a perspective presenting yet another example of a stator core that may be included in the basic structure

FIG. 82 is a perspective of a stator coil that may be included in the basic structure of the stator in FIG. 77;

FIG. 83 is a perspective of a stator in a three-phase alternator adopting the basic structure in FIG. 77;

FIG. 84 is an exploded perspective of the stator in FIG. 83;

FIG. 85A illustrates the operation of an alternator as rotor claw poles at the rotor move closer to the stator teeth;

FIG. 85B illustrates an operation of the alternator as other rotor claw poles move closer to the stator teeth;

FIG. 86A illustrates how a stator core may be manufactured through cutting;

FIG. 86B illustrates how a stator core may be manufactured by winding a thin steel plate;

FIG. 86C is a perspective showing the ultimate shape that a stator core may assume;

FIG. 87A shows the structure of a die that may be used to form a stator block;

FIG. 87B is a perspective of the stator block;

FIG. 88A shows a pair of poles at the stator core shown in FIGS. 79 through 81;

FIG. 88B shows a pair of poles at a stator core with collars;

FIG. 88C shows a pair of poles assuming a structure in which magnetic poles set in a staggered pattern along the axial direction do not overlap along the axial direction;

FIG. 89A illustrates a manufacturing method that may be adopted to manufacture a stator core that includes a plurality of pole pairs, one of which is shown in FIG. 88B;

FIG. 89B illustrates a manufacturing method that may be adopted to manufacture a stator core that includes a plurality of pole pairs, one of which is shown in FIG. 88C;

FIG. 90 is a perspective of a phase stator achieved in another embodiment;

FIG. 91A is a sectional view of a stator coil constituted with a magnet wire having a round section;

FIG. 91B is a sectional view of a stator coil constituted with a magnet wire having a square section;

FIG. 91C is a sectional view of a stator coil constituted with a flat type magnet wire;

FIG. 91D is a sectional view of a stator coil constituted with a magnet wire having a hexagonal section;

FIG. 92A is an exploded perspective of a rotating electrical machine that includes the stator in FIG. 83;

FIG. 92B is a perspective of the assembled rotating electrical machine;

FIG. 93A is a sectional view of a squirrel-cage rotor;

FIG. 93B is a sectional view of a rotor that includes permanent magnets; and

FIG. 93C is a sectional view of a rotor with built-in magnetic flux barriers.

DESCRIPTION OF PREFERRED EMBODIMENTS

The following is an explanation of embodiments of the present invention, given in reference to the drawings.

-First Embodiment-

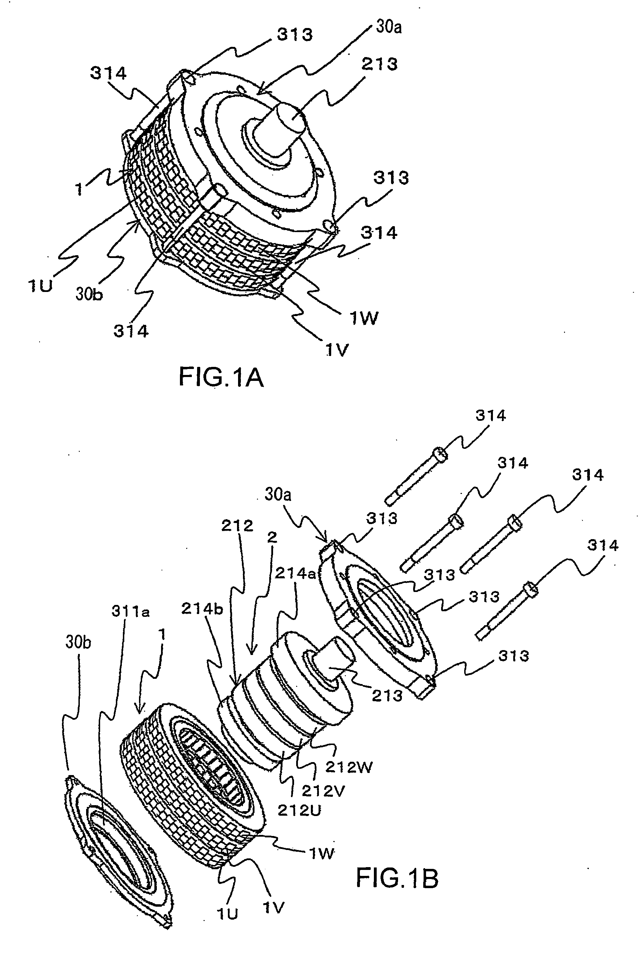

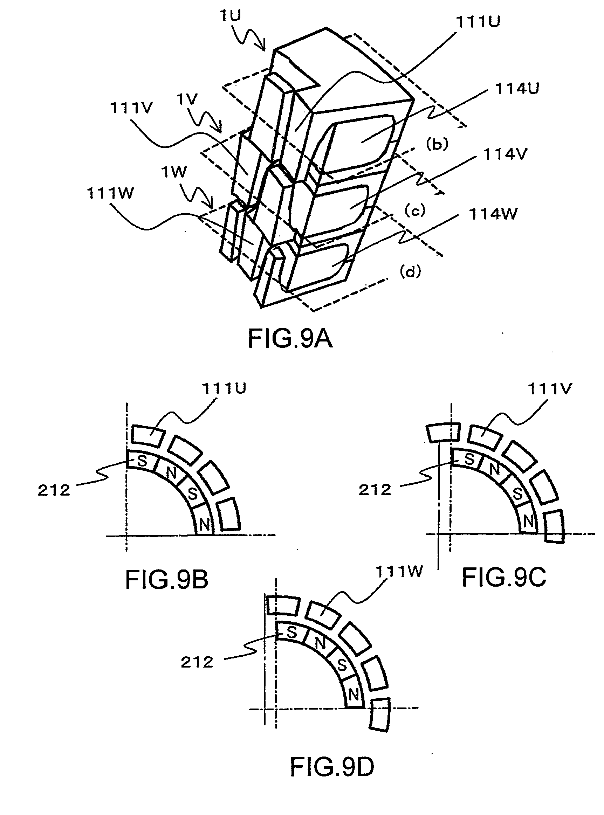

In reference to FIGS. 1A through 9D, a rotating electrical machine in the first embodiment according to the present invention is described. The rotating electrical machine in the embodiment is a motor that outputs a rotational force as an electric current is supplied thereto, utilized in industrial applications, home appliance applications, OA equipment applications, automotive applications and the like. The advantages of the present invention become particularly obvious when the present invention is adopted in a relatively large rotating electrical machine such as an automotive generator or an automotive motor.

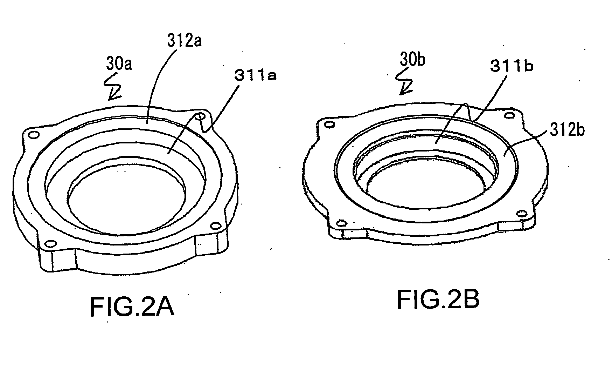

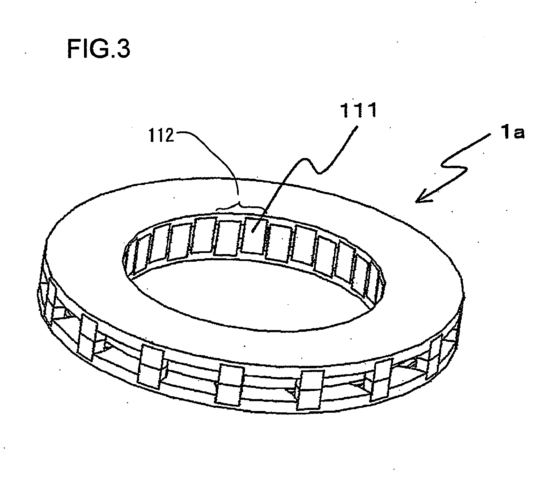

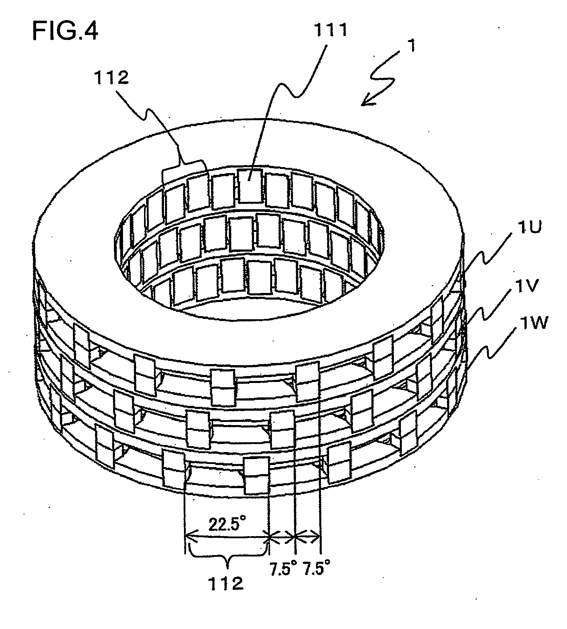

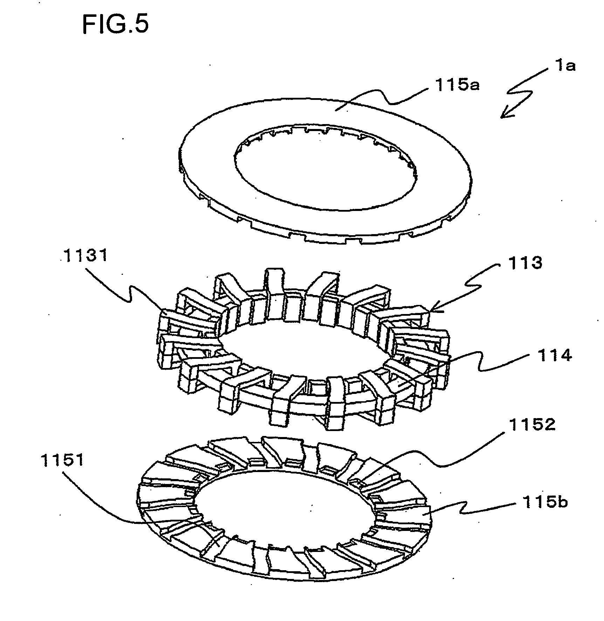

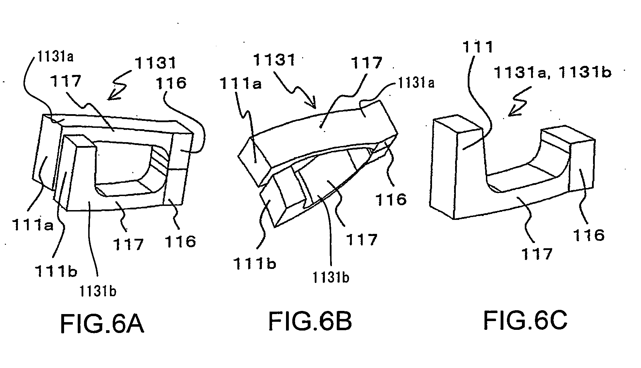

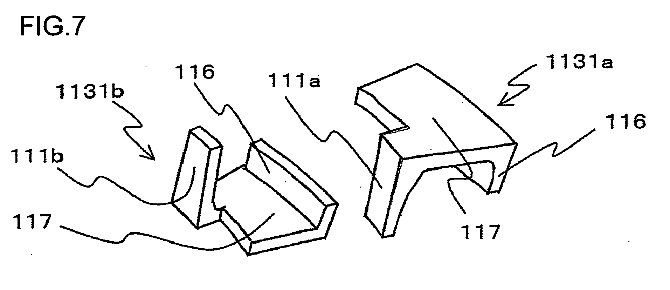

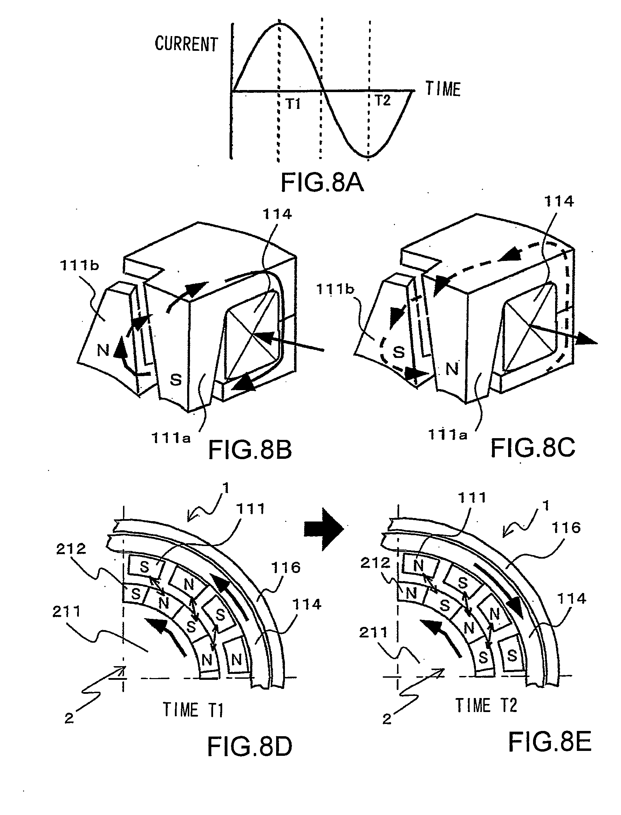

FIG. 1A is a perspective of the motor. FIG. 1B is an exploded perspective of the motor, showing individual end brackets, a rotor and a stator of the motor separately. FIG. 2A is a perspective of the end bracket located on an output shaft side and FIG. 2B is a perspective of the end bracket located on the opposite end along the axial direction relative to the end bracket in FIG. 2A. FIG. 3 is a perspective of a phase stator 1a corresponding to a given phase. FIG. 4 is a perspective of the three-phase stator. FIG. 5 is an exploded perspective of the phase stator shown in FIG. 3. FIGS. 6A and 6B are each a perspective showing a given block, whereas FIG. 6C is a perspective of a split block. FIG. 7 is a perspective presenting another example of a block. FIGS. 8A through 8E indicate the positional relationship between rotor magnetic poles and stator magnetic poles. FIGS. 9A through 9D indicate the positional relationship among the claw poles corresponding to the various phases.

As shown in FIG. 1A, the motor achieved in the embodiment includes a cylindrical stator 1 and a rotor 2 rotatably disposed on the inner circumferential side of the stator 1. The stator 1 and the rotor 2 are held together by a pair of end brackets 30a and 30b clamping them together along the axial direction.

The stator 1 includes phase stators 1U, 1V and 1W each corresponding to one of three different phases, stacked one on top of another along the rotational axis. The phase stators 1U, 1V and 1W are each constituted with a phase stator 1a assuming a cylindrical shape, as shown in FIG. 3. On the inside of the stator 1, the rotor 2 is rotatably disposed so as to rotate freely relative to the stator 1. The rotor 2 includes a rotor core 211 constituted with layered steel sheets and a ring-shaped permanent magnet 212 disposed over the outer circumference of the rotor core 211. An output shaft 213 fixed to the center of the rotor core 211 rotates as one with the rotor core 211. A plurality of magnetic poles are formed along the circumferential direction at the ring-shaped permanent magnet 212. The magnetic poles are excited so as to assume alternate polarities within a predetermined angle range. In addition, as shown in FIG. 1B, the permanent magnet 212 is divided along the axial direction into three permanent magnets 212U, 212V and 212W. The permanent magnets 212U, 212V and 212W are each disposed at a position facing opposite the corresponding phase stator at the stator 1. As a result, one of the split permanent magnets and a phase stator 1a are paired up together so as to form a magnetic circuit independent of the other phases. It is to be noted that the magnetic poles at the individual split permanent magnets 212U, 212V and 212W are magnetized with no phase offset so as to be aligned with one another along the circumferential direction. By forming the magnetic circuits corresponding to the individual phases as circuits independent of one another as described above, the extent of magnetic flux inconsistency among the different phases can be reduced.

In addition, a pair of ball bearings 214a and 214b to be used as bearings, are disposed on the two sides along the axial direction with the three ring-shaped permanent magnets 212U, 212V and 212W set side-by-side along the axial direction present between them. One of the ball bearings 214a and 214b, i. e. , the ball bearing 214a located on the side where the output shaft 213 projects out has a greater diameter than the other ball bearing 214b present on the side where the output shaft 213 does not project out. The ball bearing 214a also assumes a greater wall thickness. Thus, while the output shaft side tends to be readily subjected to a significant load, the ball bearing 214a disposed on the output shaft side can withstand the great load.

The stator 1 and the rotor 2 structured as described above are held together by the pair of end brackets 30a and 30b from the two sides along the axial direction. FIG. 2A shows a first end bracket 30a located on the output shaft side and FIG. 2B shows the other end bracket, i.e., a second end bracket 30b. As FIGS. 2A and 2B indicate, the first end bracket 30a has a greater wall thickness than the second end bracket 30b. In addition, circular bearing fitting grooves 311a and 311b are respectively formed on the inner circumferential sides of the end brackets 30a and 30b so that the ball bearings 214a and 214b can be fitted therein. On the outer circumferential sides of the bearing fitting grooves 311a and 311b, stator holding grooves 312a and 312b, which are circular grooves with a smaller depth than the bearing fitting grooves 311a and 311b, are formed. Further toward the outer circumferential side, insertion holes 313, through which bolts 314 are to be inserted, are formed at four positions at each end bracket. The bearing fitting grooves 311a and 311b are formed at the bottoms of the stator holding grooves 312a and 312b.

The three phase stators 1U, 1V and 1W stacked one on top of another are held together as the outer circumferences on the two ends along the axial direction are fitted inside the stator holding grooves 312a and 312b at the end brackets 30a and 30b respectively. The stator 1 and the rotor 2 can thus be positioned relative to the two end brackets 30a and 30b and the axial center of the stator 1 and the axial center of the rotor 2 can be aligned. It is to be noted that the depth of the bearing fitting groove 311a at the first end bracket 30a, at which the thicker ball bearing 214a is mounted, is greater than the depth of the second end bracket 30b. In addition, a female threaded portion corresponding to the male threaded portion at the bolts 314 is formed on the inner circumferences of the insertion holes 313 at the second end bracket 30b.

Next, the procedure through which the individual components are assembled is described. First, the rotor 2 is set on the inner circumferential side of the stator 1. The stator 1 and the rotor 2 are then held together between the end brackets 30a and 30b. At this time, the ball bearings 214a and 214b at the rotor 2 are fitted inside the bearing fitting grooves 311a and 311b at the end brackets 30a and 30b and also, the two ends of the stator 1 are fitted inside the stator holding grooves 312a and 312b at the two end brackets 30a and 30b. In this state, the four bolts 314 are inserted through the four insertion holes 313 at the first end bracket 30a and then the male threadedportion at the bolts 314 is caused to interlock with the female threaded portion at the second end bracket 30b, so as to fasten the end brackets together. FIG. 1B shows the individual components in an assembled state. As FIG. 1A clearly indicates, the motor achieved in the embodiment assumes a compact structure with no coil end present along the axial direction.

Next, the stator 1 is described in detail in reference to FIGS. 3 through 7.

The stator 1 shown in FIG. 4 of the three-phase motor in the embodiment is formed by stacking three phase stators 1a such as that shown in FIG. 3, one on top of another, along the axial direction. The individual phase stators 1U, 1V and 1W are layered one on top of another with an offset of 120° electrical angle along the circumferential direction.

It is to be noted that each phase stator 1a in the embodiment includes a total of 32 claw poles 111. Each pair of claw poles 111 disposed next to each other constitute a single magnetic pole pair 112. In other words, 16 magnetic pole pairs 112 are formed with the 32 claw poles 111. The claw poles in each magnetic pole pair 112 forms an angle of 22.5° (= 360°/16). This angle of 22.5° is equivalent to an electrical angle of 360°, and the 120° electrical angle is equivalent to an actual angle (mechanical angle) of 7.5°. Thus, the individual phase stators are stacked one on top of another with an offset of 7.5° along the circumferential direction, as shown in FIG. 4.

Now, in reference to FIGS. 5 through 6A through 6C, a phase stator 1a corresponding to a given phase is described in detail. As shown in FIG. 5, the phase stator 1a achieved in the embodiment, comprises a stator core 113, a stator coil 114 and a pair of holding plates 115a and 115b holding them together along the axial direction.

As shown in FIG. 5, the stator core 113 is divided into a plurality of blocks 1131. These blocks 1131 are not linked to one another electrically or magnetically, and are set in a substantially radial pattern along the circumferential direction with substantially equal intervals between them. The blocks 1131 are each constituted with two split blocks 1131a and 1131b separated from each other along the axial direction as shown in FIGS. 6A and 6B. As shown in FIG. 6C, the split blocks 1131a and 1131b each include a claw pole 111 ranging along the axial direction by sustaining a uniform width, a core back portion 116 ranging along a direction substantially matching the direction in which the claw poles 111 but ranges over a shorter range compared to the claw pole 111 and a linking portion 117 linking the claw pole 111 with the core back portion 116. The split block thus assumes a substantially U-shape when viewed from the side thereof. It is to be noted that the width of the claw pole 111 along the radial direction is set so that the claw pole assumes a tapered shape with a narrower tip (front end). In addition, the linking portion 117 curves along the circumferential direction so as to offset the claw pole 111 and the core back portion 116 along the circumferential direction (see FIG. 6B).

As the front ends of the core back portions 116 of the identical split blocks 1131a and 1131b structured as described above and paired up with each other are set in contact with each other, a block 1131 is formed as shown in FIGS. 6A and 6B. While the claw poles 111 range longer than the core back portions 116, the linking portions 117 curve along the circumferential direction. Thus, first and second claw poles 111a and 111b ranging from the two split blocks 1131a and 1131b are staggered along the circumferential direction. With the first and second claw poles 111a and 111b, the magnetic pole pair 112 described earlier is formed. It is to be noted that the blocks 1131 in the embodiment are each formed by using a powder core constituted with magnetic powder (e.g., iron powder) coated with an insulating material and compressed under high pressure. The use of such a powder core assures a greater current resistance value so as to minimize the occurrence of eddy currents.

In addition, the stator coil 114 wound in an annular shape as shown in FIG. 5, is mounted via an insulating member constituted with insulating paper in the space enclosed by the claw poles 111, the core back portions 116 and the linking portions 117 at the blocks 1131. Each terminal line of the stator coil 114 is drawn out to the outer circumferential side through the clearance between blocks 1131 and is connected to an inverter circuit (not shown). The stator coil 114 in the embodiment is constituted with a flat wire with a substantially rectangular section. Since such a flat wire is wound in alignment, the space factor indicating the level of efficiency with which the installation space in the block 1131 is utilized to install the stator coil 114 is improved. It is to be noted that the surface of the stator coil 114 is coated with an insulating material.

In addition, the blocks 1131 are held by a pair of holding plates 115a and 115b, such as those shown in FIG. 5, from the axial direction. The holding plates 115a and 115b, assuming a substantially round shape and more specifically, the shape of a disk, are constituted of a resin material that is nonmagnetic and not electrically conductive. Such holding plates 115a and 115b magnetically isolate the individual phase stators 1U, 1V and 1W from one another so as to minimize magnetic interference among the different phases.

In addition, at the surfaces of the holding plates 115a and 115b each located on one side along the axial direction, linking portion fitting grooves 1151 at which the linking portions 117 of the split blocks 1131a and 1131b are to fit are formed substantially radially with substantially equal intervals along the circumferential direction. These linking portion fitting grooves 1151 extend from the outer edges toward the inner circumferential edges of the holding plates 115a and 115b. In addition, claw pole fitting grooves 1152 in which the front ends of the claw poles 111 are to fit are formed on the inner circumferential side between the linking portion fitting grooves 1151. The claw pole fitting grooves 1152 are made to open at the inner circumferential edges. The holding plates 115a and 115b thus constitute a positioning member, whereas the linking portion fitting grooves 1151 and the claw pole fitting grooves 1152 together constitute a holding member.

It is to be noted that the block 1131 may adopt the structure shown in FIG. 7 instead. The core back portions 116 of the split blocks 1131a and 1131b in FIG. 7 are each formed as a band forming a circular arc along the circumferential direction, whereas the linking portions 117 of the split blocks 1131a and 1131b in FIG. 7 are formed in a fan shape. In addition, the claw poles 111 are each located at a position further toward one side along the circumferential direction at the inner circumference of the linking portion 117. Thus, as the split blocks 1131a and 1131b are assembled together, their claw poles 111a and 111b are offset along the circumferential direction relative to each other to assume alternate positions.

The following is an explanation of a method that may be adopted when manufacturing the stator 1 structured as described above.

First, a plurality of split blocks 1131a and 1131b to be used to form a compressed powder core are formed by compressing iron powder coated with an insulating material. The pressure required to form the compressed powder core with the density of, for instance, 7.4 $Mg/m^3$ should be at least 1GPa. This means that a device capable of applying a load of a thousand tons is required to manufacture a molding with an area of approximately 100 $cm^2$ and for this reason, a large molding cannot be manufactured with ease. In the embodiment, a molding must be formed for each of the split blocks 1131a and 1131b and thus, the moldings can be formed by using a relatively inexpensive device.

The plurality of split blocks 1131b formed as described above are fitted inside the linking portion fitting grooves 1151 at one of the holding plates, i.e., the holding plate 115b. Insulating paper is placed on the linking portions 117 at the split blocks 1131b and then circularly wound stator coil 114 is set over the insulating paper. It is desirable to use of a stator coil 114 provided as an integrated unit to ensure that the stator coil does not fall apart and can thus be handled with ease. For instance, the stator coil may be fixed with varnish, may be laced or may be sealed with resin. It is to be noted that the stator coil 114 may be integrated by using insulating paper or a bobbin constituted of an insulating material. In such a case, it is not necessary to place insulating paper over the linking portions 117 of the split blocks 1131b.

Next, insulating paper is set over the stator coil 114 and the other split blocks 1131a are placed over the insulating paper. At this time, the split blocks 1131a should be set by ensuring that the front ends of the core back portions 116 of the split blocks 1131a are placed in contact with the front ends of the core back portions 116 at the split blocks 1131b already fitted in the linking portion fitting grooves and that the front ends of the claw poles 111a at the split blocks 1131a are fitted inside the claw pole fitting grooves 1152. It is to be noted that the core back portions 116 of the split blocks 1131a and 1131b may be fixed together through welding, via an adhesive or the like, as necessary.

In this state, the other holding plate 115a is placed on top of the split blocks 1131a. At this time, the linking portions 117 of the split blocks 1131a are fitted inside the linking portion fitting grooves 1151 formed at the holding plate 115a. In addition, the front ends of the claw poles 111b at the split blocks 1131b already fitted in the linking portion fitting grooves 1151 at the holding plate 115b are fitted inside the claw pole fitting grooves 1152.

The three-phase stator 1 is formed by stacking three phase stators 1a structured as described above with an offset along the circumferential direction by an electrical angle of 120° or by an actual angle of 7.5°, as explained earlier.

Next, the principle of the motor drive, based upon which the motor in the embodiment is driven, is described in reference to FIGS. 8A through 8E and FIGS. 9A through 9D.

An AC current such as that shown in FIG. 8A is supplied from an inverter circuit (not shown) to each of the stator coils 114 in the three-phase stator. At this time, magnetic fluxes flow along the direction indicated by the solid arrows or along the direction indicated by the dotted-line arrows so as to circle around the stator coil 114, in correspondence to the direction along which the electric current flows, as shown in FIGS. 8B and 8C. For instance, if the electric current is supplied along the direction indicated in FIG. 8B, the claw pole 111a on the right-hand side in the figure becomes magnetized to assume an S polarity, whereas the claw pole 111b on the left-hand side in the figure assumes an N polarity. If, on the other hand, the electric current is supplied along the direction indicated in FIG. 8C, the claw pole 111a on the right-hand side in the figure assumes an N polarity and the claw pole 111b on the left-hand side in the figure assumes an S polarity. Since the electric current supplied to the stator coil 114 is an AC current such as that shown in FIG. 8A, the claw poles 111 assume the magnetic polarities shown in FIG. 8D at the time point T1 and assume the magnetic polarities shown in FIG. 8E at the time point T2. Namely, each claw pole 111 alternately assumes N polarity and S polarity. During this process, the permanent magnet 212 installed at the rotor 2 is attracted to the claw poles 111 at the stator 1 as they become magnetized, thereby causing the rotor 2 to rotate, as shown in FIGS. 8D and 8E. It is to be noted that the cycle over which the polarities of the stator magnetic poles 111 at the stator 1 switch can be adjusted in correspondence to the frequency of the AC current. Accordingly, the rotor 2 can be caused to rotate continuously by detecting the rotating state of the rotor 2 with a rotation sensor such as a resolver and adjusting the frequency of the AC current supplied to the stator coil 114 in correspondence to the rotating state of the rotor 2 thus detected.

It is to be noted that since the stator 1 in the embodiment is a three-phase stator, AC currents assuming different phases are supplied to the three stator coils 114. Since the claw poles 111 at the individual phases are offset relative to one another by an electrical angle of 120°, i.e., by an actual angle of 7.5°, along the circumferential direction, the rotor 2 can be caused to rotate along a specific direction, no matter where the rotor 2 stopped its previous rotation. This point will be described in further detail in reference to FIGS. 9A through 9D. FIG. 9A is a perspective of the stator taken over a specific angle range. FIG. 9B shows the U-phase stator in FIG. 9A in a sectional view taken through the plane indicated by the dotted line (b). FIG. 9C shows the V-phase stator in FIG. 9A in a sectional view taken through the plane indicated by the dotted line (c). FIG. 9D shows the W-phase stator in FIG. 9A in a sectional view taken through the plane indicated by the dotted line (d). In this state, AC currents assuming different phases are individually supplied to the stator coils 114U, 114V and 114W corresponding to the various phases.

For instance, electric currents are supplied to the stator coils 114U and 114V in the U phase and the V-phase along the + direction and an electric current flows through the stator coil 114W in the W phase along the - direction, so that the claw poles 111U and 111V corresponding to the U-phase and the V-phase assume N polarity and the claw poles 111W in the W phase alone assume S polarity at a given time point. After a predetermined length of time elapses in this condition, an electric current flows to the V-phase stator coil 114V along the + direction and electric currents flow to the W-phase and the U-phase stator coils 114W and 114U along the - direction so that the claw poles 111V in the V phase assume N polarity and the claw poles 111W and 111U in the W phase and the U-phase assume S polarity. Once a predetermined length of time elapses in this state, electric currents flow to the V-phase and the W-phase stator coils 114V and 114W along the + direction and an electric current flows to the U-phase stator coil 114U along the - direction, so that the claw poles 111V and 111W in the V phase and the W-phase assume N polarity and the claw poles 111U in the U phase alone assume S polarity. The polarities of the claw poles 111U, 111V and 111W in the individual phases are thus switched in sequence. Since the claw poles 111U, 111V and 111W corresponding to the various phases are disposed with an offset relative to one another along the circumferential direction, a rotating magnetic field circling along the inner circumference of the stator 1 in the - direction is generated. The rotor is caused to rotate as the permanent magnet 212 disposed at the rotor 2 is drawn by the rotating magnetic field.

The operational effects of the first embodiment explained above are now described.

The rotating electrical machine in the embodiment includes a claw pole-type stator constituted with a stator core having a plurality of claw poles formed thereat and a stator coil wound around inside the stator core and a rotor rotatably disposed at a position facing opposite the claw poles. The stator core assumes a split structure constituted with blocks each forming at least a single magnetic pole pair made up with two claw poles that assume different polarities as an electric current is supplied to the stator coil. In other words, since the stator core can be formed by manufacturing the individual blocks, a large scale manufacturing apparatus is not required. In particular, if the individual blocks are formed with compressed powder cores, the pressure required for the pressing process can be lowered significantly, making it possible to manufacture high-density compressed powder cores with an inexpensive apparatus. It is to be noted that no problem arises if the flow of the magnetic flux between the claw poles forming each magnetic pole pair is blocked along the circumferential direction and is thus not allowed to advance into another magnetic pole pair, as long as the magnetic flux is allowed to travel between the two claw poles with different polarities constituting a magnetic pole pair at the claw pole-type stator.

In addition, since the blocks constituting the stator core in the rotating electrical machine achieved in the embodiment each correspond to a single magnetic pole pair, the size of the blocks is reduced to the absolute minimum.

The blocks constituting the stator core of the rotating electrical machine achieved in the embodiment are each split into two members separated from each other along the axial direction at a position where the stator coil is wound. The blocks are each formed by integrating these members, facilitating the installation of the stator coil in the individual blocks.

The blocks in the rotating electrical machine achieved in the embodiment are positioned along the circumferential direction via a positioning member and thus, desired magnetic pole balance can be sustained without the individual blocks becoming misaligned along the circumferential direction.

The blocks in the rotating electrical machine achieved in the embodiment are held between the holding plates disposed on the two sides of the blocks along the axial direction and thus, the individual blocks can be held fast through a simple structure without requiring a large number of components. There is an added advantage in that the holding plates protect the stator.

Holding portions constituted with grooves or projections, via which the blocks are held, are formed at the holding plates in the rotating electrical machine achieved in the embodiment, assuring highly accurate positioning through a simple structure. In particular, the holding plates in the embodiment include the claw pole fitting grooves in addition to the linking portion fitting grooves and the claw poles are fitted inside the claw pole fitting grooves so as to reinforce the claw poles.

Furthermore, the pair of holding plates in the rotating electrical machine achieved in the embodiment are constituted of a nonmagnetic material and thus, they do not affect the magnetic fluxes flowing through the stator core.

With the pair of holding plates in the rotating electrical machine achieved in the embodiment, which are constituted of a non-conductive material, the occurrence of eddy currents at the holding plates is prevented.

At the rotating electrical machine in the embodiment comprising a stator, which includes a stator core having a plurality of claw poles and a stator coil wound around within the stator core and a rotor rotatably disposed at a position facing opposite the claw poles, with the stator core assuming a structure that includes a plurality of magnetic pole pairs each made up with at least a pair of clawpoles assuming different magnetic polarities, disposed over intervals along the circumferential direction, the entire stator coil is not covered by the stator core.

The following is an explanation on how the inductance at the stator coil may increase. If the entire stator coil is covered by a magnetic material such as that constituting the stator core, the inductance at the stator coil is bound to be significant. A high level of inductance leads to a great phase difference between the electric current and the voltage, to result in a reduction in the motor power factor. In addition, such a high level of inductance also increases an electrical time constant, which gives rise to a problem related to the characteristics, e.g., the controllability is compromised.

In contrast, the stator coil is not covered by the stator core over the gaps formed at the stator core, making it possible to reduce the inductance. As a result, the motor power factor is improved and the electrical time constant, too, is reduced.

Moreover, since the individual blocks constituting the stator core are set with intervals between them, magnetic fluxes are allowed to flow within the individual blocks independent of one another, as shown in FIGS. 8B and 8C. By eliminating leakage of magnetic fluxes into adjacent magnetic pole pairs in this manner, the overall occurrence of magnetic flux leakage is reduced. Consequently, the magnetic efficiency is improved. In addition, since the structure allows a greater area of the stator coil to come in contact with the outside air, the stator coil can be cooled with better efficiency.

Since each terminal line of the stator coil is lead out to the outside through the clearance between the magnetic pole pairs, no special wiring hole or the like must be formed at the stator core and the terminal line of the stator coil does not need to be threaded between the claw poles to be led out to the outside of the rotating electrical machine achieved in the embodiment. In short, the terminal line can be led out to the outside with great ease.

-Second Embodiment-

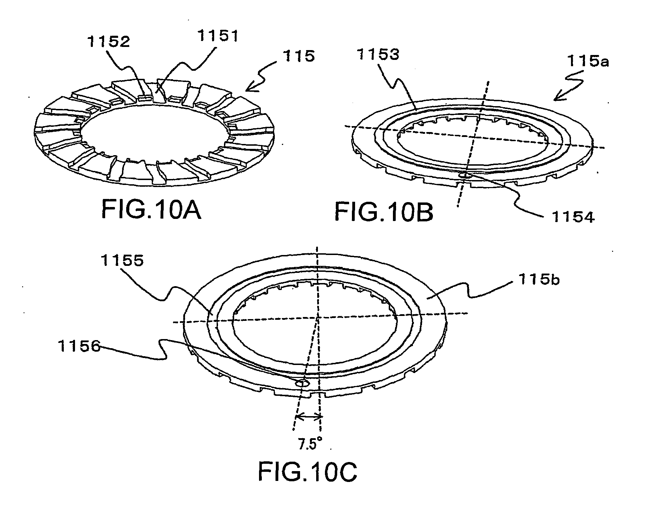

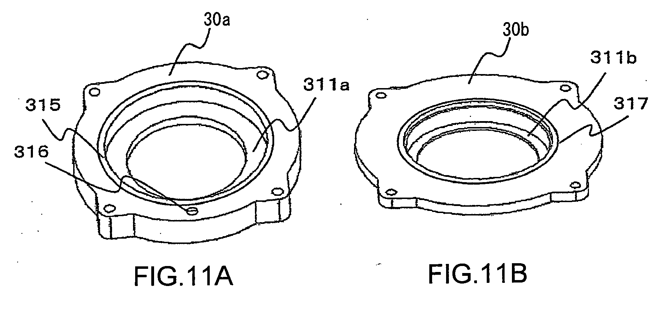

The second embodiment of the present invention is now described. FIG. 10A is a perspective showing a block holding surface of a holding plate 115, FIG. 10B is a perspective showing the rear surface of one of the holding plates, i.e., the holding plate 115a and FIG. 10C is a perspective showing the rear surface of the other holding plate 115b. FIG. 11A is a perspective of the end bracket 30a located on the output shaft side, whereas FIG. 11B is a perspective of the end bracket 30b located on the opposite end along the axial direction relative to the end bracket 30a in FIG. 11A. It is to be noted that while the second embodiment differs from the first embodiment in the structures assumed for the holding plates 115 and the end brackets 30a and 30b, other structural features are substantially identical to those in the first embodiment. Accordingly, the same terms and reference numerals are assigned to identical components so as to preclude the necessity for a repeated explanation thereof.

As shown in FIG. 10A, the holding surface at which the blocks 113 are held by each of the holding plates 115 in the second embodiment is substantially identical to the holding surface described in reference to the first embodiment, with the linking portion fitting grooves 1151 and the claw pole fitting grooves 1152 disposed with a positional arrangement similar to that adopted in the first embodiment. A pair of such holding plates 115 is provided in correspondence to each phase to hold the blocks 1131 in that particular phase from the two sides along the axial direction. One of the holding plates 115a and 115b in the pair, i.e., the holding plate 115a, includes a circular projection 1153 formed in a ring shape along the circumference of the holding plate 115a at its outer surface along the axial direction, as shown in FIG. 10B. It further includes a positioning projection 1154 assuming a circular column shape at a specific position on the outer circumferential side of the circular projection 1153. This projection 1154 forms a projecting portion.

At the other holding plate 115b, a circular groove 1155, which is to fit with the circular projection 1153, is formed as shown in FIG. 10C. In addition, a round positioning hole 1156 with a solid bottom, at which the positioning projection 1154 can be fitted, is formed at a specific position on the outer circumferential side of the circular groove 1155. The circular groove 1155 and the positioning hole 1156 each constitute a recessedportion. It is to be noted that the centers of the circular projection 1153 and the circular groove 1155 are aligned with the centers of the two holding plates 115. In addition, while the positioning projection 1154 in FIG. 10B is formed at a position substantially at the center of a linking portion fitting grooves 1151, the positioning hole 1156 in FIG. 10C is formed at a position offset by 7.5° along the circumferential direction relative to the center of a linking portion fitting grooves 1151.

Each phase stator 1a is held fast along the axial direction between a pair of holding plates 115 structured as described above. When stacking the individual phase stators 1U, 1V and 1W one on top of another, the axial centers of the phase stators 1U, 1V and 1W can be aligned by fitting the circular projections 1153 with the circular grooves 1155. In addition, as the positioning projections 1154 are fitted in the positioning holes 1156, the individual phase stators 1U, 1V and 1W can be offset relative to one another by 7.5° along the circumferential direction. In the embodiment described above, the need to position, stack and lock the individual phase stators 1U, 1V and 1W is eliminated and instead, the phase stators can be automatically positioned both along the circumferential direction and along the radial direction simply by fitting the circular projections 1153 in the circular grooves 1155 and fitting the positioning projections 1154 in the positioning holes 1156. This, in turn, improves the manufacturing efficiency. Furthermore, any subsequent misalignment of the individual stators 1U, 1V and 1W relative to one another, following the assembly process, is prevented.

Moreover, the first end bracket 30a located on the output side in the second embodiment includes a circular stator holding groove 315 in a circular shape and a shallower depth than the bearing fitting groove 311a, is formed on the outer circumference of the bearing fitting groove 311a, with a round stator positioning hole 316 formed at a specific position on the outer circumferential side of the circular stator holding groove 315. It is to be noted that the bearing fitting groove 311a is formed at the bottom of the circular stator holding groove 315. At the other end bracket, i.e., the second end bracket 30b, a circular stator holding projection 317 in a circular shape projects out at the outer circumference of a bearing fitting groove 311b. This circular stator holding projection 317 is formed over a specific distance from the outer circumferential edge of the bearing fitting groove 311b.

As the circular projection 1153 formed at one end along the axis of the stacked phase stators 1U, 1V and 1W corresponding to the three different phases is fitted in the circular stator holding groove 315 at the first end bracket 30a and the positioning projection 1154 on the same side is fitted in the stator positioning hole 316, the phase stators can be positioned along the radial direction. In addition, as the circular stator holding projection 317 formed at the second end bracket 30b is fitted in the circular groove 1155 present at the other end along the axis of the stacked phase stators 1U, 1V and 1W corresponding to the three different phases, they can be positioned along the radial direction. By positioning the stator 1 and the rotor 2 relative to the two ends brackets 30a and 30b as described above, the axial center of the stator 1 and the axial center of the rotor 2 can be aligned with each other.

-Third Embodiment-

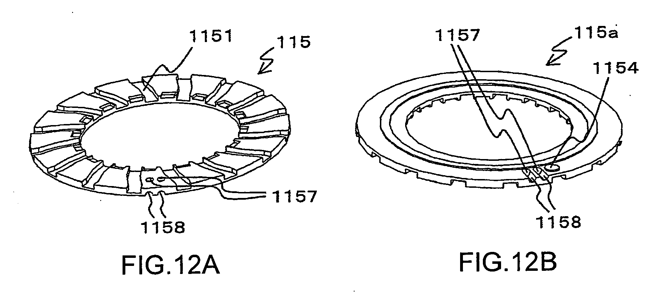

Next, the third embodiment of the present invention is described in reference to FIGS. 12A and 12B. FIG. 12A is a perspective showing the block holding surface over which the blocks are held at a holding plate 115, whereas FIG. 12B is a perspective showing the surface of one of the holding plates, i.e., the holding plate 115a, on the side opposite from its holding surface. It is to be noted that while the holding plates 115 in the third embodiment differ from those in the second embodiment, other structural features of the third embodiment are substantially identical to those of the second embodiment. Accordingly, the same terms and reference numerals are assigned to identical components so as to preclude the necessity for a repeated explanation thereof.

While the holding plates 115 achieved in the third embodiment are very similar to the holding plates 115 in the second embodiment, they each further include passing holes 1157 through which the terminal lines of the stator coil 114 pass and guide grooves 1158, along which the terminal lines are led from the passing holes 1157 toward the outer circumferential side. As shown in FIG. 12A, a pair of passing holes 1157 are formed side-by-side along the circumferential direction between two adj acent linking portion fitting grooves 1151, and the two passing holes are through holes. The two terminal lines of the stator coil 114 pass through the passing holes 1157 and are then led out to the outer side surface of the holding plate 115 along the axial direction. As the two terminal lines of the stator coil 114 are led out to the outer side of the holding plate 115 along the axial direction as described above, the terminal lines can be laid out without contacting any blocks 1131. Consequently, the terminal lines of the stator coil 114 can be insulated reliably.

In addition, a pair of guide grooves 1158 ranges from the passing holes 1157 toward the outer circumferential edge at the surface of the holding plate 115 located on the outer side along the axial direction. The positioning projection 1154 is formed next to the guide grooves 1158. This means that even if the holding plates 115 corresponding to the individual phase stators 1U, 1V and 1W come into close contact with one another along the axial direction, the two terminal lines of each stator coil 114 can be drawn toward the outer circumferential side through the guide grooves 1158. It is to be noted that although not shown, the other holding plate 115b in the embodiment may or may not include the passing holes 1157 and the guide grooves 1158. If the passing holes 1157 and the guide grooves 1158 are formed at both holding plates 115, the side on which the terminal lines are to be led out can be determined in correspondence to specific requirements.

-Fourth Embodiment-

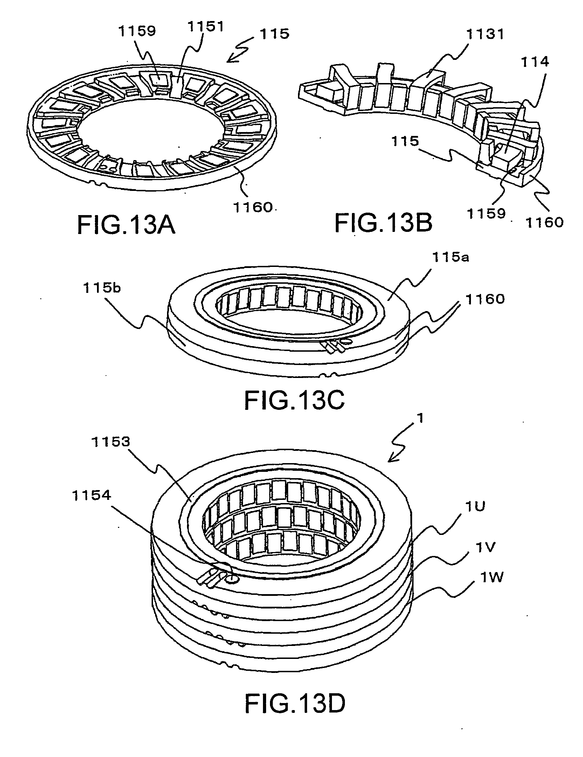

Next, the fourth embodiment of the present invention is described in reference to FIGS. 13A through 13D. FIG. 13A is a perspective showing the block holding surface of a holding plate 115. FIG. 13B is a perspective showing part of a stator with one of the holding plates 115 disengaged. FIG. 13C is a perspective of a phase stator corresponding to a given phase. FIG. 13D is a perspective of the three-phase stator 1 corresponding to the three phases. It is to be noted that while the fourth embodiment differs from the third embodiment in part of the structure of the holding plates 115, the other structural features are substantially identical to those in the third embodiment and accordingly, an explanation of identical features is omitted. It is also to be noted that structural features assigned with the same terms and reference numerals are identical to those in the third embodiment and achieve the same operational effects.

As shown in FIG. 13A, substantially quadrangular seat surfaces 1159 are formed between the linking portion fitting grooves 1151 set next to each other in the fourth embodiment. The seat surfaces 1159 are formed over all the areas between the linking portion fitting grooves 1151. The seat surfaces 1159 assume a height that allows the seat surfaces 1159 to project out further toward the stator coil 114 relative to the lower linking portions 117 at the blocks 1131 when the blocks 1131 are set onto the holding plate 115, as shown in FIG. 13B. The stator coil 114 is partially held at the plurality of seat surfaces 1159 formed as described above, and is not allowed to contact the blocks 1131. Consequently, reliable installation of the stator coil 114 is assured, which makes it possible to do away with an insulating member such as insulating paper, a bobbin or the like.

In addition, a tubular protective portion 1160 is formed as an integrated part of the holding plate 115 around the outer circumference thereof in the embodiment. As the blocks 1131 are held between the pair of holding plates 115a and 115b, the protective portions 1160 at the two holding plates come into contact with each other to cover the blocks 1131 on their outer circumference side, as shown in FIG. 13C. Since the pair of holding plates 115a and 115b function as part of a housing encasing the stator 1 and the blocks 1131 are not exposed to the outside, the blocks 1131 are well protected against any impact or shock applied from the outside.

It is to be noted that the blocks 1131 in the embodiment are each formed by using a compressed powder core with a low level of strength. A compressed powder core is a molding formed by simply compressing and molding iron powder, which achieves a bending strength of only approximately 150 MPa. In other words, its strength is very low, requiring reinforcement measures such as molding. In the embodiment, the blocks 1131 each constituted with a compressed powder core are protected and reinforced as they are held between the holding plates 115 along the axial direction. The holding plates 115 provide additional advantages such as waterproofing and rust-proofing. The area where the two holding plates 115 constituting the pair come in contact with each other may be bonded by using an adhesive or the like if necessary.

The protective portions 1160 at the holding plates 115 are formed so as to come into contact with the outer circumferences of the individual blocks 1131. Thus, by constituting the holding plates 115 with a material having a high coefficient of thermal conductivity, the heat generated at the stator coil 114 can be released to the holding plates 115 via the various blocks 1131. Such a material with a high coefficient of thermal conductivity may be alumina, a thermoplastic resin containing silica or a thermosetting resin. The material may be, for instance, unsaturated polyester resin. It is to be noted that the cooling effect may be further enhanced by forming a plurality of fins on the outer circumferences of the protective portions 1160 at the holding plates 115.

The three-phase stator constituted with the phase stators 1U, 1V and 1W shown in FIG. 13D is formed by stacking the individual phase stators 1U, 1V and 1W, structured as shown in FIG. 13C one on top of another. During this process, the circular projections 1153 are fitted inside the circular grooves 1155 and the positioning projections 1154 are fitted inside the positioning holes 1156, as in the second embodiment, so as to position the phase stators along the circumferential direction and the radial direction.

-Fifth Embodiment-

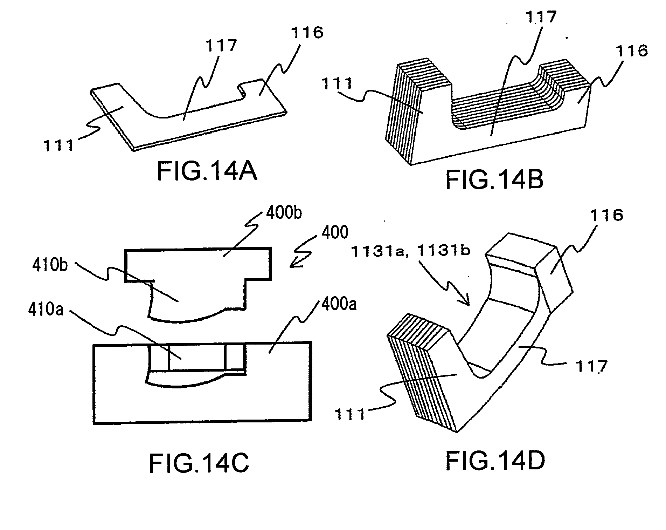

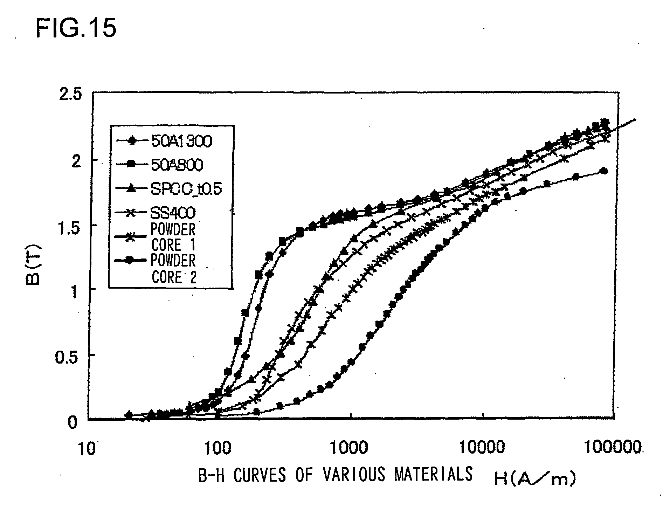

Next, the fifth embodiment of the present invention is described. FIG. 14A is a perspective of a single steel sheet used to constitute a split block, whereas FIG. 14B is a perspective of a laminated assembly constituted with a plurality of steel sheets. FIG. 14C is a sectional view of a forming die used when forming the split block, taken over a side surface thereof. FIG. 14D is a perspective of the split block. FIG. 15 presents a graph provided to facilitate comparison of varying relationships between the magnetic flux density (B) and the magnetic field (H) observed in correspondence to various types of materials. It is to be noted that while the fifth embodiment differs from the first embodiment in that its split blocks are constituted with layered steel sheets, other structural features of the fifth embodiment are substantially identical to those of the first embodiment. Accordingly, the same terms and reference numerals are assigned to identical components to preclude the necessity for a repeated explanation thereof.

The split blocks in the fifth embodiment, similar to those in the first embodiment, are each constituted with a laminated assembly of steel sheets formed by layering or laminating magnetic sheets one on top of another, as shown in FIG. 14D. When forming a claw pole-type stator core by using layered steel sheets, steel sheets having claw pole portions and core back portions may be layered one on top of another and a claw pole may be formed by bending the claw pole portions. However, since the layering direction matches the direction along which the thickness of the claw pole is measured, eddy currents are bound to occur due to the magnetic fluxes flowing in from the rotor along the circumferential direction. This gives rise to a problem in that the rotating electrical machine cannot be driven in a high-frequency range. In contrast, a surface of the claw pole 111 showing the individual layers stacked one on top of another is set to face opposite the rotor 2 in the embodiment, as shown in FIG. 14B, increasing the electric current resistance measured along the circumferential direction at the claw pole 111, which, in turn, makes it possible to minimize the occurrence of eddy currents. Ultimately, the magnetic flux density can be improved. In addition, since the layering direction matches the circumferential direction in the embodiment, the blocks each corresponding to a magnetic pole pair 112 can be set over intervals with greater ease.

A method that may be adopted for manufacturing the blocks in the fifth embodiment is now described. First, an electromagnetic steel sheet with the sheet thickness thereof in a range of 0.2 mm ~ 1.0 mm and, more preferably, a sheet thickness range of 0.2 mm ~ 0 .5 mm, is formed in a specific shape such as that shown in FIG. 14A. It is to be noted that the steel sheet shown in FIG. 14A assumes a shape similar to the shape assumed at the side surfaces of the split blocks in the first embodiment. In addition, while the steel sheet may be formed in the specific shape through press-punching under normal circumstances, othermethods such as laser cutting and watered-jet cutting or chemical methods may be used. The extent of sagging at the edge can be minimized by forming the steel sheet through etching.

A plurality of steel sheets having been formed in the specific shape, as described above, are then layered one on top of another to form a laminated assembly such as that shown in FIG. 14B. Next, the laminated assembly is placed inside a die 400a of a forming die 400 shown in FIG. 14C and is pressed with a punch 400b. As a result, the linking portion 117 becomes shaped through plastic deformation to assume a curved contour, similar to the contour of the linking portion in the first embodiment. FIG. 14C shows the die 400a and the punch 400b in a sectional view taken over their side surfaces. The die 400a includes a placement area 410a assuming a shape substantially identical to the shape of the laminated assembly shown in FIG. 14B. A curved surface descending along the depthwise direction is formed on the bottom side of the placement area 410a so as to bend the linking portion 117. In addition, the punch 400b includes a pressing portion 410b assuming a shape corresponding to that of the placement area 410a at the die 400a. The front end of the pressing portion 410b projects out so as to achieve a shape corresponding to the shape of the bottom of the placement area 410a at the die 400a. Thus, as a laminated assembly such as that shown in FIG. 14B is placed in the placement area 410a of the die 400a and the laminated assembly is pressed by the punch 400b, the linking portion 117 becomes deformed and thus, a split block 1131a or 1131b with a curved linking portion 117 such as that shown in FIG. 14D is formed. It is to be noted that the curved linking portion 117 partially regains its original shape due to the spring back occurring as it is taken out of the forming die 400. For this reason, the bottom of the placement area 410a at the die 400a and the front end of the pressing portion 410b at the punch 400b should assume a somewhat greater degree of curvature. A block 1131 is manufactured by integrating a pair of split blocks 1131a and 1131b formed as described above in a manner similar to that with which the pair of split blocks are integrated in the first embodiment.

Now, in reference to FIGS. 15, varying relationships between the magnetic flux density (B) and the magnetic field (H) observed by using different materials to constitute the blocks 1131, including compressed powder cores, laminated steel sheets such as electromagnetic steel sheets (e.g., 50A1300 and 50A800 conforming to the JIS standard) and cold-rolled steel sheets (SPCC) are explained. An explanation is also provided on how the relationship between the magnetic flux density (B) and the magnetic field (H) is affected as the raw material constituting the laminated steel sheets is switched. The graph in FIG. 15 was plotted by using non-oriented electromagnetic steel sheets constituted of 50A1300, each assuming a thickness of 0.65 mm, a density of 7.85 kg/dm$^3$, a core loss of 13.00 W/kg or less and a magnetic flux density of 1.69 T or more, non-oriented electromagnetic steel sheets constituted of 50A800 each assuming a thickness of 0.50 mm, a density of 7.80 kg/dm$^3$, a core loss of 8.00 W/kg or less and a magnetic flux density of 1.68 T or more, cold-rolled steel sheets constituted of SPCC_t0.5, each assuming a thickness of 0.50 mm, standard structural rolled steel sheets constituted of SS 400, a compressed powder core 1 with a density of 7.5 or more and a compressed powder core 2 with a density of 7.4 or less. The compressed powder core 1 achieves a higher level of magnetic permeability than the compressed powder core 2.

As FIG. 15 clearly indicates, the magnetic flux density can be raised by using SPCC_t0.5 or standard structural rolled steel sheets such as SS 400 to constitute the blocks 1131, rather than by using compressed powder cores to constitute the blocks 1131. The magnetic flux density can be further raised by using non-oriented electromagnetic steel sheets constituted of 50A1300 or 50A800. In other words, while better performance can be achieved by using non-oriented electromagnetic steel sheets with which the inductance can be reduced and the output torque can be increased, the optimal material should be selected in consideration of factors such as the cost performance and the ease with which the blocks may be formed.

The rotating electrical machine achieved in the fifth embodiment described above includes a stator constituted with a stator core formed by layering or laminating magnetic sheets and a stator coil wound inside the stator core and a rotor rotatably disposed so as to rotate freely relative to the stator. At the stator core, a first claw pole extending from one side along the axial direction toward another side along the axial direction and a second claw pole extending from the other side toward the one side along the axial direction are disposed alternately to each other along the circumference of the stator core. The magnetic sheets are layered one on top of the other along the circumferential direction so that the first and second claw magnetic poles each face the rotor with a layered surface thereof showing the layers stacked one on top of another turned toward the rotor, so as to minimize the occurrence of eddy currents and reduce the core loss. In addition, since the magnetic sheets are layered along a direction substantially perpendicular to the surface of the rotor facing opposite the claw poles, a sufficient level of strength is assured so that the individual magnetic sheets do not become deformed to range toward the rotor even when a force attracting the magnetic sheets toward the rotor is generated.

Furthermore, the stator core in the embodiment is formed by disposing along the circumferential direction a plurality of blocks each made up with a pair of claw poles, i.e., a first claw pole and a second claw pole. The blocks each assume a curved contour so that the first claw pole and the second claw pole are disposed staggered relative to each other along the circumference, making it possible to form the blocks with the minimum number of sheets without having to alter the shape of the sheets being layered one on top of another.

While the fifth embodiment has been explained by assuming that the magnetic sheets layered one on top of another are electromagnetic steel sheets with a thickness of 0.2 mm ~ 0.5 mm, magnetic sheets with a sheet thickness of 0.2 mm or less may be used. Such magnetic sheets may be obtained from a thin amorphous ribbon material, a thin Permendur ribbon material or the like. For instance, theymaybe obtained froman amorphous ribbon material with a sheet thickness of approximately 0.025 mm.

-Sixth Embodiment-

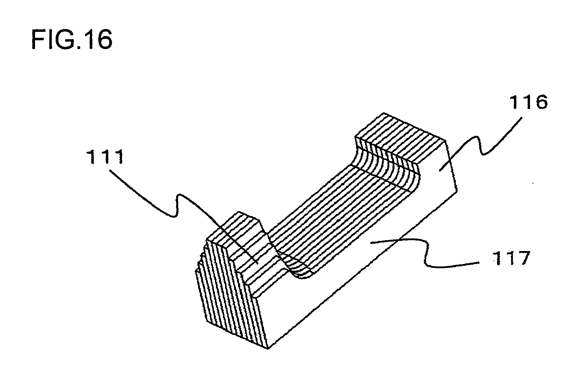

Next, the sixth embodiment of the present invention is described in reference to FIG. 16. FIG. 16 is a perspective of a split block used in the sixth embodiment. It is to be noted that the same terms and reference numerals are assigned to components identical to those in the fifth embodiment to preclude the necessity for a repeated explanation thereof.

In this embodiment, different types of steel sheets are layered so that the claw poles 111 each assume a greater length at a substantial center along the layering direction, i.e., at a substantial center along the circumferential direction, relative to its length on the two sides. To explain in further detail, four steel sheets layered at the substantial center along the layering direction at the claw pole 111 assume a uniform length, whereas the lengths of four steel sheets layered on either side gradually decrease toward the end along the circumferential direction. In addition, the claw pole 111 achieves a symmetrical shape at the center along the layering direction. Since the magnetic flux quantity at the claw pole 111 in a claw pole motor gradually increases from the front end of the claw pole 111 toward the base of the claw pole 111, the sectional area of the claw pole 111 should ideally increase toward the base starting from the front end of the claw pole. The claw poles in the embodiment achieve a shape close to this ideal shape. It is to be noted that such blocks may be manufactured by punching a plurality of steel sheets in different shapes with different dies or by printing various pattern shapes and then etching the printed pattern shapes.

In the sixth embodiment described above, in which the first claw poles and the second claw poles are formed by layering the magnetic sheets assuming different shapes, the shape that the claw poles are to assume can be set freely. In addition, since the magnetic sheets layered one on top of another to form the claw poles in the embodiment assume varying lengths along the axial direction so that the length of the claw pole, which is the greatest at the center along the circumferential direction gradually decreases toward the two ends along the circumferential direction, the sectional area of the claw pole can be adjusted in correspondence to the level of magnetic flux.

-Seventh Embodiment-

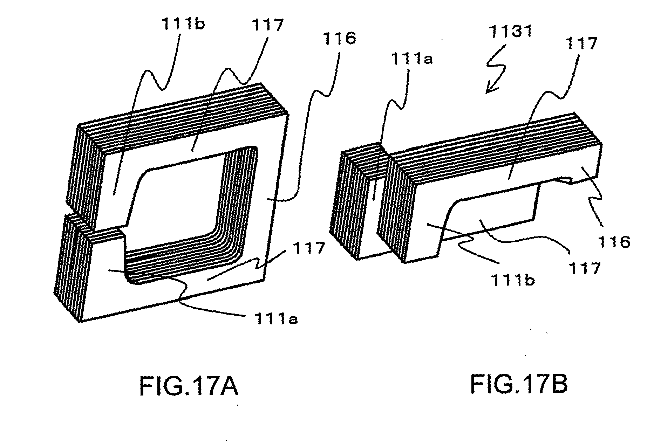

Next, the seventh embodiment of the present invention is described in reference to FIGS. 17A and 17B. FIGS. 17A and 17B are perspectives each showing a block achieved in the seventh embodiment. FIG. 17A shows a laminated assembly prior to the forming process, whereas FIG. 17B shows the block obtained as a final block product through the forming process. It is to be noted that the same terms and reference numerals are assigned to components identical to those in the fifth embodiment so as to preclude the necessity for a repeated explanation thereof.

The block 1131 in the embodiment is an integrated block 1131 constituted of a single laminated assembly instead of split blocks separated from each other along the axial direction. The block 1131 is manufactured by first forming a laminated assembly with steel sheets layered one on top of another. The steel sheets assume a substantially C-shape achieved by cutting out an area of a substantially quadrangular frame as shown in FIG. 17A. Next, the side facing opposite the cut out area is deformed, as shown in FIG. 17B, so as to offset the cut out area in the laminated assembly along the layering direction. At each block manufactured as described above, claw poles 111a and 111b are formed with the cut out area offset along the layering direction and the deformed portion constitutes a core back portion 116. In addition, the area linking the claw poles to the core back portion constitutes a linking portion 117. It is to be noted that the block 1131 in the embodiment differs from those in the other embodiments in that it does not split along the axial direction and, for this reason, the stator coil 114 has to be directly wound through the individual blocks 1131 or the stator coil 114 has to be inserted through the clearance between the claw poles 111a and 111b.

In the seventh embodiment described above, in which the block 1131 is not split along the axial direction, the magnetic flux is allowed to travel with ease through the core backportion 116, assuring better magnetic efficiency. There is an added advantage in that the number of required components is reduced.

-Eighth Embodiment-

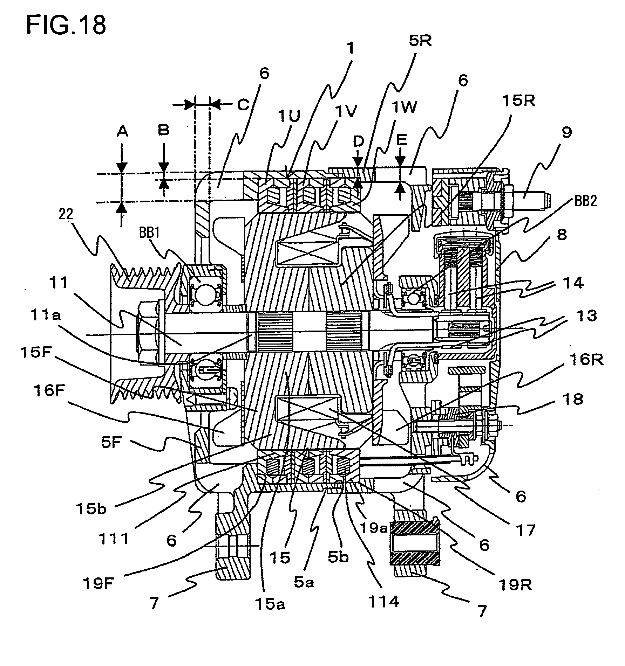

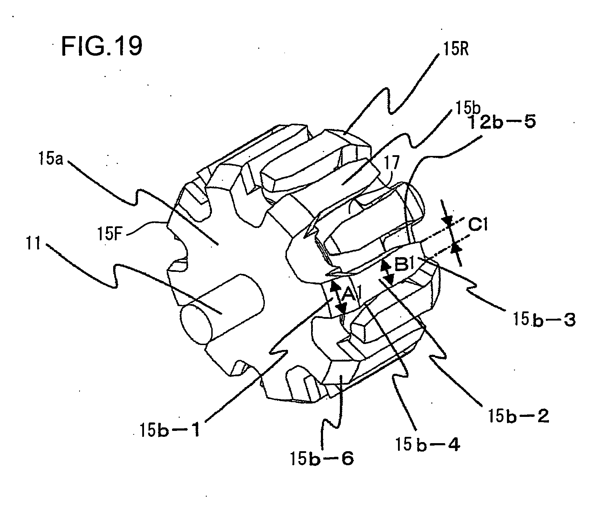

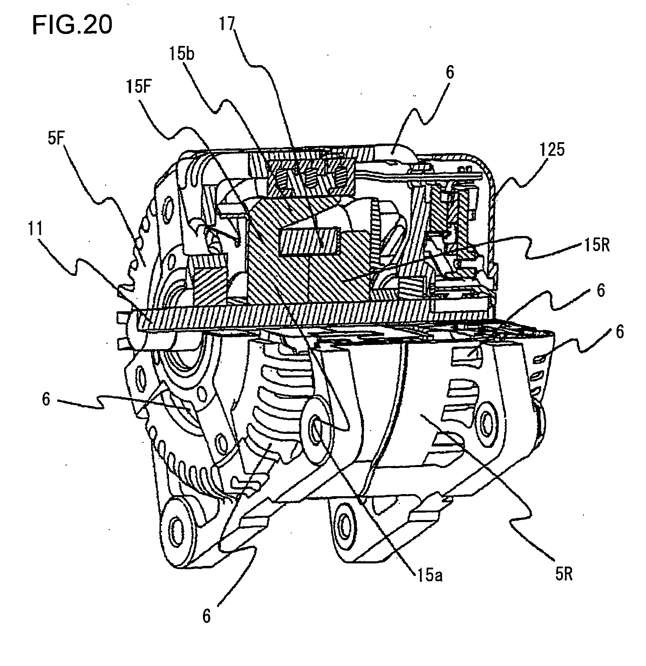

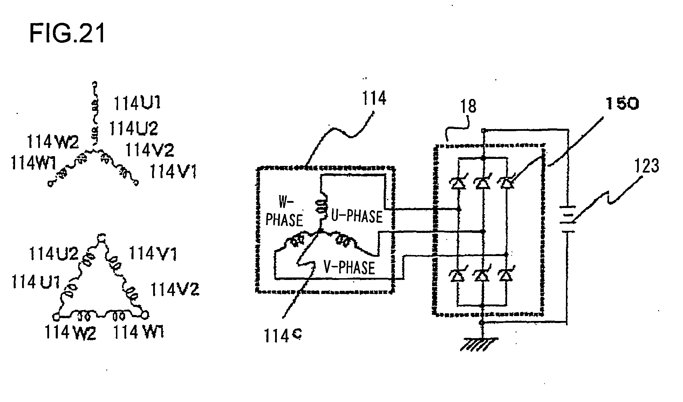

Next, in reference to FIGS. 18 ~ 21, an example in which the rotating electrical machine according to the present invention is embodied as an automotive alternator is described. It is to be noted that the same terms and reference numerals are assigned to components identical to those in the other embodiments. In addition, operations, effects and advantages identical to those in the other embodiments are not repeatedly described. FIG. 18 is a sectional view of the automotive alternator taken over a side surface thereof. FIG. 19 shows the rotor in the automotive alternator. FIG. 20 is a perspective showing the automotive alternator in a partial sectional view. FIG. 21 is a circuit diagram of the automotive alternator.

As shown in FIG. 18, the automotive alternator in the embodiment includes a front bracket 5F disposed on the left-hand side in the figure and a rear bracket 5R disposed on the right-hand side in the figure. The brackets 5F and 5R each assume a tubular shape with a solid bottom, i.e., the shape of a bowl, with a housing space formed inside. A plurality of air holes 6, through which air is distributed, open on the inner circumferential side and the outer circumferential side of both the front bracket 5F and the rear bracket 5R.

When the front bracket 5F has a wall thickness A over the area toward the rear bracket 5R and a wall thickness B at the bottom surface thereof over the area on the outer circumferential side along the radial direction, the wall thickness A is greater than the wall thickness B. In addition, a fitting portion 5a, constituted with an annular stage at which the rear bracket 5R can be fitted, is formed along the outer circumference at an end of the front bracket 5F. In addition, assuming that the front bracket 5F has a wall thickness C over the area toward the end surface along the axial direction, the wall thickness A is greater than the wall thickness C and the wall thickness C is greater than the wall thickness B (A > C > B).

Over the area of the rear bracket 5R toward its outer circumference along the radial direction, too, awallthickness D of the rear bracket over a portion closer to the front bracket 5F is smaller than a wall thickness E assumed at the bottom, as in the front bracket 5F. In addition, a fitting portion 5b, constituted with an annular stage at which the staged portion 5a of the front bracket 5F can be fitted, is formed along the inner circumference at an end of the area with the wall thickness D. It is to be noted that the wall thickness E assumed at the rear bracket 5R is greater than the wall thickness B assumed at the front bracket 5F.

In addition, the front bracket 5F and the rear bracket 5R each include as an integrated part thereof amounting portion 7 with a mounting hole formed therein, projecting out toward the outer circumference along the radial direction. The mounting portions 7 are attached to the vehicle via bolts (not shown). The front bracket 5F and the rear bracket 5R are constituted of an aluminum alloy. They are formed through die casting.

At an end of the rear bracket 5R along the axial direction, a rear cover 8 assuming a smaller wall thickness than either bracket is attached. The rear cover 8, as do the brackets, assumes a tubular shape with a solid bottom, i.e., a bowl shape, with a housing space formed therein. A plurality of air holes 6, through which air is distributed, are formed to open on the inner circumferential side and the outer circumferential side of the rear cover 8, as well. In addition, a terminal 9 to be connected to the battery is disposed on the outer circumferential side of the rear cover 8. It is to be noted that the rear cover 8 may be constituted of a resin or an aluminum alloy.

At substantially central positions along the radial direction at the outer ends along the axial direction of the front bracket 5F and the rear bracket 5R, ball bearings BB1 and BB2, to be used as bearings, are respectively mounted. The outer diameter of the ball bearing BB1 mounted at the front bracket 5F is greater than that of the ball bearing BB2 mounted at the rear bracket 5R.

A shaft 11 is inserted through the ball bearings BB1 and BB2. The shaft 11 is rotatably supported so as to rotate freely relative to the front bracket 5F and the rear bracket 5R.

At the end of the shaft 11 located closer to the front bracket 5F, a rotation transmitting member constituted with a pulley 22 is fixed via a bolt so as to allow the pulley 22 to rotate as one with the shaft. A rotation of an engine (not shown), which is transmitted to a crank pulley, is then transmitted to the pulley 22 via a belt constituting an infinite transmission belt. As a result, the shaft 11 is caused to rotate at a rate in proportion to the engine rotation rate and the pulley ratio of the pulley 22 and the crank pulley.

Two slip rings 13, which rotate as one with the shaft 11, are disposed at the end of the shaft 11 toward the rear bracket 5R. Two brushes 14, which slide as they are pressed against the slip rings 13, are disposed each in correspondence to one of the slip rings 13. Electrical power is supplied to the slip rings 13 via the brushes 14.

At a substantial center of the shaft 11 along the rotational axis, a front-side rotor member 15F and a rear-side rotor member 15R, both constituted of a magnetic material, are connected through serration coupling so as to rotate as one with the shaft 11. The displacement of the front-side rotor member 15F and the rear-side rotor member 15R along the axial direction as they face opposite each other along the axial direction in contact with each other is regulated by allowing the outer ends of the rotor members 15F and 15R to move in a plastic flow inside a circular groove 11a formed at the shaft 11. With the front-side rotor member 15F and the rear-side rotor member 15R locked onto the shaft 11 as described above, a rotor 15 to function as a rotating element is configured.

At the two end surfaces of the rotor 15 along the rotational axis, plate fans 16F and 16R, each equipped with a plurality of blades disposed on the outer circumferential side thereof and functioning as an air supplymeans, are mounted. The fans 16F and 16R rotate as one with the rotor 15. As the fans 16F and 16R rotate, air is distributed from the inner circumferential side toward the outer circumferential side with the centrifugal force resulting from their rotation. It is to be noted that the front fan 16F located toward the front bracket 5F has blades smaller than those at the rear fan 16R located toward the rear bracket 5R and thus, it distributes air at a lower flow rate.

The front-side rotor member 15F and the rear-side rotor member 15R each include an axial portion 15a located on the inner circumferential side and a plurality of rotor claw poles 15b located on the outer circumferential side and assuming an L-shaped section along the radial direction. As the two rotor members 15F and 15R are set in contact with each other with the ends of their shaft portions 15a along the axial direction facing opposite each other, a randle-type core is formed. A field coil 17 is installed to range around the rotational axis between the outer circumferences of the axial portions 15a and the inner circumferences of the rotor claw poles 15b. The two ends of the field coil 17 extending along the shaft 11 are each connected to one of the slip rings 13 mentioned earlier. Thus, as a DC current supplied from the brushes 14 via the slip rings 13 flows through the field coil 17, the rotor 15 becomes magnetized and a magnetic path circling around the field coil 17 is formed at the rotor 15. The magnetic flux thus formed travels from the rotor claw poles 15b into the stator and a magnetic circuit through which the magnetic flux interlinks with the stator coil and then travels back to the rotor claw poles is formed.

As the rotor rotates and different stator claws come to face opposite the rotor claws, the direction of the magnetic flux in the magnetic circuit described above is switched. As a result, the direction of the magnetic flux interlinking with the stator coil changes in accordance with the rotation of the rotor. This directional change induces an AC voltage at the stator coil. The level of the AC voltage changes in correspondence to the rotation speed at the rotor. The level of the AC voltage is also affected by the level of a field current supplied to the field coil 17. It is desirable that in alternator applications, the voltage of the generated power be controlled based upon the state of the electrical charge in the battery. Accordingly, the battery charge state should be first detected based upon the terminal voltage at the battery or the like in order to determine a desirable target power voltage. Then, feedback control should be executed to control the quantity of field current to be supplied to the field coil, so as to achieve the target power voltage. While the power voltage fluctuates as the rotation speed at the rotor changes, any such fluctuations in the power voltage caused by changes in the rotation speed can be adjusted through the feedback control. The control is executed in a power voltage control circuit normally referred to as an IC regulator. The voltage control circuit controls the current supplied to the field coil 17 and the DC power thus generated at the target voltage is output from the terminal 9. The power voltage control circuit includes a full-wave rectifier circuit, and the AC voltage induced at the stator coil is converted to a DC voltage at the full-wave rectifier circuit. A detailed explanation of the power voltage control circuit and the full-wave rectifier circuit, both disposed inside the rear cover 8, is not provided.

While the current supplied to the field coil 17 is controlled based upon the battery conditions so that power generation starts when the power voltage rises to a level higher than that of the battery voltage in the vehicle, the IC regulator, which adjusts the power voltage, executes control so as to ensure that the terminal voltage at the terminal 9 sustains a uniform level at all times.

As shown in FIG. 18, three phase stators 1U, 1V and 1W, similar to those in the first embodiment, are firmly held in the order of the U-phase stator, the V-phase stator and the W-phase stator between a stage 19F located between the area with the wall thickness A and the area with the wall thickness B at the front bracket 5F and a stage 19R located between the area with the wall thickness D and the area with the wall thickness E at the rear bracket 5R. It is to be noted that the U-phase stator 1U and the V-phase stator 1V are entirely housed inside the front bracket 5F. However, the W-phase stator 1W is partially housed inside the front bracket 5F with the remaining part of the W-phase stator housed inside the rear bracket 5R. This means that the overall stator 1 contacts the front bracket 5F over a greater area than the rear bracket 5R. Between the individual phase stators at the stator 1, nonmagnetic link plates are disposed so as to assure magnetic insulation. The inner circumference of the stator 1 faces opposite the outer side of the rotor claw poles 15b at the rotor 15 with a small clearance present between them.

Each phase stator in the stator 1 includes a stator core constituted of a magnetic material and a stator coil 114 wound in an annular shape around the stator core in the circumferential direction inside the stator core. The stator coil 114 corresponding to each phase is connected to the rectifier circuit 18 installed within the rear cover 8. The rectifier circuit 18 is connected to a battery 123 (see FIG. 21) via the terminal 9.

It is to be noted that the rectifier circuit 18 is constituted with a plurality of diodes 150, as shown in FIG. 21. Since the stator coils 114 are arranged for the three-phase stators independently with respect to these diodes 150, full-wave rectification is achieved via the six diodes 150. In addition, the stator coils 114 may be connected either through a delta connection or through a star connection.

Next, in reference to FIG. 19, the rotor 15, functioning as a rotating element, is described in detail. As shown in FIG. 19, the front-side rotor member 15F and the rear-side rotor member 15R constituting the rotor 15 each include a plurality of rotor claw poles 15b (more specifically eight rotor claw poles 15b), with an L-shaped section taken along the radial direction, disposed from the outer side end of the axial portion 15a along the axial direction. The eight rotor claw poles are thus set side-by-side along the circumferential direction. The rotor claw poles 15b at the front-side rotor member 15F and the rotor claw poles 15b at the rear-side rotor member 15R are set alternately to each other along the circumferential direction, and the rotor 15 includes a total of 16 rotor claw poles 15b. Namely, the rotor 15 in the embodiment has 16 magnetic poles.

While the rotor 15 in FIG. 19 is a randle type rotor with 16 magnetic poles, FIG. 19 simply presents a schematic illustration, and it is desirable to provide rotor claw poles in the randle type rotor in a quantity matching the number of magnetic poles at the stator. Namely, if the stator has 20 magnetic poles, the randle type rotor, too, should have 20 magnetic poles. While the rotor claw poles 15b are set so as to face directions opposite from each other alternately, they all assume identical tapered shapes with a base portion 15b-1 at each claw pole 15b assuming a significant width A1 along the circumferential direction, a portion 15b-2 facing opposite the stator assuming a somewhat smaller width B1 along the circumferential direction and an area further toward the front tip assuming an even smaller width C1 along the circumferential direction. The magnetic flux density at the front end of the claw pole is low and thus, magnetic saturation does not occur even if the width C1 measured along the circumferential direction is small. In addition, as shown in FIG. 19, the inner circumferential side of the rotor claw poles 15b is tilted so that the claw width taken along the radial direction gradually decreases toward the front end. Since a randle type rotor may rotate at very high speed of over 10,000 rpm, centrifugal force must be minimized. Accordingly, the width C1 at the front end of the rotor claw poles 15b measured along the circumferential direction is set as small as possible. As a result, the extent to which the front end of the rotor clawpoles 15b are liftedupdue to centrifugal force is reduced, which, in turn, allows the stator and the rotor 15 to be set over a smaller distance from each other. By setting the stator and the rotor with a smaller clearance, as described above, better efficiency is achieved.

The front-side rotor member 15F and the rear-side rotor member 15R formed as described above are locked onto the shaft 11 with the ends of their axial portions 15a set in contact with each other so as to set their rotor claw poles 15b alternate to each other along the circumferential direction, with the field coil 17 disposed between the front-side rotor member and the rear-side rotor member.

In addition, the front fan 16F and the rear fan 16R are mounted through welding or the like at the outer ends of the front-side rotor member 15F and the rear-side rotor member 15R along the axial direction. The front fan 16F and the rear fan 16R are disposed in a symmetrical positional arrangement so as to distribute air toward the center as the rotor 15 rotates. A plurality of blades each having an inclined surface sloping along the radial direction are formed at the front fan 16F. The blades are formed as integrated parts of the fan by bending with a press a plurality of projections on one side along the circumferential direction at a metal plate with the projections formed thereat along the circumferential direction in a substantially circular arc form and also substantially perpendicularly. The front fan 16F formed as described above and the rear fan 16R also formed in a similar manner are fixed onto the outer ends of the front-side rotor member 15F and the rear-side rotor member 15R along the axial direction through welding or the like. The front fan 16F and the rear fan 16R described above and the rotor 15 functioning as a rotating element together constitute an air supply means.

The operation executed in the embodiment is now described. As the engine is started up, the engine rotation is transmitted from the crankshaft to the pulley 22 via the belt. The rotor 15 functioning as a rotating element is thus rotationally driven via the shaft 11. As a DC current is supplied from the brushes 14 to the field coil 17 at the rotor 15 via the slip rings 13, magnetic fluxes circling around the inner circumference and the outer circumference of the field coil 17 are generated. Consequently, an N pole and an S pole are alternately formed along the circumferential direction at the plurality of rotor claw poles 15b present at the rotor 15 along the circumferential direction. A magnetic flux generated at the field coil 17 travels from the rotor claw poles 15b assuming N polarity at the front-side rotor member 15F to the claw poles 111 ranging from one side of the stator 1 along the axial direction, circles around stator coil 114 and then reaches the claw poles 111 ranging from the other side along the axial direction. In addition, the magnetic flux travels on to reach a rotor claw poles 15b assuming S polarity at the rear-side rotor member 15R, thereby forming a magnetic circuit that circles through the rotor 16 and the stator 1. As magnetic fluxes generated at the rotor as described above interlink with the stator coils 114, AC voltages are induced individually at the U-phase stator coil 114, the V-phase stator coil 114 and the W-phase stator coil 114, and overall, AC voltages are induced in correspondence to the three different phases.

The AC voltages thus generated are then converted to DC voltages through full-wave rectification at the rectifier circuit 18. An IC regulator (not shown) is engaged in control of the current supplied to the field coil 17 so as to ensure that the rectified DC voltages achieve a predetermined voltage of, for instance, 14.3V.

In addition, as the rotor 15 rotates, the front fan 16F and the rear fan 16R rotate as one with the rotor 15. Thus, an airflow whereby outside air is taken in along the axial direction, i.e., onto the inner side and then discharged along the circumferential direction, is created.

As the front fan 16F rotates, the outside air is taken in along the axial direction through the inner circumferential-side air holes 6 formed over the area around the outer circumference of the ball bearing BB1 at the front bracket 5F. The air thus taken in then flows toward the outer circumferential side due to the centrifugal force created with the blades of the front fan 16F and is released through the outer circumferential-side air hole 6 formed over the area with a large wall thickness on the outer circumferential side of the front bracket 5F. Since one of the side surfaces of the stator 1 along the axial direction and the outer circumferential surface of the stator 1 are fixed in contact with the front bracket 5F, heat generated at the stator 1 is fully transmitted to the front bracket 5F. In addition, since the area of the front bracket 5F to which the heat is transmitted faces the airflow passage through which the air flows toward the outer circumferential-side air holes 6, the stator 1 can be cooled via the front bracket 5F.

As the rear fan 16R rotates, outside air is taken in along the axial direction through the inner circumferential-side air holes 6 formed around the outer circumference of the ball bearing BB2 at the rear bracket 5R, via the air holes 6 present at the outer circumferential edge of the rear cover 8 and the inner circumferential-side air holes (not shown) opening at an end surface of the rear cover 8 along the axial direction and then the rectifier circuit 18. The air thus taken in flows toward the outer circumferential side due to the centrifugal force created via the blades of the rear fan 16R and is released through the outer circumferential-side air holes 6 formed on the outer circumferential side of the rear bracket 5R. Thus, the air flowing toward the outer circumferential-side air holes 6 further draws off the heat originating from the stator 1 and transmitted through the rear bracket 5R in a manner similar to that with which the heat transmitted from the stator 1 to the front bracket 5F is drawn off.

Furthermore, the pressure difference between the pressure on the front fan side and the pressure on the rear fan side as the fans rotate, creates an air current through which air travels through the clearance between the magnetic poles at the rotor 15 and also through the clearance between the rotor 15 and the stator 1. In the embodiment, the pressure generated on the side of the rear fan 16R is lower and, as a result, air flows from the front bracket side through the clearance between the rotor 15 and the stator 1 and also through the clearances between the magnetic poles at the rotor 15 toward the rear bracket 5R, and the rotor 15 and the stator 1 are cooled with the air current.

While specific embodiments of the present invention are described above, other examples of applications in which the present invention may be adopted are listed below.

While an explanation is given above on an example in which the rotating electrical machine according to the present invention is embodied as an automotive alternator engaged in power generation, the present invention may also be adopted in an aerogenerator or the like. In addition, while an explanation is given above in reference to the embodiments on an example in which the rotating electrical machine according to the present invention is used as a motor equipped with a permanent magnet, the present invention may also be adopted in conjunction with a rotor with salient poles which does not include a permanent magnet, a reluctance-type rotor assuming varying levels of magnetic resistance, a randle type rotor that generates a magnetic flux via a field coil, a rotor that includes a squirrel-cage conductor used in an induction motor, and the like as well.

In addition, while the rotor used in the motor embodying the rotating electrical machine according to the present invention described above is a rotor with a ring-shaped permanent magnet, the permanent magnet at the rotor does not need to assume a ring shape. For instance, the rotor may adopt a surface magnet arrangement with a plurality of permanent magnets placed and fixed onto outer circumferential side or an embedded magnet arrangement with a plurality of magnets embedded within the rotor core. As a further alternative, auxiliary magnetic poles may be formed between permanent magnets set next to each other so as to use the reluctance torque to advantage.

While the blocks achieved in the embodiments are each formed in correspondence to a single magnetic pole pair, the operational effects of the present invention may also be realized by forming each of the blocks in correspondence to a plurality of magnetic pole pairs. It may be more advantageous to form the blocks each in correspondence to a plurality of magnetic pole pairs when the present invention is adopted in an extremely small rotating electrical machine or when the number of magnetic poles is very large.

While an explanation is given above in reference to the embodiments on the advantage of inductance reduction achieved by disposing the individual blocks over a specific distance from one another along the circumferential direction, the blocks do not need to be set apart from each other along the circumferential direction if the inductance does not need to be reduced. In other words, the full advantages of the present invention, with regard to ease of manufacturing, can be realized even when the blocks are set close to one another.

While the total number of claw poles present at each phase stator is 32 in the embodiments described above, the total number of claw poles at each phase stator may be adjusted as necessary in correspondence to the particulars of a given set of specifications.

While flat or rectangular wires are used to constitute the stator coils in the embodiments described above, the stator coils may instead be formed by using wire with a round section, an elliptical section, a polygonal section or the like. Furthermore, the wire used to constitute the stator coils may have an irregular sectional shape, e.g., a sectional shape that may be achieved by packing the wire under pressure inside the stator cores.

While an explanation is given in reference to the embodiments on an example in which the blocks each constituted with a compressed powder core have substantially quadrangular surfaces at which the claw poles face opposite the rotor, the surfaces facing opposite the rotor may instead assume a substantially trapezoidal shape, the width of which gradually decreases toward the front ends of the claw poles. By assuming such a trapezoidal shape, a skew is created at the claw pole, which, in turn, reduces the extent of magnetic pulsation occurring between the claw pole and the rotor. It is to be noted that since any three-dimensional shape can be formed with a compressed powder core, better design freedom is afforded.

While the rotational angle at the rotor is detected via the rotation sensor in the embodiments described above, the rotor position may instead be detected through an induction voltage position detection method whereby power supplied to the various phase stator coils is switched by detecting the positions of the rotor magnetic poles based upon the level of the voltages induced at the stator coils, i.e., through a sensorless method.

-Ninth Embodiment-

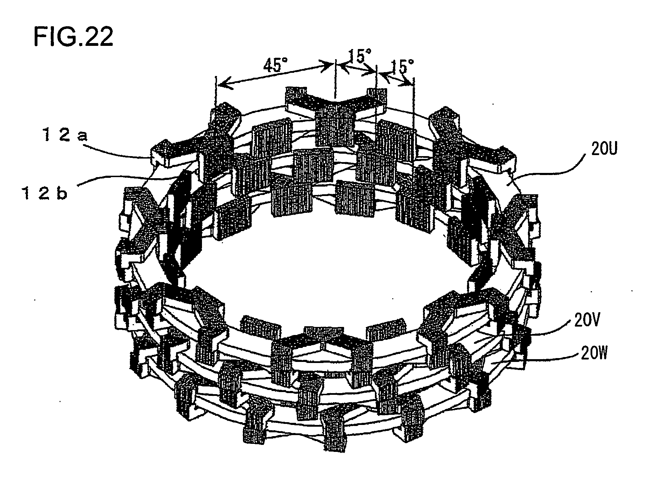

FIG. 22 shows the structure assumed in the stator cores in the claw pole-type rotating electrical machine achieved in the ninth embodiment of the present invention. As shown in FIG. 22, a stator core in the claw pole motor is constituted with claw poles 12 formed by layering one on top of another iron-group metal sheets. It is to be noted that in the following description, the term "claw pole" is used to refer to the portion equivalent to one of the split blocks described earlier, the term "claw portion" is used to refer to the area equivalent to one of the claw poles described earlier and the term "yoke portion" is used to refer to the core back portion described earlier.

In the structure achieved in the embodiment, portions other than the minimum magnetic material necessary to constitute a magnetic circuit is eliminated. More specifically, claw poles 12a and 12b constituting the claw pole motor are formed by using layered metal sheets such as electromagnetic steel sheets, cold-rolled steel sheets or electromagnetic stainless steel sheets. The metal sheets are layered one on top of another along a specific direction parallel to the direction in which magnetic fluxes originating from the rotor flow in. Namely, the magnetic poles are formed by layering metal sheets, i.e., magnetic sheets, along the circumference of the stator. The claw poles 12a and 12b set next to each other along the circumferential direction remain uncoupled with each other either electrically or magnetically (they are formed by layering metal sheets with a nonmagnetic and nonconductive material inserted between them) . The claw poles 12a and 12b are each constituted with two laminated assemblies which are set so that the surfaces of the laminated assemblies used to form the claw pole, ranging along the circumferential direction and facing toward the rotor are abutted at the center of the claw pole or at a position further toward either side. In addition, each of the two laminated assemblies constituting the claw pole should be set so as to face opposite the laminated assembly used to form the next claw pole on either side, which is to assume the opposite polarity along the axial direction over the outer area along the circumferential direction. A coil 20 formed by winding multiple times an annular conductor is disposed in the gap created between the laminated assemblies forming the two poles along the axial direction and the coil 20 is clamped along the axis of the stator between the claw pole constituted with the laminated assemblies and the claw pole set next to it and constituted with laminated assemblies to assume the opposite polarity. Each phase stator in the rotating electrical machine is configured by forming a plurality (eight magnetic claw pole pairs in this example) of pole pairs, each pair made up with a claw pole formed with the laminated assemblies and a next claw pole assuming the opposite polarity, along the circumference of the coil 20. By disposing a plurality of (three in the example presented in FIG. 22 illustrating the embodiment) such phase stators along the axial direction, a rotating electrical machine assuming multiple phases (three phases) is formed. In this rotating electrical machine, the individual phase stators need to be disposed along the axial direction with an of f set relative to one another. Namely, assuming the rotating electrical machine is a three-phase rotating electrical machine, the individual phase stators need to be disposed with an offset of 120° electrical angle, i.e., by offsetting them by one third of the mechanical angle per pole pair at the rotor. In the example presented in the figure with each phase stator having 16 poles (eight pole pairs), the offset of the 120° electrical angle is equivalent to an offset of 15° mechanical angle, since 360° electrical angle is equivalent to 45° mechanical angle.

Although not shown, if the rotating electrical machine is a two-phase rotating electrical machine, the individual phase stators need to be disposed with an offset relative to each other of a 90° electrical angle, i.e. by offsetting them by 1/4 of the mechanical angle corresponding to each pole pair at the rotor. As an alternative, the individual phase stators may be disposed without an offset by instead disposing poles at the rotor side, formed in correspondence to the phase stators, with an angular arrangement that allows the rotating electrical machine to assume a plurality of phases as described above.

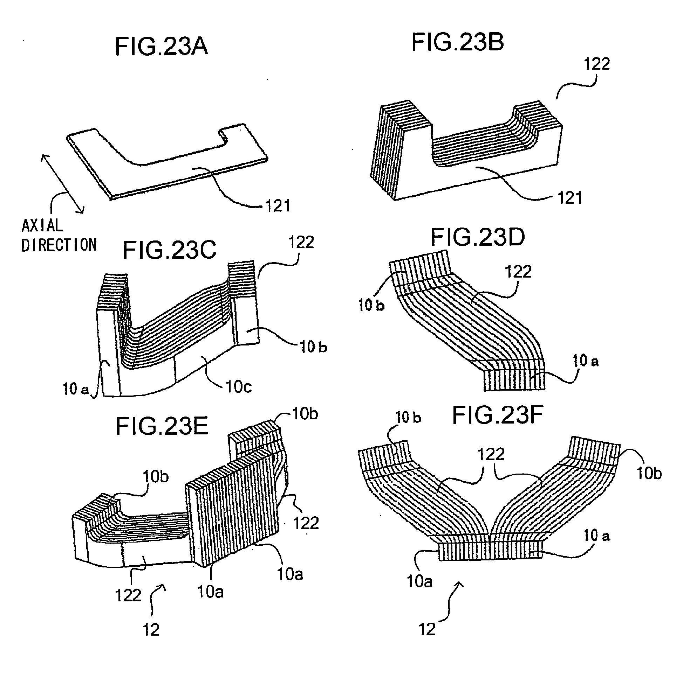

In reference to FIGS. 23A through 23F, the structure adopted for the claw poles 12 (12a, 12b) is described in detail. It is to be noted that the claw poles 12a and 12b in FIG. 22 assume shapes identical to each other. FIG. 23A shows a metal sheet (hereafter referred to as a blank) 121 to be used to form the laminated assembly 122 in FIG. 23B. The portion of the blank 121 extending along the axial direction on the left side of the figure subsequently forms the claw portion of a claw pole 12, whereas the end of the blank 121 on the right side in the figure subsequently forms the yoke portion of the claw pole 12. The width of the claw portion, smallest at the front end, gradually increases toward the base along the axial direction and the claw portion is curved at the base, since the sectional area at the base must be set greater than the sectional area at the front end to accommodate the magnetic flux flowing in from the rotor side of the claw pole and traveling toward the base.

FIG. 23B shows an assembly (hereafter referred to as the laminated assembly) formed by layering or laminating a plurality of blanks 121, one of which is shown in FIG. 23A. FIG. 23C shows the shape achieved by deforming the laminated assembly 122 in FIG. 23B. The laminated assembly is deformed through plastic deformation by, for instance, bending it with a jig or the like holding the portion that subsequently forms a claw portion 10a on the inner side of the stator along the radial direction and the area that subsequently forms a yoke portion 10b on the outer side of the stator along the radial direction. FIG. 23D presents a view of the laminated assembly 122 in FIG. 23C, taken along the direction perpendicular to the layered surface. The claw portion 10a and the yoke portion 10b each have a rectangular section and the area connecting the claw portion and the yoke portion is deformed through bending or the like. FIG. 23E is a perspective of the claw pole 12 formed by using laminated assemblies 122. Two laminated assemblies 122 having been prepared through a bending process are coupled together at their claw portions 10a. At this time, the two laminated assemblies are set so as to abut the layered surfaces of the claw portions 10a with each other, as shown in FIG. 23E and then the two laminated assemblies are bonded through welding or the like. FIG. 23F presents a view of the claw pole 12, taken along the direction perpendicular to the layered surfaces. The claw pole 12 assumes a symmetrical shape.

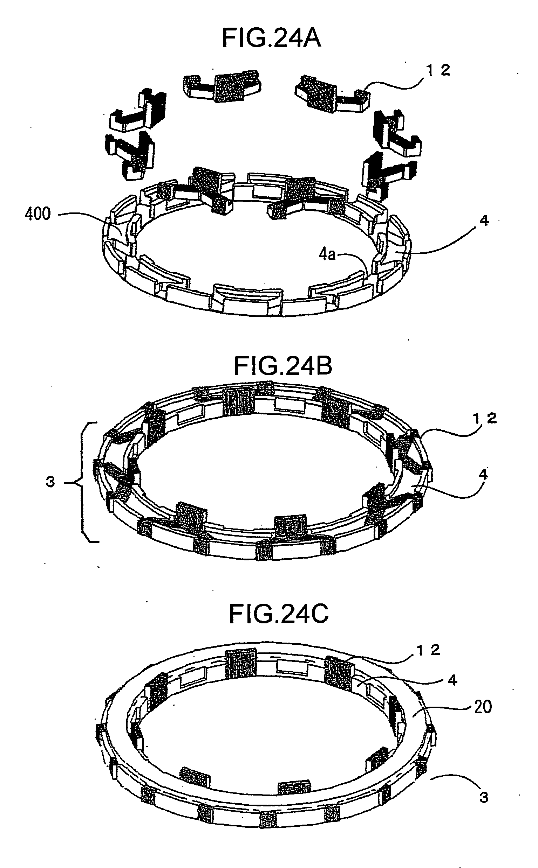

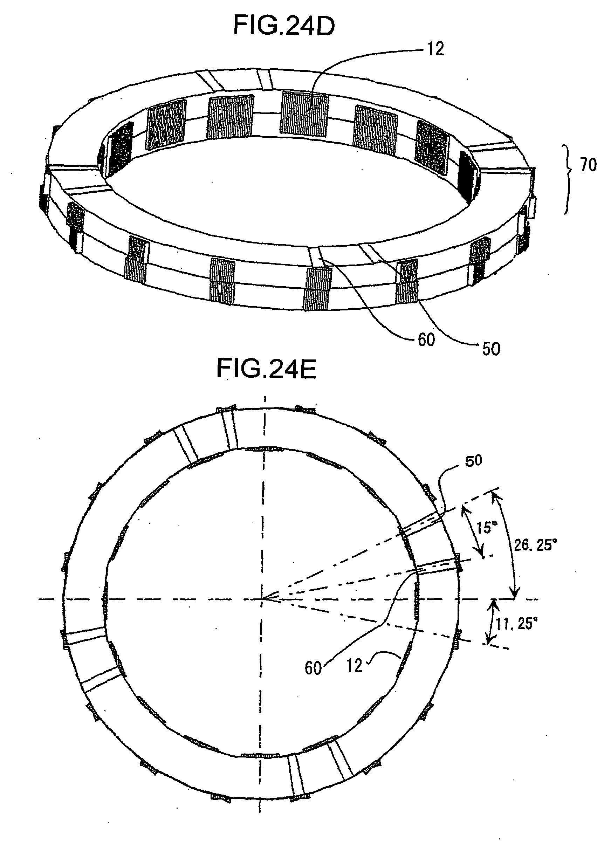

FIGS. 24A through 24E illustrate a single phase stator formed by using a plurality of claw poles 12, one of which is shown in FIGS. 23E and 23F. FIG. 24A shows eight claw poles 12 disposed along the circumferential direction. At a holding plate 4 used to hold the claw poles 12, a plurality of grooves 4a are formed so as to hold the claw poles firmly. As the claw poles 12 are set inside the grooves 4a, they are positioned accurately, thereby forming a half phase stator 3 constituting one half of a phase stator, as shown in FIG. 24B. Then, a coil 20 constituted with an annular winding is disposed at the half phase stator 3 corresponding to a single phase, as shown in FIG. 24C, and two half phase stators 3, one of which is shown in FIG. 24B, are disposed so as to face opposite each other along the axial direction to configure a phase stator 70 shown in FIG. 24D. The coil 20 is located between the claw poles 12 formed at the upper and lower half phase stators 3.

As shown in FIG. 24D, the laminated assemblies to form the claw poles 12 are held between two holding plates 4 at the phase stator 70. This means that the mechanical strength of the phase stator is basically determined in correspondence to the level of strength achieved at the holding plates 4. The structure of the holding plates 4 assumed at their surfaces perpendicular to the axial direction as shown in FIG. 24D is now described. Positioning grooves 60 and positioning projections 50 set with a predetermined positional relationship relative to each other are formed at least at three positions along the circumferential direction at the surface perpendicular to the axial direction of the holding plates 4 constituting each phase stator 70. FIG. 24E illustrates this positional relationship. The positional relationship shown in the figure is assumed in the 16-pole three-phase motor. As described earlier, when stacking phase stators over three stages along the axial direction to constitute a three-phase motor, the individual phase stators are disposed with an offset of 120° electrical angle (15° mechanical angle) relative to one another along the circumferential direction. For this reason, a groove 60 and the corresponding projection 50 are set at positions with an offset of 15° relative to each other along the circumferential direction.

In addition, since a half phase stator 3 of a given phase stator and a half phase stator 3 of another phase stator are connected along the axial direction, there positions must be taken into consideration. In the example, the positional relationship of the projection 50 and the groove 60 on the upper side to those on the lower side is reversed at a position forming an angle of 11.25° from the center of a claw pole, i.e., relative to a position equivalent to a quarter of a full cycle in the electrical angle and, accordingly, the positioning groove 60 is formed at a position forming an 11.25° angle relative to the center of the claw pole 12 and the corresponding projection 50 is formed with an offset of 15° relative to the positioning groove. Projection/groove pairs, each made up with the projection 50 and the groove 60, are disposed over equal intervals of 90°, so as to enable accurate positioning along the circumferential direction.

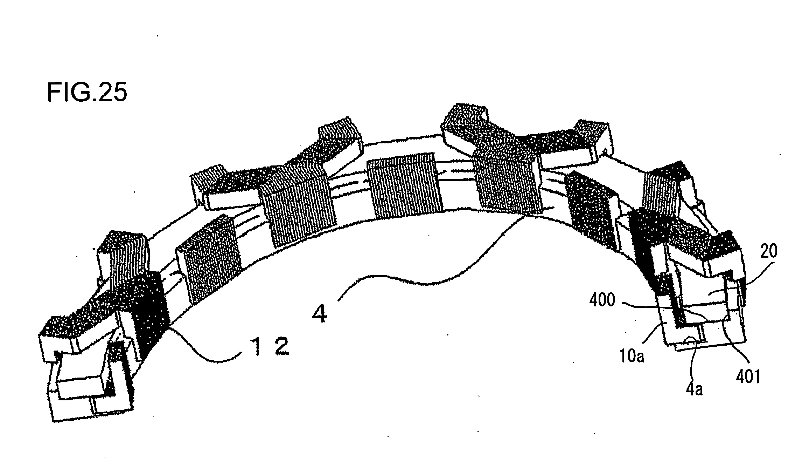

FIG. 25 shows the structure of a given phase stator 70 in a sectional view. In addition to the grooves 4a at which the claw poles 12 are held firmly, the holding plates 4 includes guide portions 400 and 401 used to hold the coil 20. Namely, since the coil 20 must be disposed without contacting the laminated assemblies constituting the claw poles 12, the coil 20 is held over a distance so as to form a clearance between the claw poles 12 and the coil 20. More specifically, the depth of the grooves 4a is set greater than the thickness of the claw poles 12 along the axial direction. In other words, the depth of the stage formed by the grooves 4a at which the claw pole 12 is disposed and the placement surface 400 at which the coil 20 is disposed, is set greater than the thickness (the measurement taken along the axial direction) of the area connecting the claw portion 10a and the yoke portion 10b at each claw pole 12. Along the circumferential direction, the radial dimension of the inner circumferential surface 401 used to position the coil 20 along the radial direction is set smaller than the dimension of the yoke portion 10b taken on the inner diameter side and the inner diameter of the coil 20 is set greater than the outer diameter of the claw portion 10b so as to uniformly position the coil 20 without allowing it to contact the laminated assemblies constituting the claw poles 12.

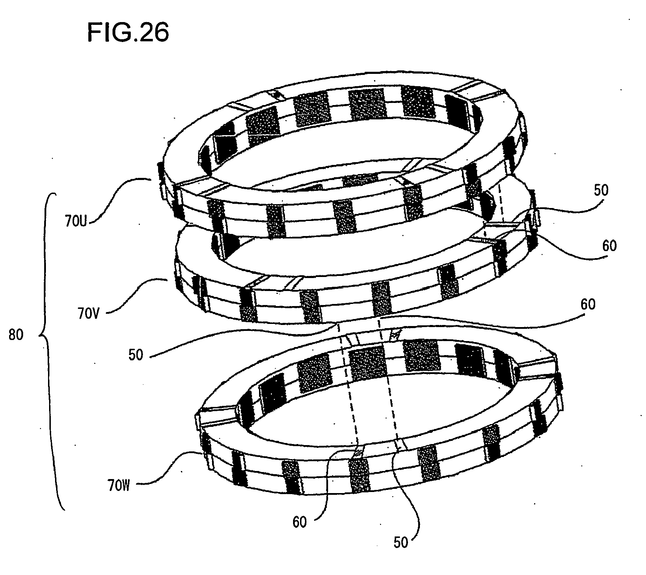

FIG. 26 presents an example of a positional arrangement that may be assumed when assembling the individual phase stators 70 to form a three-phase stator 80. As has been described in reference to FIGS. 24D and 24E, the positional relationship among the phase stators 70 is uniformly determined as the groove 60 and the projections 50 formed at the holding plates 40 along the axial direction are interlocked. The positioning projections 50 and the positioning grooves 60 formed at the upper surface of the phase stator 70W in FIG. 26 are made to fit with the positioning projections 50 and the positioning grooves 60 formed at the lower surface of the phase stator 70V. The grooves 60 are made to interlock with the projections 50 on the other side at four positions along a circumferential direction and as they interlocked at these four positions, two phase stators are assembled. Since the two phase stators are held together without allowing any displacement in any direction over a plane perpendicular to the axis, univocal positioning is enabled. The phase stator 70V and the phase stator 70U are assembled together with a similar positional relationship and are thus positioned uniformly relative to each other.

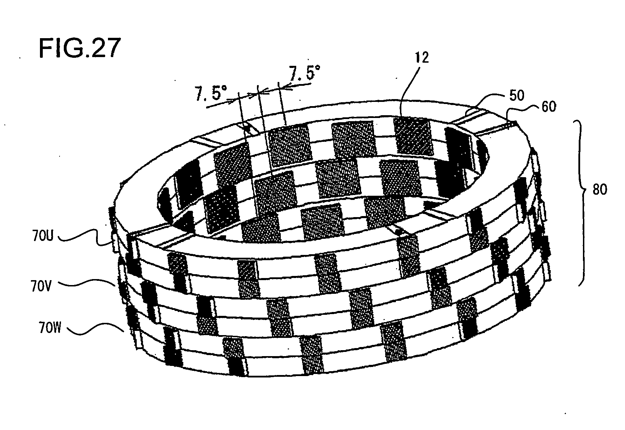

FIG. 27 shows the three-phase stator 80 achieved by assembling the phase stators 70U, 70V and 70W. The claw poles 12 at the phase stators 70U, 70V and 70W positioned relative to each other in a specific relationship, as has been explained in reference to FIG. 26, are offset by 120° electrical angle, measured from a given claw center to the claw center of the nearest claw pole at an adjacent phase stator, as shown in FIG. 22 (with a 15° mechanical angle in conjunction with the 16 pole phase stator configuration adopted in the example presented in the figure).

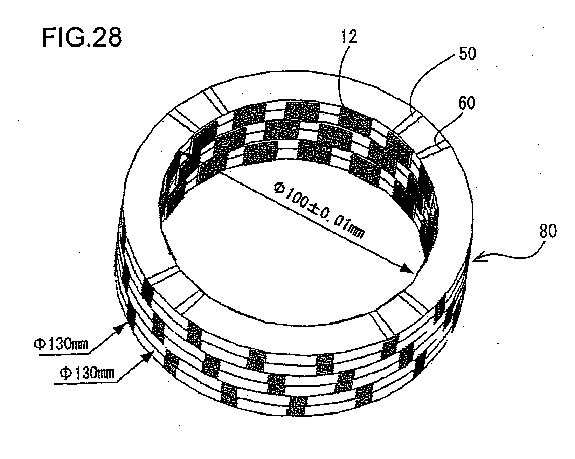

FIG. 28 shows a three-phase stator 80 with its inner circumferential surface and the outer circumferential surface machined so as to provide an optimal stator in a rotating electrical machine used as a motor or a generator. With the individual phase stators positioned via the positioning projections 50 and the positioning grooves 60 at the holding plates 4, the inner circumferential surface and the outer circumferential surface are machined so as to achieve a high level of circularity by using a machining tool such as a lathe. As shown in FIG. 24E, the inner circumferential surface and the outer circumferential surface in the assembled state both initially assume an angular contour forming a polygonal shape along the circumferential direction formed by the end surfaces of the claw poles 12 constituted with laminated assemblies. For this reason, when the rotor with a round section is disposed on the inner circumferential side, non-uniform gaps may be formed and, in such a case, the rotating electrical machine may fail to achieve a satisfactory magnetic flux distribution. Accordingly, by machining the inner circumference through trimming or grinding, the characteristics can be improved. It will be obvious, however, that the rotating electrical machine may be utilized without machining the inner circumference as long as the desired characteristics are already assured. In addition, the rotating electrical machine may be assembled by ensuring that the claw poles are disposed so as to achieve a smooth, round contour along the circumferential direction. It may also be difficult to mount a cylindrical protective component such as a housing on the outer side of the stator 80 if the laminated assemblies project out over the outer circumference. Under such circumstances, the outer circumferential area, too, should be machined as described above so as to achieve a smoothly rounded contour. However, the outer circumferential area does not need to be machined if no housing is to be mounted or the projections formed with the laminated assemblies are to be used for purposes of heat discharge. In the example presented in FIG. 28, the inner circumferential surface and the outer circumferential surface are both machined with the inner circumferential side machined to achieve a diameter of Ø100 mm ± 0.01 mm and the outer circumferential side machined to achieve a diameter of Ø130 mm.

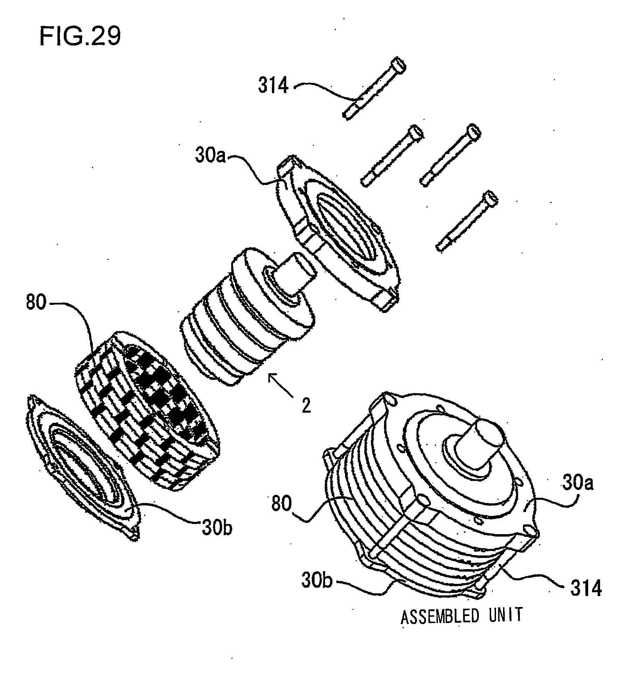

FIG. 29 is an exploded perspective of a motor that includes the three-phase stator 80 and an external view of the assembled motor. A rotor 2 similar to that shown in FIG. 1B is disposed on the inside of the three-phase stator 80. The stator 80 and the rotor 2 are held between an output side end bracket (30a and a rear end side end bracket 30b (non-output shaft side bracket) disposed as shown in figure and then the assembly is fastened along the axial direction with bolts 314. The individual components assembled as described above constitute the motor in the post-assembly state shown in the figure. Since no coil end is present along the axial direction, the motor is provided as a compact unit with a low profile along the axial direction.

While ring magnets are disposed at the rotor 2 in the example presented in FIG. 29, similar advantages can be achieved by adopting the present invention in a motor or a generator equipped with a squirrel-cage-type conductive rotor, a rotor equipped with an embedded magnet, a salient pole-type rotor, which does not include any magnet, a reluctance-type rotor assuming varying levels of magnetic resistance or a randle type rotor.

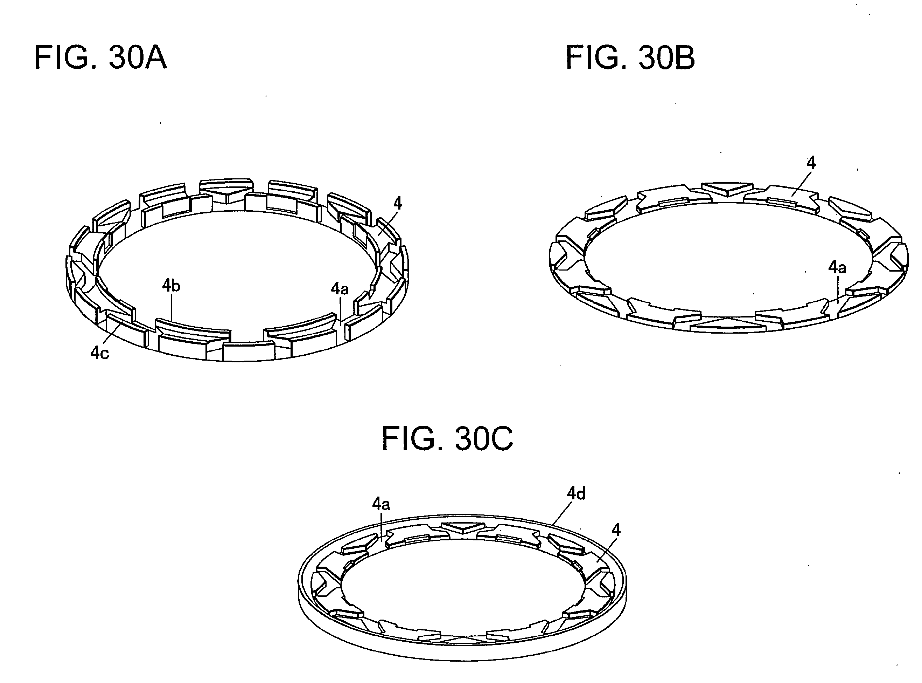

FIGS. 30A through 30C present examples of structures that may be adopted for the holding plates 4. By adopting a specific structure at the holding plates, the productivity and the characteristics of the motor can be improved. FIG. 30A shows one of the holding plates 4 described earlier. It includes grooves 4a at which laminated assemblies are held. It also includes inner circumferential side walls 4b and outer circumferential side walls 4c with which the coil 20 is uniformly positioned and held. As described earlier, such holding plates 4 must be constituted of a nonmagnetic material. In addition, the material must assure a certain level of strength in order to firmly hold the laminated assemblies. For this reason, it is desirable to form the holding plates 4 with a nonmagnetic metal or an organic material such as resin. More specifically, they may be constituted of an aluminum alloy, a nonmagnetic stainless steel alloy or a copper alloy. Lightweight titanium may be another option, although it is not as viable from the viewpoint of its cost performance. The resin materials that may be used to form the holding plates include LCP (liquid crystal polymer), PPS (polyphenylene sulfide resin), PBT (polybutylene terephthalate resin), PET (polyethylene resin), nylon ® reinforced with glass fiber and PC (polycarbonate resin). Carbon fiber-reinforced resin and thermosetting resins such as epoxy resin and unsaturated polyester resin, too, are options that may be considered. It is desirable to select the optimal material in conformance to specific conditions set based upon the thermal and mechanical strength requirements of the particular motor or generator. The holding plates may be manufactured by using aluminum or copper alloy through die casting, whereas they may be manufactured by using a stainless steel alloy through machining or cold or warm casting. The holding plates may be manufactured by using a resin material through injection molding or the like. FIG. 30B shows a holding plate 4 assuming the shape of a plate. The holding plate assuming this shape can be manufactured with ease through machining such as casting or press molding by using ring-shaped blanks or the like. FIG. 30C shows a holding plate 4 that includes an outer circumferential wall 4d that holds in the laminated assemblies. Since no laminated assemblies range beyond the wall 4d in the assembled state, the holding plate may also function as part of a housing.

-10th Embodiment-

Next, the 10th embodiment of the present invention is described. The 10th embodiment is identical to the ninth embodiment described above except for the specific features explained below.

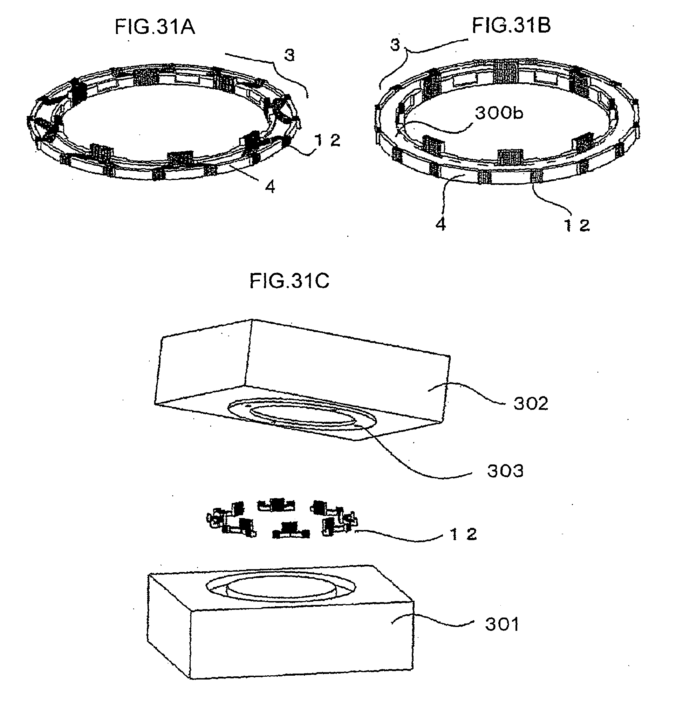

In the ninth embodiment, the holding plates 4 are each provided as an independent component, and are then assembled. In the 10th embodiment, however, a portion to constitute the holding plate is directly formed at a stator core constituted with a plurality of claw poles 12. FIG. 31A shows a half phase stator 3, similar to that shown in FIG. 24B. FIG. 31B shows a structure with a thin holding plate portion 300b covering the coil installation surfaces of the plurality of claw poles 12. FIG. 31C illustrates how a stator core assuming such a structure may be formed. FIG. 31C schematically illustrates a die. A lower die 301 to be used as a base includes a holding portion with which the claw poles 12 of the half phase stator 3 can be accurately positioned along the circumferential direction. The required number of claw poles 12 (eight claw poles are disposed along the circumferential direction in this embodiment) are disposed along the circumferential direction and the claw poles set in place are clamped by using an upper die 302 that includes a gate (resin intake port) 303 formed thereat. The space formed inside the upper and lower dies assumes a shape matching the shape of the holding plate, and the plurality of claw poles 12 are set at specific positions in a space assuming the shape identical to that of the holding plates 4. After clamping the claw poles with the dies, a resin is poured through the intake port 303 so as to form a half phase stator through injection molding. As a result, a half phase stator 3 is formed as an integrated unit that includes the holding plate portion constituted of resin. By modifying the shape of the space formed between the dies, a half phase stator assuming the shape shown in FIG. 31B can be manufactured. This shape may be achieved by forming the holding plate portion constituted of metal through die casting, instead of the holding plate portion constituted of resin. In such a case, with a group of laminated cores held in dies similar to those described above, molten metal should be poured through the intake port so as to form a half phase stator for a single phase with its holding plate portion constituted of metal through die casting. The material that may be used in the die casting process may be an aluminum alloy, a zinc alloy or a copper alloy.

-11th Embodiment-

Next, another embodiment that may be adopted to obtain a phase stator 70 is described. The 11th embodiment is similar to the previous embodiments except for the specific features detailed below.

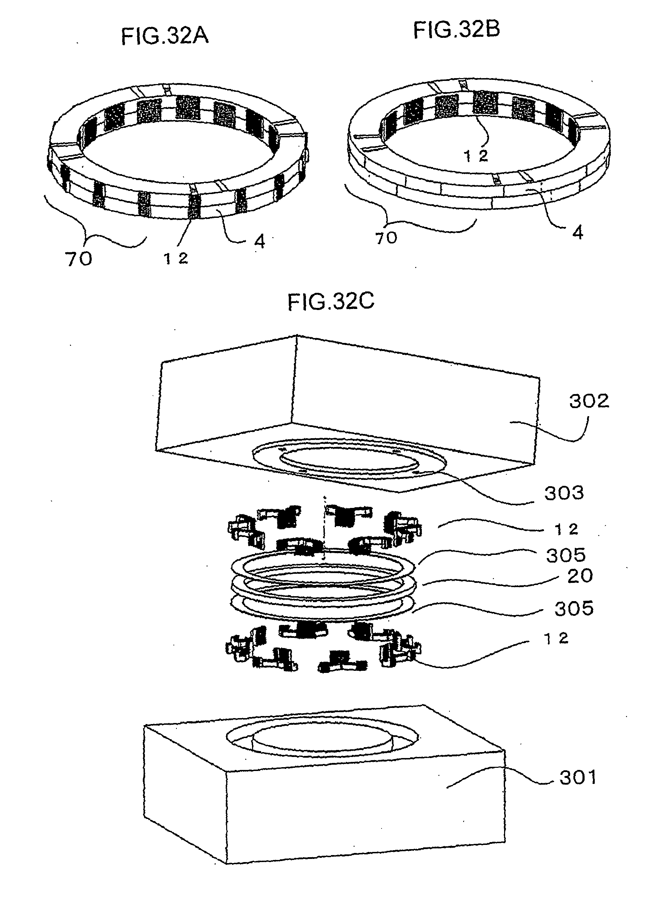

FIG. 32A shows a phase stator 70 assuming a shape similar to that shown in FIG. 24D. While a holding plate 4 is present around the plurality of claw poles 12 in the structure shown in FIG. 32B as in the structure shown in FIG. 32A, the holding plates 4 in FIG. 32B covers the outer circumferential-side surfaces of the claw poles 12. While a plurality of claw poles 12 are assembled on a holding plate 4 prepared in advance as a separate component in order to achieve the target shape, an integrated stator 70 is obtained by using injection molding dies in the embodiment, as in the 10th embodiment. FIG. 32C schematically illustrates how such an integrated stator may be manufactured.

A lower die 301 used as the base includes a holding portion with which a plurality of claw poles 12 to constitute the poles on one side can be positioned accurately along the circumferential direction. The necessary number of claw poles 12 (eight claw poles are disposed along the circumferential direction in the embodiment) are disposed along the circumferential direction, an annular coil 20 is disposed atop the positions of the claw poles ranging axially via an insulating sheet 305 constituted of a thin insulating film, and then a plurality of claw poles 12 to constitute the opposite poles are positioned and assembled via an insulating sheet 305. These components set in place are clamped by using an upper die 302 that includes a gate (resin intake port) 303 formed thereat. The space formed inside the upper and lower dies assumes a shape matching the shape of the holding plate, and the components such as the claw poles 12 and the coil 20 are set at specific positions in a space assuming the shape identical to that of the holding plates 4. After clamping the claw poles with the dies, a resin is poured through the intake port 303 so as to form a single phase stator 70 as an integrated unit that includes as an integrated part thereof the holding plates 4 constituted of resin. By modifying the shape of the space formed between the dies, a phase stator assuming the shape shown in FIG. 32B can be manufactured. Through this method, the plurality of claw poles 12 and the coil 20 are locked onto the holding plates 4 without any gap formed between them, assuring improved strength, thereby allowing the stator to better withstand vibrations and the like. In addition, since the components are positioned as they are firmly held in the dies, the positional accuracy improves as well.

Among those listed in the description of the 10th embodiment as materials that may be used to form the holding plates 4, the metal die casting materials cannot be utilized in the method achieved in the embodiment, since the insulating film on the coil 20, which is cast together as an integrated part, would become damaged by the heat during the forming process. However, the method achieved in the embodiment may be adopted in conjunction with resin materials such as LCP (liquid crystal polymer), PPS (polyphenylene sulfide resin), PBT (polybutylene terephthalate resin), PET (polyethylene resin), nylon® reinforced with glass fiber and PC (polycarbonate resin). Carbon fiber-reinforced resin and thermosetting resins such as epoxy resin and unsaturated polyester resin are also options that may be considered. It is desirable to select the optimal material in conformance to specific conditions set based upon the thermal and mechanical strength requirements of the particular motor or generator.

-12th Embodiment-

Next, a method that may be adopted in order to improve the characteristics of a motor embodying the present invention is described. The 12th embodiment is similar to the previous embodiments except for the specific features detailed below.

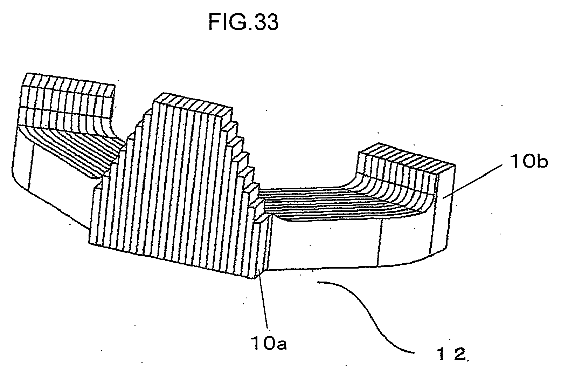

The claw poles at a claw pole motor normally assume a crested shape tapering toward the claw front end. Such a shape may be formed by punching individual metal sheets or individual groups of sheets in different shapes and layering them one on top of another. FIG. 33 shows a claw pole formed through such a method. Blanks 121 such as that shown in FIG. 23A are obtained through punching by adjusting the height measured along the axial direction over the area corresponding to the claw portion of the claw pole 12 in correspondence to each blank, and then the blanks are layered to form a laminated assembly. The taper angle at the claw pole 12 achieving the shape shown in FIG. 33 is determined in relation to the number of poles.

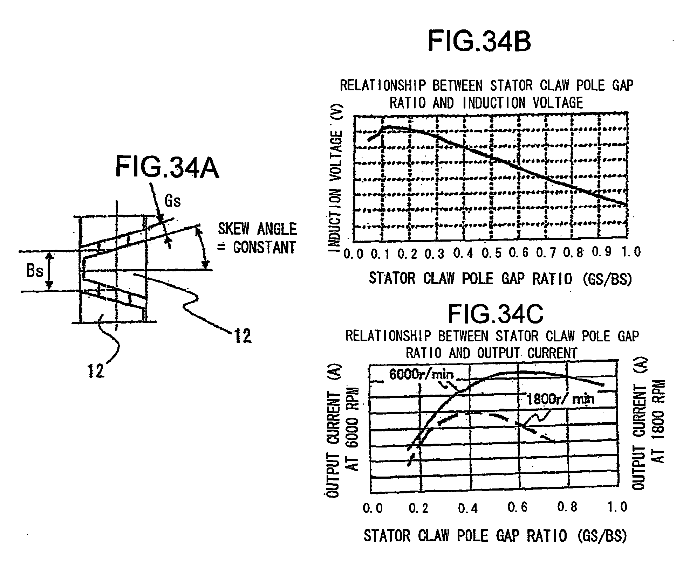

FIG. 34A shows the claw projected onto a flat surface. FIG. 34B presents a graph of the induction voltage representing one aspect of the primary motor characteristics, observed by adjusting the ratio of the measurement of the claw pole gap Gs formed between the claw poles set next to each other to the average claw width Bs with a constant claw skew (taper) angle. In the graph, the ratio Gs/Bs is indicated along the horizontal axis and the induction voltage is indicated along the vertical axis. The graph indicates that the induction voltage peaks when the ratio Gs/Bs is 0.1, and subsequently, the induction voltage gradually decreases as Gs/Bs increases. FIG. 34C shows the relationship between the ratio Gs/Bs and the output current, with Gs/Bs indicated along the horizontal axis and the output current indicated along the vertical axis. When the rotor rotates at 6000 rpm, the output current peaks with the ratio Gs/Bs at 0.6, whereas when the rotor rotates at 1800 rpm, the output current peaks with the ratio Gs/Bs at 0.4.

Since the output current is affected by the inductance, the relationship between the inductance and the stator claw pole gap ratio (Gs/Bs) too, needs to be examined. With L representing the inductance (H) at the stator coil in a given phase stator and S representing the area (mm$^2$) over which the magnetic poles face opposite each other, the relationship between the inductance and the stator claw pole gap ratio (Gs/Bs) may be expressed as in (1) below. Expression (1) indicates that the inductance increases as the stator claw pole gap ratio (Gs/Bs) becomes smaller.

$$L \propto \frac{S}{Gs} \quad \ldots (1)$$

With I representing the output current (A) corresponding to a given phase, $E_0$ representing the no-load induction voltage (V) in correspondence to the given phase, Vb representing the battery voltage (V), (R) representing the stator coil resistance (Q) corresponding to the phase and $\omega$ representing the angular velocity (rad/s) of the rotor, the output current corresponding to the given phase is expressed as in (2) below. Expression (2) indicates that the output current corresponding to a single phase is in reverse proportion to the product of the inductance and the angular velocity. Since the relationship between the stator claw pole gap Gs with which the stator claw poles are set and the output current is affected by the rotation rate at the rotor, the relationship needs to be examined in correspondence to two different conditions, i.e., when the rotor is rotating at high speed and when the rotor is rotating at low speed.

$$I \propto \frac{E_0 - Vb}{\sqrt{R^2 + \omega^2 L^2}} \quad \ldots (2)$$

FIG. 34 (C) shows the relationships between the stator claw pole gap ratio (Gs/Bs) and the output current; one observed while the rotor rotates at 6000 rpm and the other observed as the rotor rotates at 1800 rpm. FIG. 34C indicates that the optimal stator claw pole gap ratio (Gs/Bs) at which satisfactory performance is achieved in both rotation rate ranges, is 0.2 ~ 0.8.

With the optimal range indicated in FIG. 34B and the optimal range indicated in FIG. 34C both taken into consideration, it can be surmised that a significant voltage can be induced by setting the stator claw pole gap ratio (Gs/Bs) to 0.1 through 0.3 while assuring well-balanced output currents regardless of the rotation rate range of the rotor. The most desirable characteristics are achieved by setting the stator claw pole gap ratio (Gs/Bs) approximately to 0.2.

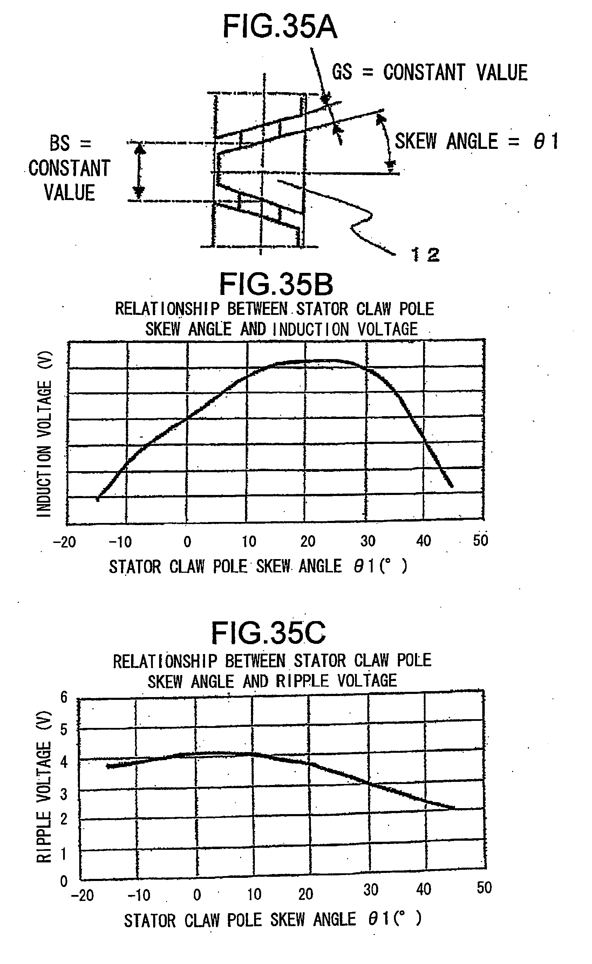

FIG. 35A shows a stator claw pole. FIG. 35B presents a graph indicating the relationship between the skew angle assumed at the stator claw poles and the induction voltage. FIG. 35C presents a graph indicating the relationship between the stator claw pole skew angle and the ripple voltage.

As indicated in FIG. 35B, the skew angle θ1 assumed at the stator claw poles 12 of the stator 70 affects the level of output induction voltage. It is to be noted that the graph presented in FIG. 35B was plotted by setting the width Bs of the stator claw poles 12 measured along the circumferential direction and the gap Gs between the stator claw poles to constant values without altering the rotor.

As indicated in FIG. 35B, a required level of induction voltage can be output by selecting a skew angle θ1 within a range of 0° ~ 38 ° for the stator claw poles 12. The induction voltage peaks with the skew angle θ1 set close to 25° and the induction voltage level becomes lower as the skew angle θ1 either increases or decreases relative to 25°. As FIG. 35B clearly indicates, a higher level of voltage can be induced by selecting an angle within a range of 15 through 28° for the skew angle θ1.

FIG. 35C indicates a tendency whereby once the skew angle θ1 at the stator claw poles 12 becomes equal to or greater than 10°, the ripple voltage starts to decrease.

In short, the required level of induction voltage can be output by setting the skew angle θ1 at the stator claw poles 12 in the range of 10 ~ 38° and it is particularly desirable to set the skew angle θ1 in the range of 10 ~ 28 in the embodiment.

-13th Embodiment-

Next, an embodiment of the present invention through which the cogging torque of a claw pole-type rotating electrical machine having claw poles formed therein is reduced is described. The 13th embodiment is similar to the previous embodiments except for the specific features detailed below.

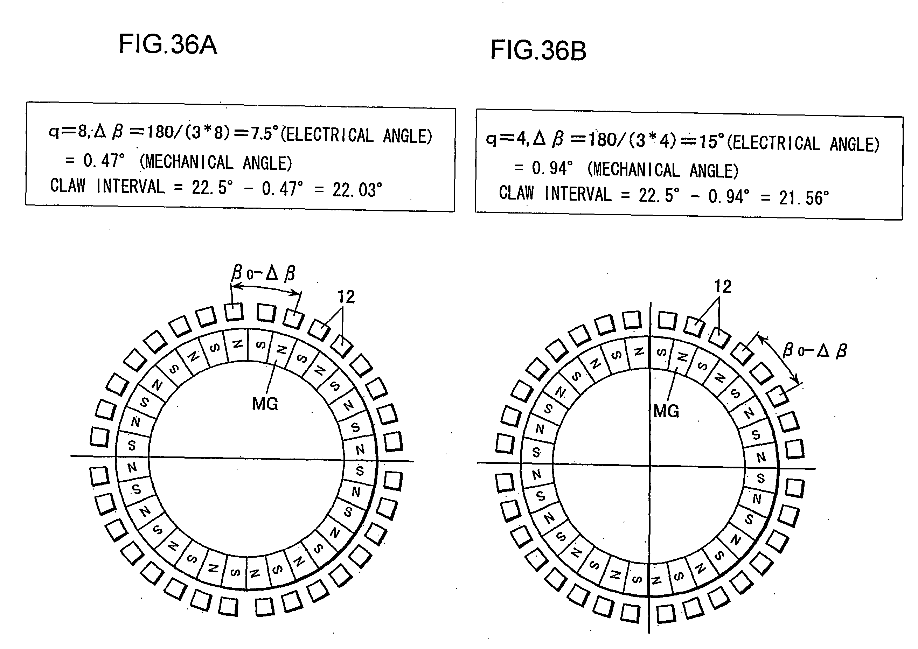

FIGS. 36A and 36B each presents an example of a positional arrangement with which claw poles 12 may he disposed in a 32-pole configuration in order to reduce the cogging torque. The cogging torque in a three-phase motor is largely accounted for by the cogging torque of the sixth-order component. The torque manifesting in correspondence to each phase of such a three-phase motor may be expressed as in (3) below.

$$T_m = \frac{2rLgB_n^2}{\mu_0} \sin n\alpha\pi \sum_{k=1}^{p} \sin 2np(\gamma + \beta_k) \quad \cdots (3)$$

(Tm: torque, r: void center radius, Lg: laminated assembly thickness, α: stator pole arc factor, p: number of pole pairs, γ: relative displacement factor, Bn: fundamental wave magnetic flux density wave height value, βk: angle of kth core)

Based upon expression (3), the cogging torques corresponding to the individual phases at the three-phase motor are determined as expressed in (4). Table 1 indicates the levels of higher harmonic components in the individual phases calculated by using expression (4).

$$
\begin{aligned}
T_{mUN} &= T_m \sin 2n\gamma_e & (U) \\
T_{mUS} &= T_m \sin 2n(\gamma_e + \varepsilon) & (\overline{U}) \\
T_{mVN} &= T_m \sin 2n(\gamma_e + 2\pi/3) & (V) \\
T_{mVS} &= T_m \sin 2n(\gamma_e + 2\pi/3 + \varepsilon) & (\overline{V}) \\
T_{mWN} &= T_m \sin 2n(\gamma_e - 2\pi/3) & (W) \\
T_{mWS} &= T_m \sin 2n(\gamma_e - 2\pi/3 - \varepsilon) & (\overline{W})
\end{aligned}
\quad \cdots (4)
$$

Table 1

| HIGHER HARMONIC COMPONENTS IN COGGING TORQUES CORRESPONDING TO INDIVIDUAL PHASES IN THREE-PHASE MOTOR | | | | |
|---|---|---|---|---|
| order n | 1 | 2 | 3 | 4 |
| $\overline{U}$ - phase | $\sin 2(\gamma_e)$ | $\sin 4(\gamma_e)$ | $\sin 6(\gamma_e)$ | $\sin 8(\gamma_e)$ |
| $\overline{U}$ - phase | $\sin 2(\gamma_e + \varepsilon)$ | $\sin 4(\gamma_e + \varepsilon)$ | $\sin 6(\gamma_e + \varepsilon)$ | $\sin 8(\gamma_e + \varepsilon)$ |
| $\overline{V}$ - phase | $\sin(2\gamma_e - 2\pi/3)$ | $\sin(4\gamma_e + 2\pi/3)$ | $\sin 6(\gamma_e)$ | $\sin(8\gamma_e - 27\pi/3)$ |

(continued)

| HIGHER HARMONIC COMPONENTS IN COGGING TORQUES CORRESPONDING TO INDIVIDUAL PHASES IN THREE-PHASE MOTOR | | | | |
|---|---|---|---|---|
| order n | 1 | 2 | 3 | 4 |
| $\overline{V}$ - phase | $\sin(2(\gamma_e + \varepsilon) - 2\pi/3)$ | $\sin(4(\gamma_e + \varepsilon) + 2\pi/3)$ | $\sin 6(\gamma_e + \varepsilon)$ | $\sin(8(\gamma_e + \varepsilon) - 2\pi/3)$ |
| $\overline{W}$ - phase | $\sin(2\gamma_e + 27\pi/3)$ | $\sin(4\gamma_e - 2\pi/3)$ | $\sin 6(\gamma_e)$ | $\sin(8\gamma_e + 2\pi/3)$ |
| $\overline{W}$ - phase | $\sin(2(\gamma_e + \varepsilon) + 2\pi/3)$ | $\sin(4(\gamma_e + \varepsilon) - 2\pi/3)$ | $\sin 6(\gamma_e + \varepsilon)$ | $\sin(8(\gamma_e + \varepsilon) + 2\pi/3)$ |
| $\Sigma$ | $=0$ | $=0$ | $\approx 6 \sin 6(\gamma_e)$ | $=0$ |

Table 1 indicates that no torque is generated when n = 1, 2 and 4 since the total of the higher harmonic components corresponding to the three phases is invariably zero, but a torque entirely constituted of the sixth-order cogging torque occurs when n = 3. For this reason, torque component occurring when n = 3 must be cleared to zero, i.e., the value calculated as expressed in (3) must be zero, in order to eliminate the cogging torque.
The value calculated as expressed in (3) may be set to zero by adopting either of the following two methods.

(a) Set $\sin(n\alpha n)$ to 0

Since this method requires $\alpha$ to be set to 1/n, the width of the magnetic poles is bound to be very small.

(b) Set the entire $\Sigma$ to 0

With d representing the number of groups, q = p/d vectors must be uniformly set within 2n in the method. Accordingly, assuming that $\beta_{k+1} - \beta_k = \beta_0 - \Delta\beta$, $\Delta\beta$ can be calculated as expressed in (5)

$$\Delta\beta = \frac{2\pi}{2nq} = \frac{\pi}{nq} \quad \ldots (5)$$

The angle $\Delta\beta$ at which the torque coefficient assumes the value 0 is referred to as a "vernier tooth pitch". Since there are 32 poles in the target machine, the tooth pitch will be calculated as $\beta_0 = 2n/16 = 22.5°$ under normal circumstances. FIGS. 36A and 36B respectively show the positional arrangements assuming the vernier tooth pitch in conjunction with a two-group configuration and a four-group configuration. Rotor magnets MG are disposed each on the inside of one of the claw poles 12 disposed along the circumferential direction. By setting the tooth pitch as shown in either FIG. 36A or 36B, the cogging torque can be theoretically reduced.

-14th Embodiment-

Another embodiment that may be adopted to reduce the cogging torque is now described. The 14th embodiment is similar to the previous embodiments except for the specific features detailed below.

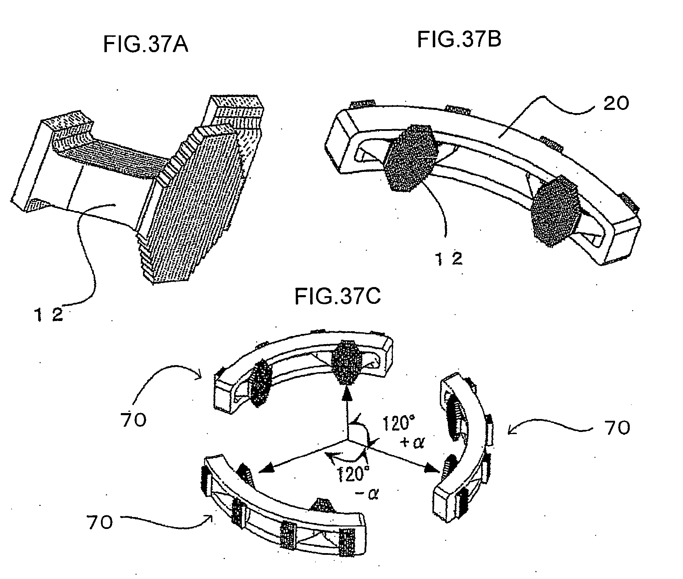

FIG. 37A shows a claw pole 12 constituted with a laminated core. The shape of the claw pole 12 in FIG. 37A is identical to that of an integrated unit formed by combining the laminated assemblies shown in FIG. 23E, disposed symmetrically to each other along the axial direction. A set of claw poles formed as shown in FIG. 37A is disposed on the circumference, as illustrated in FIG. 37B, and an annular coil 20 is disposed so as to surround the set of claw poles 12. In the example presented in FIG. 37B, the coil is set around two claw poles 12. The claw poles (not shown) to constitute opposite poles to the two claw poles 12 are then disposed over the two claw poles 12 along the axial direction, and a single phase stator 70 is thus formed.
FIG. 37C shows the overall stator. By disposing three phase stators 70 (including the claw poles assuming the opposite polarity) one of which is shown in FIG. 37B, along the circumferential direction, the stator for a three-phase rotating electrical machine is formed. The three phase stators must achieve a positional relationship in which they are disposed with an angular offset of $\alpha$ (by an electrical angle of 120°) relative to the uniform positional arrangement with which they are set over 120° intervals along the circumferential direction, as shown in the figure. The angle $\alpha$ is determined in correspondence to the number of poles at the rotor and if there are 16 poles at the rotor, for instance, the angle $\alpha$ should be 15° of mechanical angle as explained earlier. While the structure achieved in the embodiment includes three coils, the number of coils included in the stator may be other than three, as long as it is a multiple of three, e.g., six coils or nine coils, depending upon the number of claw poles. In a six-coil structure, the cogging torque can be reduced by disposing three-piece assemblies with a 30° electrical angle offset. In addition, since a three-phase rotating electrical machine can be formed by adopting this structure with a stator adopting a two-stage structure (two stages including the claw poles with the opposite polarity) along the axial direction, the three-phase electrical machine can be achieved as a low-profile unit:

-15th Embodiment-

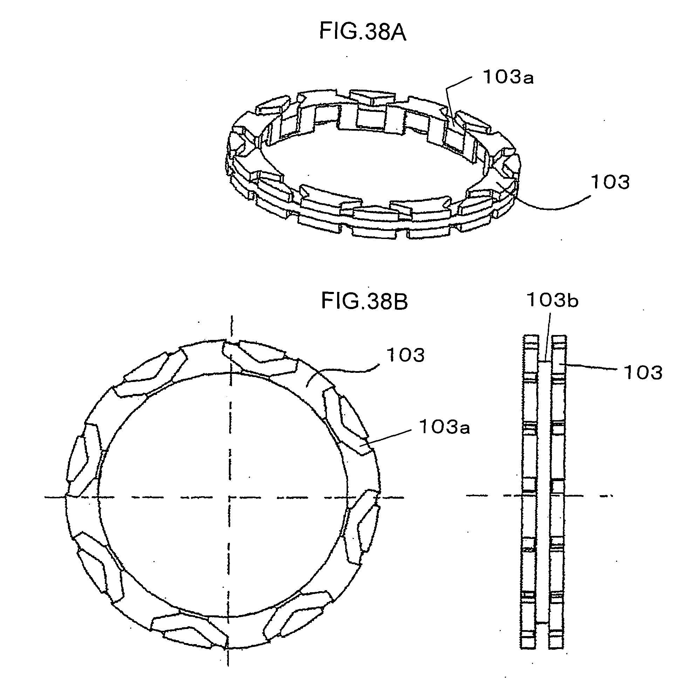

FIGS. 38A through 38C illustrate an embodiment achieved by adjusting the relationship among the holding plate, the group of laminated cores and the coil. The 15th embodiment is similar to the previous embodiments except for the specific features detailed below.

FIG. 38A is a perspective of a coil bobbin 103, which functions as a holding plate to hold the coil. FIG. 38B presents a front view and a side elevation of the coil bobbin 103. As does the holding plates 4 shown in FIGS. 30A through 30C, the coil bobbin 103 includes grooves 103a at which the claw poles 12 are held. The grooves 103a used to hold the claw poles 12 are formed both at the front surface and at the rear surface of the coil bobbin 103. In addition, the grooves 103a formed at the front surface to hold the claw poles 12 and the grooves 103a formed at the rear surface to hold the claw poles 12 are offset relative to each other by a predetermined angle along the circumferential direction. The bobbin also includes a groove 103b through which an annular winding is wound.

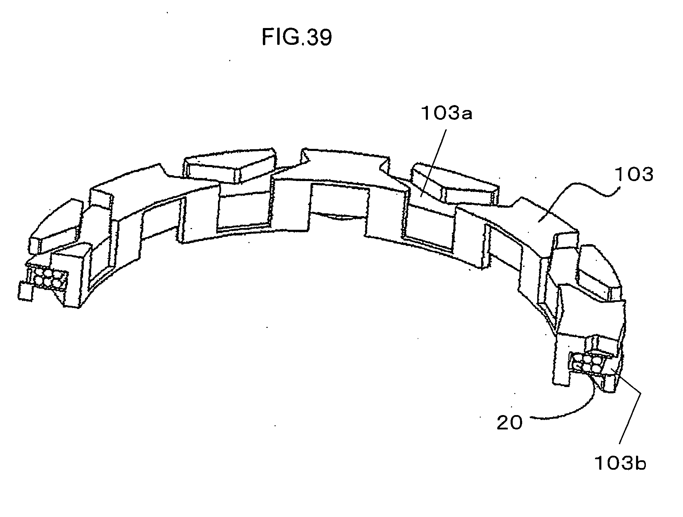

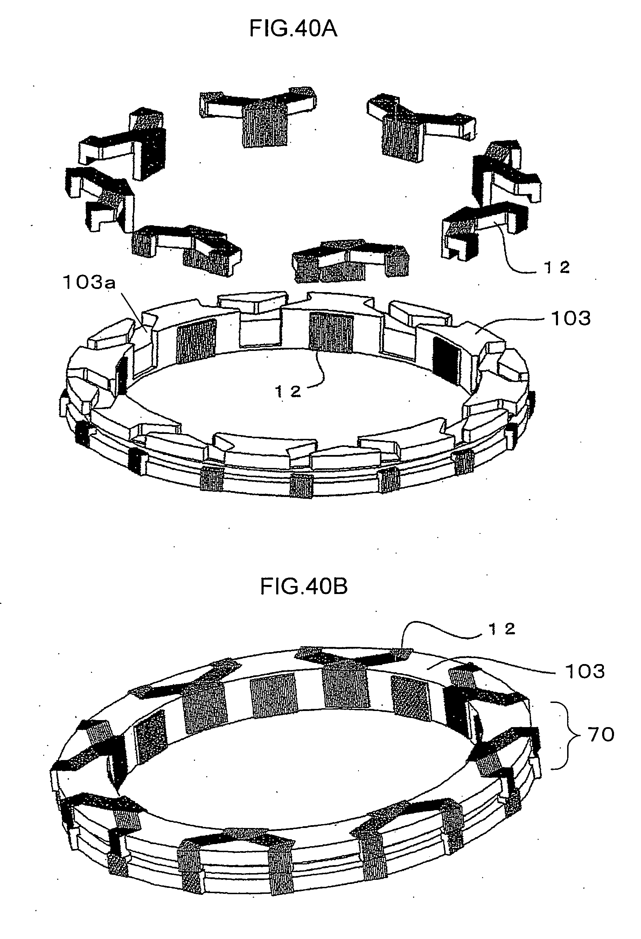

FIG. 39 shows the coil bobbin 103 in a sectional view, so as to better show the annular coil 20 wound around the bobbin. Inside the groove 103b, the annular coil 20 achieved by winding a conductor with a round section six times is installed. FIG. 40A shows how the coil bobbin 103 is combined with the claw poles 12. The claw poles 12 are each set in one of the plurality of grooves 103a formed at the coil bobbin 103 and, as a result, the individual claw poles 12 are held along the circumference. FIG. 40B shows the assembled unit. The assembled unit ultimately obtained as described above is a single phase stator 70 similar to that shown in FIG. 24D. By adopting the embodiment, the coil can be held with ease and the coil can also be insulated from the stator core with ease.

-16th Embodiment-

A specific manufacturing method that may be adopted to manufacture groups of laminated cores to constitute claw poles is now described in reference to the 16th embodiment. The 16th embodiment is similar to the previous embodiments except for the specific features detailed below.

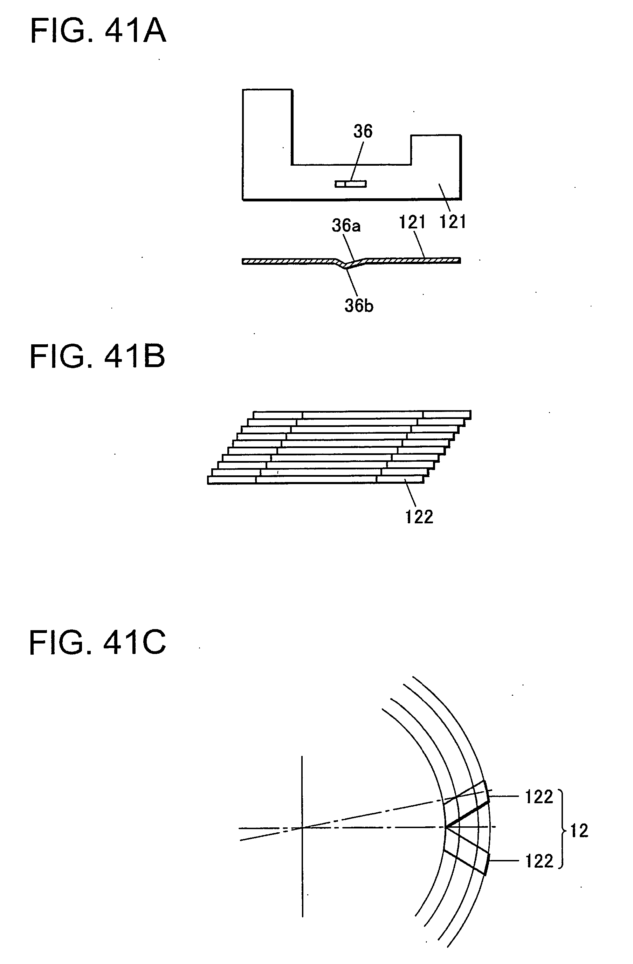

FIGS. 41A and 41B present an example of a structure that may be adopted to obtain groups of laminated assemblies with ease. FIG. 41A shows a blank 121 to be used to form a core, similar to that shown in FIG. 23A, in a plan view and a sectional view. Over a central area 36 of the blank 121, a half blank groove 36a/projection 36b, to be used for purposes of caulking, is formed, as shown in the sectional view. FIG. 41B shows an assembly formed by layering such blanks 121 with an offset. In the layered state, the projection 36b at an upper blank 121 located on the upper side in the figure is fitted inside the groove 36a at the lower blank 121 and is caulked. The presence of the groove 36a/ projection 36b in FIG. 41A allows blanks 121 to be layered even when they need to be slightly offset relative to each other along the horizontal direction as shown in FIG. 41B. In other words, a laminated assembly 122 such as that shown in FIG. 41B with the individual layers fixed firmly one layer upon another layer, can be obtained with ease through caulking.

FIG. 41C shows a claw pole 12 constituted with a pair of laminated assemblies 122 disposed along the circumferential direction, viewed from the axial direction. In this example, a pair of laminated assemblies 122 constitutes a single claw pole 12. The laminated assembly 122 substantially assumes the shape of a parallelogram in a plan view. Thus, when the two laminated assemblies are set as shown in FIG. 41C, the resulting claw pole 12 achieves a shape substantially identical to that of the claw pole 12 shown in FIGS. 23E and 23F. However, the shape is achieved without requiring a bending process such as that having been expressed in reference to FIGS. 23C and 23D. Namely, the claw poles in the embodiment can be formed with ease by using laminated assemblies formed as shown in FIG. 41B.

-17th Embodiment-

Other methods that may be adopted to obtain claw poles are now described. The 17th embodiment is similar to the previous embodiments except for the specific features detailed below.

The laminated core groups used to form the claw poles in the embodiment are each constituted with a core formed by layering sheets along the circumferential direction over the claw area.

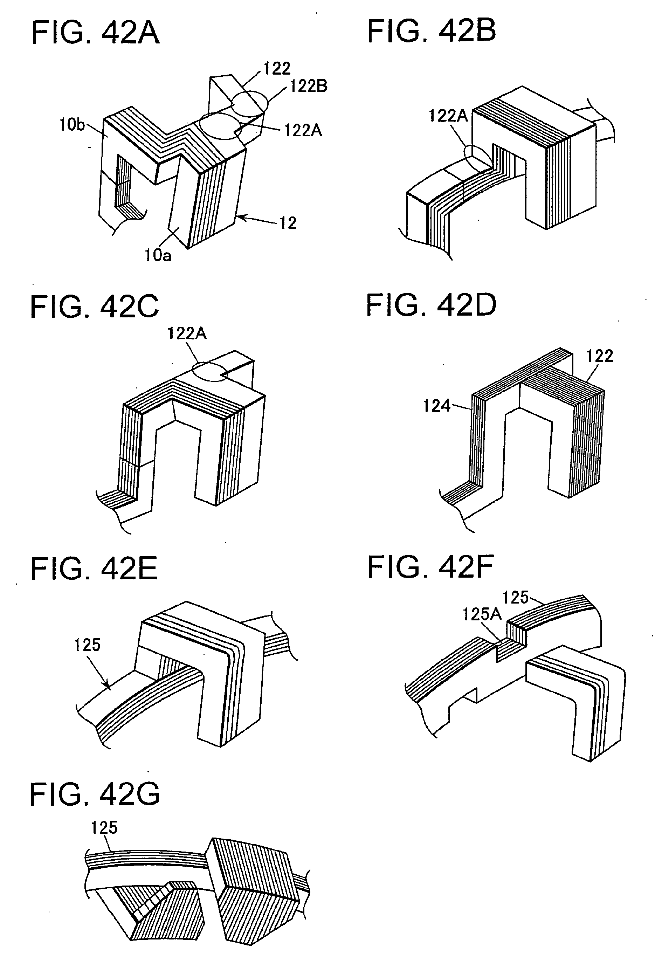

FIG. 42A shows an example in which a claw pole and a yoke are formed through right-angle bending instead of curved bending such as that shown in FIG. 23C. As a laminated assembly 122 is bent with a right angle at positions indicated by reference numeral 122A and 122B, a laminated assembly with a claw portion 10a and a yoke portion 10b formed therein is obtained. A claw pole 12 is then formed by bonding two such laminated assemblies at their claw portions 10a. In the example presented in FIG. 42B, too, a layered blank assembly is bent at a right angle to obtain a target laminated assembly. The example presented in FIG. 42B is characterized in that the direction along which the sheets are layered over the outer circumferential area of the yoke portion changes to extend along the axial direction through the bending process.

FIG. 42C presents an example of a variation of FIG. 42A in which the layered blank assembly is bent at a right angle at one position instead of two positions. In the example presented in FIG. 42D, which is a variation of FIG. 42C, the claw portion of the claw pole is constituted with an unbent laminated assembly 122. A circumferential portion 124, to constitute the yoke, is formed separately from the claw portion. While the structure shown in FIG. 42E is substantially identical in its shape to that shown in FIG. 42B, the claw portion and a yoke ring 125 are formed separately. FIGS. 42F and 42G each illustrate a structure in which the eddy current loss occurring as the magnetic flux originating from the claw portion flows into the ring portion is reduced by altering the layering direction at which the blanks are layered at the ring portion 125 in FIG. 42E, i.e., by switching the layering direction from the axial direction to the radial direction. In the example presented in FIG. 42F, the claw portion is inserted at a groove 125A formed at the ring portion 125. In the example presented in FIG. 42G, the claw portion is set in contact with a side surface (layered surface) of the ring portion 125 formed by layering blanks.

-18th Embodiment-

Methods that may be adopted to fix laminated core assemblies are now described in reference to the 18th embodiment. The 18th embodiment is similar to the previous embodiments except for the specific features detailed below.

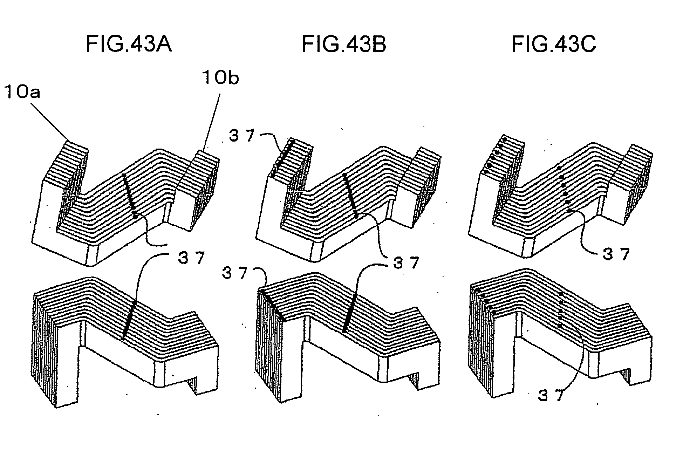

FIGS. 43A through 43C each show a method whereby laminated blanks are fixed together through welding. In the example presented in FIG. 43A, the laminated assembly is welded over its trunk area located between the claw portion 10a and the yoke portion 10b and facing opposite the coil. Magnetic fluxes originating from the rotor in a claw pole motor equipped with the claw poles in the embodiment flow in through the claw pole surfaces and, for this reason, welding the laminated assembly may result in an increase in the extent of loss such as the eddy current loss. This means that the laminated assembly needs to be welded at the optimal location. It is not advisable to weld the laminated assembly over the surface to face opposite the rotor, through which magnetic fluxes are to flow in. It is not advisable to weld the laminated assembly over the abutting surface at the yoke portion 10b, at which the laminated core assembly is to be abutted with another laminated core assembly to assume the opposite polarity. In other words, no significant problem should arise as long as the laminated assembly is welded at positions other than these. FIG. 43B presents an example in which the laminated assembly is welded over its trunk area, the front end of the claw portion 10a and the lower surface of the base area. By welding the laminated assembly at these positions, vibration of the rotating electrical machine, caused by the magnetic attraction it is bound to be subjected to at its magnetic flux inflow surfaces, is effectively prevented and thus no significant noise occurs. In the example presented in FIG. 43C, the laminated assembly is welded at positions similar to those shown in FIG. 43B. However, the welding positions are offset from one another at the front surface and the rear surface of each blank, so as to minimize the adverse effect of any eddy current that may occur.

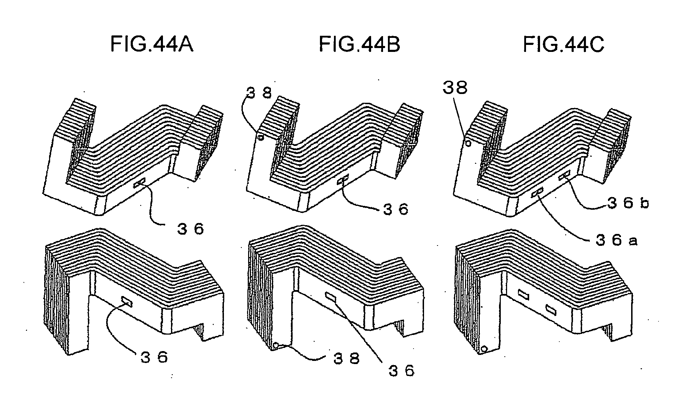

FIGS. 44A through 44C each present an example in which the laminated core assembly is fastened through caulking. In the example presented in FIG. 44A, a V caulk 36 is formed at the center of the core trunk. When the laminated core assembly is fastened at this position, hardly any increase in the eddy current occurs. FIG. 44B presents an example in which a caulk 38 is formed at the front end of the claw pole in order to reduce vibration and noise, based upon a rationale similar to that of the example presented in FIG. 43B. While there may be a concern that this structure may lead to a slight increase in the occurrence of eddy currents, countermeasures such as those shown in FIG. 44C against eddy currents may be taken to reduce eddy currents, e.g., by caulking every other blank over the trunk area.

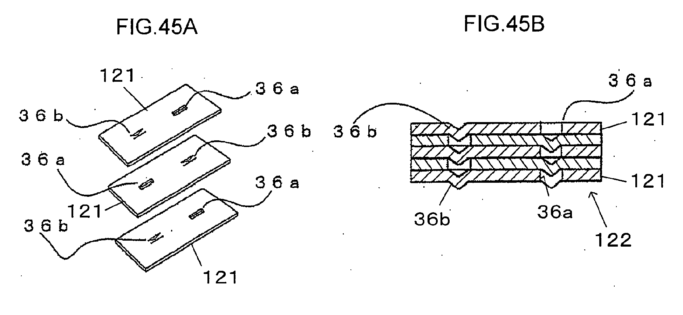

FIGS. 45A and 45B illustrate a method that may be adopted when connecting caulks at every other blank. FIG. 45A is a perspective illustrating the principle of the method. Blanks 121, each having a groove 36a and a projection 36b formed therein at specific positions, are disposed so that the grooves 36a and the projections 36b are set alternately to each other along the layering direction to allow a projection to be fitted in a groove at each connecting area. FIG. 45B shows the caulking areas in a sectional view. The blanks are alternately connected through the caulking portions on the left-hand side in the figure (the first and second blanks, the third and fourth blanks, starting from the top) and through the caulking portions on the right-hand side in the figure (the second and third blanks, the fourth and fifth blanks starting from the top) in a reiterated pattern so that every other blank in the laminated assembly is connected on the same side.

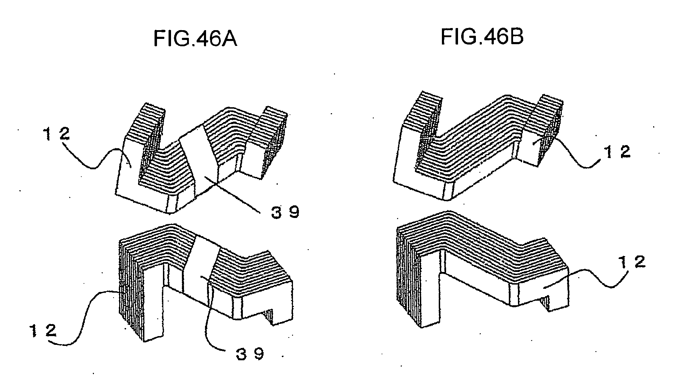

FIGS. 46A and 46B each show another fastening method. FIG. 46A shows a fastening method in which a laminated assembly is fastened together with a tape 39 or the like. As an alternative, the laminated assembly may be fastened together via an adhesive or the like, and in such a case, the external appearance of the fastened laminated assembly is no different from the appearance of the individual blanks layered one on top of another, as shown in FIG. 46B.

The thickness of the ferromagnetic material constituting electromagnetic steel sheets used to form the laminated core assemblies may be set to 0.2 mm ~ 0 .5 mm. In addition, while the use of even thinner electromagnetic steel sheets or the like will require a greater number of processing steps, a sheet thickness smaller than 0.2 mm ~ 0.5 mm is also acceptable. In some cases, an amorphous ribbon with a thickness of 0. 025 mm may be used as the material for the laminated core assemblies. In addition, while the laminated core assemblies achieving the desired shape may be formed through press-punching, they may instead be formed through a chemical method such as etching, or any alternative methods such as laser cutting or waterjet cutting. Aplurality of blanks formed through any of these methods are layered and fastened together, as shown in any of FIGS. 45A, 45B, 46A and 46B.

-19th Embodiment-

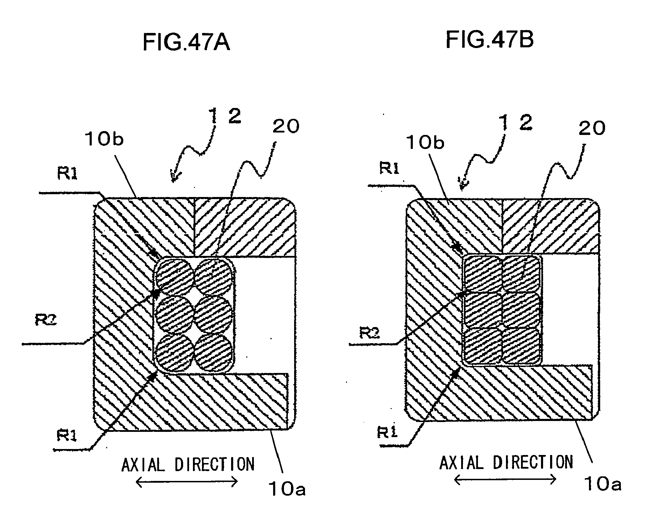

In reference to FIGS. 47A and 47B, the 19th embodiment of the present invention is described. The 19th embodiment is similar to the previous embodiments except for the specific features detailed below.

FIGS. 47A and 47B each present a sectional view of a stator achieved in the embodiment, taken over a side surface thereof, with FIG. 47A presenting one example and FIG. 47B presenting another example. It is to be noted that the same terms and reference numerals are assigned to components identical to those in the other embodiments.

In the example presented in FIG. 47B, the radius R1 of the inner-side surface of the claw pole 12, formed with blanks assuming a specific shape, i.e., the radius R1 at the surface of the claw pole located on the side on which the coil 20 is disposed, is set equal to or less than the radius R2 of the section of the annular coil 20 (stator coil). It is to be noted that R1 indicates the radius measured over the bent area of the blank, whereas R2 indicates the radius of the coil. The structure shown in FIG. 47B minimizes the gap formed between the claw pole 12 and the annular coil 20, so as to improve the space factor required for installation of the coil.

In the example presented in FIG. 47B, the annular coil 20 is constituted with a flat wire having a substantially rectangular section. While a flat wire is normally used in order to improve the space factor, i.e., in order to install the coil by efficiently utilizing the available installation space inside the stator core constituted with the laminated core assemblies, the space factor can be further improved by setting the radius R1 at the curved area of the coil placement surface equal to or less than the radius R2 at the curved corner of the flat wire as in the embodiment.

-20th Embodiment-

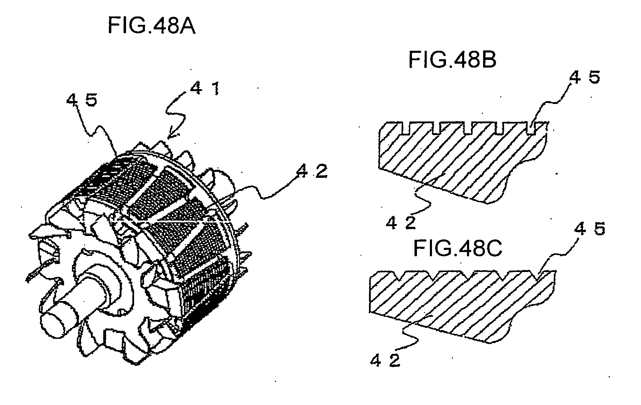

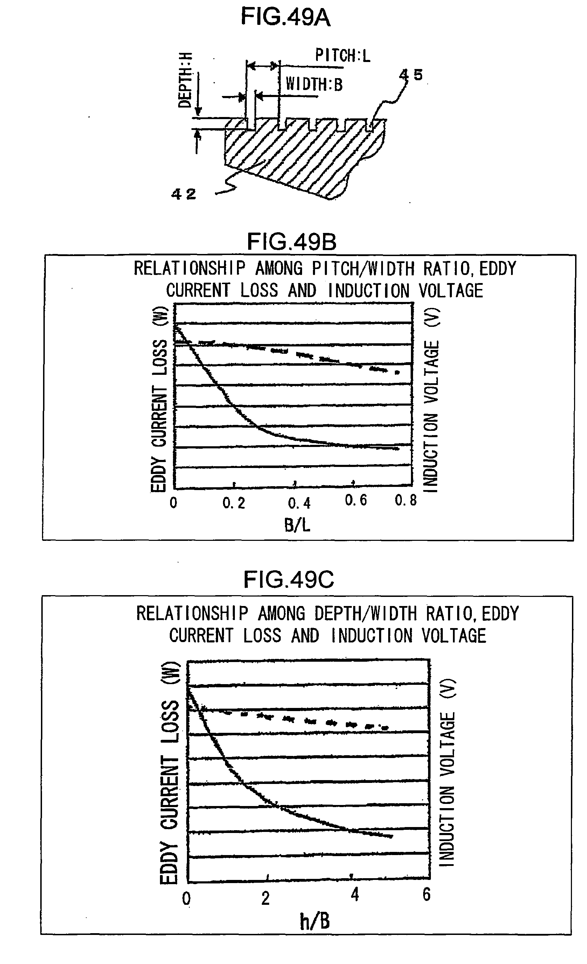

In reference to FIGS. 48A through 48C and 49A through 49C, the 20th embodiment of the present invention is described. The 20th embodiment is similar to the previous embodiments except for the specific features detailed below.

FIG. 48A is a perspective of a rotor 41 achieved in the embodiment. FIGS. 48B and 48C each illustrate a specific shape that may be adopted in grooves 45 formed at the outer circumferential surface of a rotor claw pole 42 in a sectional view of a claw pole at the rotor 41 taken along the axial direction. FIG. 49A illustrates the grooves 45 formed at the rotor claw pole 42. FIG. 49B presents a graph indicating the relationship of the groove pitch/width ratio to the eddy current loss and the induction voltage. FIG. 49C presents a graph indicating the relationship of the groove depth/width ratio to the eddy current loss and the induction voltage.

As explained earlier, while the occurrence of eddy currents at the stator core may be inhibited by layering blanks along the circumferential direction, eddy current also occur at rotor claw poles 42. Since the claws at the rotor 41 are constituted of a magnetic metal such as iron, eddy currents flow by circling around the outer surfaces of the rotor claw poles 42. In the embodiment, a plurality of grooves 45 extending along the circumferential direction are formed with substantially equal intervals along the axial direction at the outer surface of each rotor claw pole 42, as shown in FIG. 48A. The presence of the plurality of grooves 45 formed at the outer surface of the rotor claw pole as described above, increases the electrical resistance, which, in turn, inhibits flows of eddy currents.

The grooves 45 shown in FIG. 48B assume a substantially quadrangular section, whereas the grooves 45 shown in FIG. 48C assume a substantially triangular section. In other words, the section of the grooves 45 may assume any of various shapes.

Next, in reference to FIGS. 49A through 49C, the relationship of the groove depth, the groove width and the groove pitch to the eddy current loss and the induction voltage is explained. In FIG. 49A, h represents the groove depth, B represents the groove width and L represents the groove pitch. The relationship of the ratio B/L to the eddy current loss and the induction voltage is shown in FIG. 49B. As shown in FIG. 49B, the slope of the eddy current loss is shallower over a B/L range of approximately 0.2 and greater. In other words, the extent of the eddy current loss does not decrease drastically over this range. FIG. 49B also indicates that the level of the induction voltage decreases to a significant extent over a B/L range of approximately 0.3 and greater. In practical application, the B/L ratio should be set within a range of 0.1 through 0.6 to assure both a viable extent of eddy current loss and a viable level of induction voltage. It is even more desirable to set the B/L ratio to 0.2 through 0.3 in consideration of the factors discussed above.

FIG. 49C shows the relationship of the ratio h/B to the eddy current loss and the induction voltage. FIG. 49C indicates that the slope of the eddy current loss is less acute in an h/B range of 2 and greater. In other words, the extent of the decrease in the eddy current loss is less significant over this range. In addition, the induction voltage becomes lower as h/B assumes a greater value. In practical application, the h/B ratio should be set within a range of 2 through 5 to assure both a viable extent of eddy current loss and a viable level of induction voltage. It is even more desirable to set the h/B ratio to 2 through 3 in consideration of the factors discussed above.

-21st Embodiment-

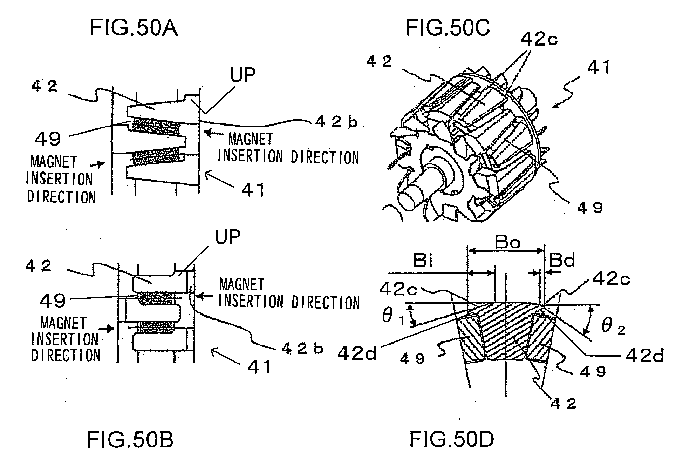

The 21st embodiment of the present invention is now described in reference to FIGS. 50A through 50D. The 21st embodiment is similar to the previous embodiments except for the specific features detailed below.

FIGS. 50A and 50B each illustrate a shape that may be assumed at the claw portion of the rotor 41 in the embodiment, with FIG. 50A presenting a first example and FIG. 50B presenting a second example. FIG. 50C is a perspective of the rotor 41 that includes the claws formed as shown in FIG. 50A. FIG. 50D is a sectional view of a rotor claw pole 42 in FIG. 50A. It is to be noted that the same terms and reference numerals are assigned to components identical to those in the other embodiments. The rotor claw pole 42 in the previous embodiments assume a tapered shape with the width thereof gradually reduced toward the front ends, so as to achieve symmetry along the circumferential direction. Since magnetic saturation occurs readily over a base portion at each rotor claw pole 42, a sectional area as large as possible should be assured over the base portion located at one and of the rotor claw pole 42 along the axial direction. However, if the base portion is widened on both sides, the gap between the adjacent rotor claw poles 42 become too narrow to allow a rotor magnet (permanent magnet) 49 to be inserted therein with ease. Accordingly, only the area of the base portion 42b at the rotor claw pole 42, ranging on the side opposite from the rotating direction, i.e., the area indicated by UP, is widened along the circumferential direction to forma sufficient area through which magnetic fluxes can pass with ease. By widening only one side of the base portion along the circumferential direction, it is ensured that the rotor magnet (permanent magnet) 49 can be inserted with ease from the side along the axial direction on which the width of the base portion is not increased.

It is to be noted that the technical concept of widening the base portion of the rotor claw pole 42 only on the side along the direction opposite from the rotating direction may also be adopted in a rotor 41 such as that shown in FIG. 50B with its rotor claw poles 42 formed so as to sustain a substantially uniform width along the axial direction. At the rotor assuming this structure, the rotor magnet (permanent magnet) 49 can be installed with ease while assuring a sufficient sectional area through which magnetic fluxes flow.

It is to be noted that if the individual phase stators constituting the stator are disposed along the rotational axis, balanced output characteristics may not be achieved at the individual phase stators. More specifically, the output from the phase stator disposed between the two phase stators disposed on the two sides tends to be lower than the outputs from the other phase stators. For this reason, the output from the phase stator located between the two end stators should be raised so as to assure uniform output characteristics are achieved by the individual phase stators. In the embodiment, permanent magnets are disposed near the center along the rotational axis of a randle-type rotor so as to boost the level of magneto-motive force with which magnetic fluxes to interlink with the stator coil of the middle phase stator are generated.

Furthermore, it is desirable to form a beveled area 42c at the two edges of each rotor claw pole 42 along the circumferential direction. FIGS. 50B and 50C show rotor claw poles 42 with beveled areas 42c formed therein. As these figures clearly indicate, the width Bi of the bevel located on the side along the direction opposite from the direction in which the rotor rotates, i.e., on the side where the base portion assumes a greater width, is set greater than the width Bd of the bevel located on the side along the direction in which the rotor rotates. Furthermore, the bevel angle $\theta1$ on the side opposite from the direction in which the rotor rotates is set smaller than the bevel angle $\theta2$ assumed on the side along the direction in which the rotor rotates at the rotor claw pole 42, as shown in FIG. 50B. It is to be noted that the ratio Bd/Bo with Bo representing the width of the rotor claw poles 42 measured along the circumferential direction should be set within a range of 0.03 through 0.3 and that the ratio Bi/Bo should be set within a range of 0.2 through 0.55. In addition, it is desirable to set the bevel angle $\theta1$ within a range of 6° ~ 25°, whereas the bevel angle $\theta2$ should be set in a range of 6° ~ 45°.

The presence of these beveled areas 42c assures a smoother magnetic fluctuation to manifest between the rotor claw poles 42 and the stator claw poles, which, in turn, allows the level of magnetic noise to be reduced. It is to be noted that since the bevel width on the side opposite from the direction along which the rotor rotates is increased in the embodiment, the magnetic noise can be reduced by averaging the magnetic flux density distribution at the rotor claw pole surfaces and thus disallowing any reduction in the output attributable to the magnetic flux loss. In addition, while displacement of the rotor magnets (permanent magnets) 49 along the radial direction is disallowed via collars 42d ranging on the sides of the rotor claw pole 42 at their edges along the circumferential direction, these collars 42d should assume a width of 0.8 ~ 4 mm along the circumferential direction in order to achieve the optimal balance assuring both a lowered extent of magnetic flux leakage through the rotor claws and maximized strength. In addition, the thickness of the collars measured along the radial direction should be set within a range of 0.8 ~ 3 mm in order to assure a satisfactory level of mechanical strength.

Any of the embodiments described above may be adopted in a rotating electrical machine such as a motor or a generator used in a wide range of applications including electrical power generation, industrial applications, home appliance applications and automotive applications. While it may be adopted in diverse applications as described above, the present invention may be specifically adopted large scale systems such as aerogenerators, vehicle drive applications, power generation rotating electrical machines and industrial rotating electrical machines, medium-size rotating electrical machine systems used in industrial applications and automotive auxiliary applications and small size rotating electrical systems used in home appliances and OA devices.

Rotating electrical machines such as a motor and a generator in diverse forms includes, such as induction motors, permanent magnet synchronous motors, DC commutator motors and various types of generators. Such a rotating electrical machine is usually constituted with a coil and a core and a rotational force is obtained via an electromagnet formed with the core as a current is supplied to the coil. A motor constituted with such a rotating electrical machine may be manufactured by forming its stator or rotor with a core constituted of a ferromagnetic material such as iron and leading a coil through grooves referred to as slots formed at the core. Under normal circumstances, a core is formed by layering one on top of another a plurality of thin metal sheets achieving a lesser extent of core loss, such as electromagnetic steel sheets, with the surfaces thereof coated with an insulating film, so as to inhibit the occurrence of eddy currents that would otherwise be induced as the magnetic fluxes at the coil or the magnets change. While motors normally need to assure high efficiency, motors adopting the structure described above achieve higher levels of efficiency by lowering the extents of copper loss and core loss. It is critical to minimize the coil resistance in order to control the copper loss, and the copper loss can be effectively reduced by increasing the ratio of the area occupied by the coil (conductor) within the core slots (space factor) and reducing the portion of the coil extending along the layering direction at the core, which is referred to as a coil end. Minimizing hysteresis loss and the eddy current loss at the metal sheets and the like is essential to effectively control core loss.

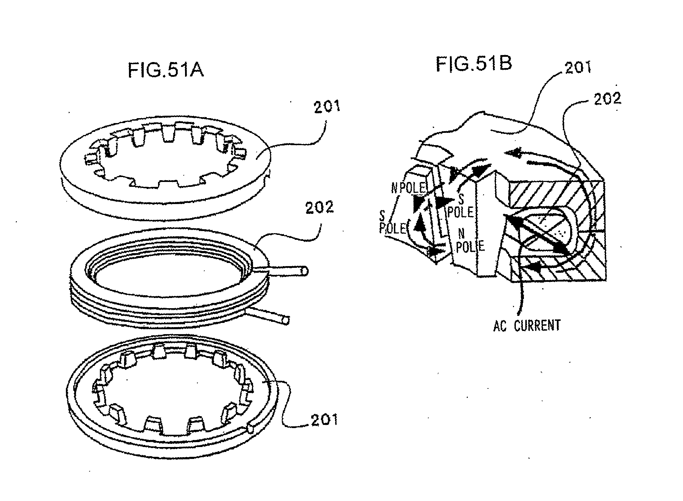

Miniaturization of the motor may be achieved through reduction of the copper loss and the core loss by adopting a structure that includes a core constituted with a compressed powder core achieving a high level of density and higher resistance characteristics, with which the presence of coil ends along the axial direction is eliminated and also the space factor is improved. A motor adopting such a structure with no coil ends present along the axis of the stator core, can be provided as a compact unit. FIGS. 51A and 51B illustrate the structure of the stator in such a motor. As shown in FIG. 51A, a stator corresponding to a given phase is formed by holding a coil 202 wound in an annular shape between stator cores 201 each having a plurality of claw poles formed along the circumferential direction. As an AC current (which assumes a different directionality) flows through the annular coil, a magnetic flux corresponding to the current direction is generated around the current, as shown in FIG. 51B, so as to magnetize the claw poles to render them electromagnets. This action is used to advantage in a claw pole motor that includes a stator constituted with claw pole cores, so as to form a three-dimensional magnetic flux flow in which magnetic fluxes circle around the coil as shown in the figure. While the claw poles in the claw pole motor are normally formed by bending metal sheets or the like, there is an issue yet to be addressed effectively with regard to the metal sheet configuration in that since eddy currents will be generated by magnetic fluxes flowing from the rotor side in the horizontal direction, the motor cannot be driven in a high-frequency range. Accordingly, a core is formed by using a compressed powder core, which does not generate any eddy current, so as to reduce eddy currents and achieve miniaturization of the motor. However, the use of a compressed powder core brings about its own rather significant problems.

One of the issues is that a large motor cannot easily be manufactured by using compressed powder cores. A compressed powder core is manufactured by compressing iron powder coated with an insulating film at very high pressure. The pressure required to compact iron powder is extremely high, e.g., 1 GPa to manufacture a molding with the density of 7.4 Mg/m$^3$ and the iron powder must be compacted at the pressure equivalent to 1000 tons in order to obtain a molding with an area of approximately 100 cm$^2$. In other words, it is difficult to manufacture a large core using iron powder.

In addition, there is a concern that the process described above may result in a very low strength molding. A molding formed by compressing iron powder achieves a bending stress strength of, at best, 150 MPa. Since the core strength alone does not achieve the required level of strength for a motor, reinforcement measures such as packaging must be taken.

There is another concern that compressed powder cores, which tend to rust readily, are not ideal in applications such as automotive applications, in which they will be subjected to extreme conditions, including exposure to saltwater, contaminated water and the like.

The motor structure described above imposes certain restrictions on the design, since the coil inductance is bound to be significant. Namely, since the entire coil is covered with a magnetic material, the inductance is bound to be very significant. As the inductance increases, the current/voltage phase difference also increases, lowering the power factor representing the primary characteristics of the motor or generator. In addition, the increase in the inductance increases the electrical time constant, giving rise to characteristics-related problems, e.g., compromised controllability.

As has been described in reference to FIG. 15, compressed powder cores do not assure magnetic characteristics as good as those achieved by using electromagnetic steel sheets (e. g. , 50A1300 and 50A800 conforming to the JIS standard), cold-rolled steel sheets (SPCC), structural soft iron (S45C) and the like. As FIG. 15 indicates, the magnetic flux density measured at the compressed powder cores by applying a magnetic field thereto are lower compared to the magnetic flux density measured for cores constituted of other iron materials. A very large difference in the magnetic flux density is indicated along the horizontal axis, assuming a logarithmic scale. This means that more current needs to be input to a motor that includes a core constituted with a compressed powder core in order to achieve a given magnetic flux density. Thus, while it is more desirable to use an iron material to constitute a claw pole stator in a motor or a generator, a great deal of eddy current loss occurs relative to the extent of input decrease attributable to the magnetic characteristics over a high-frequency band in a motor or a generator equipped with a stator formed by bending a ferromagnetic material and, for this reason, an iron material is not normally used in motor or generator production.

In the embodiments described earlier, an efficient compact rotating electrical machine, i.e., a highly efficient and compact electrical motor or generator is provided by satisfying at least one of or all of the requirements described above, including the increase in the size of the claw pole motor, a higher level of strength, an improved environmental factor and the coil inductance reduction.

For instance, the stator cores in a claw pole motor may be formed by using a magnetic material assuring a high level of strength other than compressed powder cores. In such a claw pole-type motor, the presence of a magnetic material in the magnetic circuit is minimized. More specifically, the claw poles constituting the claw pole motor are formed by using metal sheets such as electromagnetic steel sheets, cold-rolled steel sheets, electromagnetic stainless steel sheets or the like.

In a stator core formed by bending metal sheets, which includes surfaces perpendicular to magnetic fluxes flowing in from the rotor side toward the stator side, eddy currents tend to occur. However, by layering or laminating the metal sheets along the circumferential direction parallel to the direction along which the magnetic fluxes from the rotor flow, the occurrence of eddy currents can be inhibited. The cores set next to each other along the circumferential direction remain uncoupled with each other either electrically or magnetically (they are formed by layering metal sheets with a nonmagnetic, nonconductive material inserted between them).

Each claw pole is constituted with two laminated assemblies and they are set so that the surfaces of the laminated assemblies used to form the claw pole facing toward the rotor, are abutted at the center of the claw poles or at a position further toward either side. In addition, the two laminated assemblies constituting the claw pole are each connected to one of the laminated assemblies constituting the claw pole at the next position, which is to assume the opposite polarity, over the outer area along the circumferential direction.

A coil formed by winding multiple times an annular conductor is disposed in the gap created between these laminated assemblies and the coil is clamped along the axis of the stator between the claw pole constituted with laminated assemblies and the claw pole set next to it, constituted with laminated assemblies and assuming the opposite polarity.

Each phase stator in the rotating electrical machine is configured by forming a plurality (eight magnetic claw pole pairs in this example) of pole pairs, each constituted with a claw pole formed with the laminated assemblies and a next claw pole assuming the opposite polarity, along the circumference of the coil. By disposing a plurality of such phase stators along the axial direction, a rotating electrical machine assuming multiple phases is formed. In this rotating electrical machine, the individual phase stators need to be disposed along the axial direction with an offset relative to one another. Namely, assuming the rotating electrical machine is a two-phase rotating electrical machine, the individual phase stators need to be disposed with an offset of a 90° electrical angle, i.e., by offsetting them by 1/4 of the mechanical angle per pole pair at the rotor.

In a three-phase rotating electrical machine the individual phase stators need to be disposed with an offset of a 120° electrical angle, i.e., by offsetting them by 1/3 of the mechanical angle per pole pair at the rotor. As an alternative, the individual phase stators may be disposed without an offset by instead disposing poles at the rotor side, formed in correspondence to the phase stators, with an angular arrangement that allows the rotating electrical machine to assume a plurality of phases as described above.

Next, a method that may be adopted to hold the laminated assemblies (claw poles) is described. Since the laminated assemblies must be accurately positioned on the circumference, the stator includes holding plates used to hold them firmly. The holding plates are each constituted of a nonmagnetic material and each include grooves or guide portions at which laminated assemblies each formed by layering metal sheets along the circumferential direction to constitute half a claw, are held. At such a holding plate, a plurality of laminated assemblies constituting the claw poles in the magnetic pole pairs, which are to assume either polarity, are disposed along the circumferential direction. Next, another holding plate holding a plurality of laminated assemblies constituting the claw poles to assume the opposite polarity, is set so as to face opposite the first holding plate, an annular coil disposed between the two holding plates is then firmly clamped by the two holding plates. The smallest unit (corresponding to a single phase) of a stator core is thus formed. As explained earlier, by disposing stator cores corresponding to individual phases formed as described above along the axial direction, a rotating electrical machine stator corresponding to a plurality of phases is manufactured. While the individual phase stators should be stacked with an offset of 120° electrical angle in a three-phase motor, the offset angle may need to deviate from the 120° electrical angle in order to reduce the cogging torque and the like. The holding plates should each include fitting portions such as projections and recesses, formed at a plurality of positions to be used to accurately position the plurality of phase stators stacked one on top of another along the axial direction. Such fitting portions can also be used as reference marks during the assembly process to improve the accuracy with which the phase stators are positioned relative to one another.

The present invention may be adopted in conjunction with any of various types of rotors that can be used in rotating electrical machines, including a surface magnet-type rotor, an embedded magnet rotor, a DC field-type randle rotor equipped with slip rings and brushes, a squirrel-cage rotor equipped with an inductor and a reluctance type rotor.

The present invention may be adopted in a wide range of systems in which rotating electrical machines are utilized. While it may be adopted in motors or generators utilized in diverse systems, the higher level of rust resistance characteristics, the improved mechanical strength and the reduction in inductance achieved through the invention, as explained above, makes it ideal in applications in on-vehicle generator systems.

As described above, since the core is constituted with separate blocks each corresponding to a pole pair, the coil needs to be covered with the magnetic material over a smaller area compared to the coil in a standard claw pole motor, making it possible to greatly reduce the coil inductance. In addition, since the overall structure is encased via the nonmagnetic holding plates that can be used as reinforcing members, a greater improvement in the stator strength is achieved compared with a structure in which the stator core is formed by using a magnetic molding such as a compressed powder core. Furthermore, the extent of core loss attributable to eddy currents is greatly reduced over a claw pole motor formed by bending metal sheets. Moreover, by forming the holding plates with a material having a high coefficient of thermal conductivity, the temperature at the motor can be held down and thus, the claw pole rotating electrical machine in the embodiment can be provided as a compact, highly efficient unit that does not easily overheat. Also, since it assures a sufficient level of strength, it can be distributed as a highly reliable product.

Namely, a rotating electrical machine that includes a stator adopting the structural features described above can be provided as a compact, highly efficient unit that assures better reliability than those in the related art. In addition, since a large rotating electrical machine can be manufactured without having to use a large press, the issues discussed earlier are successfully addressed.

-22nd Embodiment-

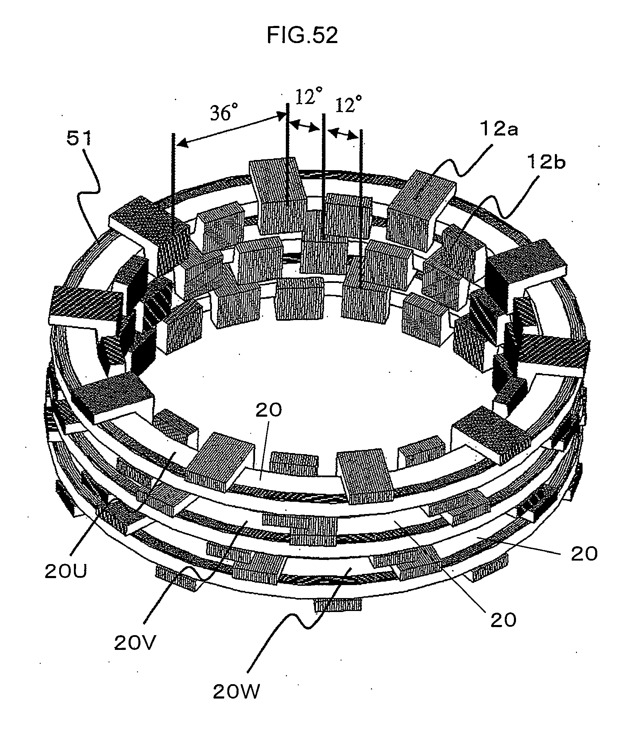

FIG. 52 shows a positional arrangement adopted for the stator cores in the claw pole rotating electrical machine achieved in the 22nd embodiment. As shown in FIG. 52, the stator cores in the claw pole motor are each constituted with iron sheets layered one on top of another.

In the structure achieved in the embodiment, the magnetic material has only the absolute minimum presence in the magnetic circuit. More specifically, claw poles 12a and 12b constituting the claw pole motor are formed by using laminated metal sheets such as electromagnetic steel sheets, cold-rolled steel sheets or electromagnetic stainless steel sheets. The metal sheets are layered one on top of another along a specific direction so that they range parallel to the direction in which magnetic fluxes originating from the rotor flow in. Namely, the magnetic poles are formed by layering metal sheets, i.e., magnetic sheets, along the circumference of the stator. The metal sheets set next to each other along the circumferential direction remain uncoupled with each other either electrically or magnetically (they are formed by layering metal sheets with a nonmagnetic and nonconductive material inserted between them). The claw poles 12a and 12b are constituted with laminated assemblies. The laminated assembly constituting a given claw pole should be set so as to face opposite the laminated assembly used to form the next claw pole, which is to assume the opposite polarity along the axial direction over the outer area along the circumference.

A yoke portion 51 formed in a ring shape is disposed in the gap created between each pair of laminated assemblies (claw poles 12a and 12b) forming the two poles along the axial direction. The ring-shaped yoke portion 51 is formed by layering metal sheets along the radial direction. In the gaps enclosed by the laminated assemblies to assume two polarities (claw poles 12a and 12b) and the ring-shaped yoke portion 51, a coil 20 formed by winding amultiple times an annular conductor is disposed. The coil 20 is held firmly along the axis of the stator between the claw poles 12a each constituted with a laminated assembly and the claw poles 12b each constituted with a laminated assembly and set next to the claw pole 12a to assume the opposite polarity.

Each phase stator in the rotating electrical machine is configured by forming a plurality (ten magnetic claw pole pairs in this example) of pole pairs, each pair made up with a claw pole 12a formed with a laminated assembly and a claw pole 12b to assume the opposite polarity, along the circumferences of the coil 20 and the annular yoke portion 51. By disposing a plurality of such phase stators along the axial direction, a rotating electrical machine assuming multiple phases is formed. In the example presented in FIG. 52, three phase stators 20U, 20V and 20W are disposed along the axial direction so as to form a three-phase rotating electrical machine. In this three-phase rotating electrical machine, the individual phase stators need to be disposed along the axial direction with an offset relative to one another by a 120° electrical angle, i. e. , by offsetting them by one third of the mechanical angle per pole pair at the rotor. In the example presented in FIG. 52 with each phase stator having 20 poles (ten pole pairs), the offset of the 120° electrical angle is equivalent to an offset of 12° mechanical angle since the 360° electrical angle is equivalent to the 36° mechanical angle.

Although not shown, if the rotating electrical machine is a two-phase rotating electrical machine, the individual phase stators need to be disposed with an offset relative to each other of a 90° electrical angle, i.e. by offsetting them by 1/4 of the mechanical angle corresponding to each pole pair at the rotor. As an alternative, the individual phase stators may be disposed without an offset by instead disposing poles at the rotor side, formed in correspondence to the phase stators, with an angular arrangement that allows the rotating electrical machine to assume a plurality of phases as described above.

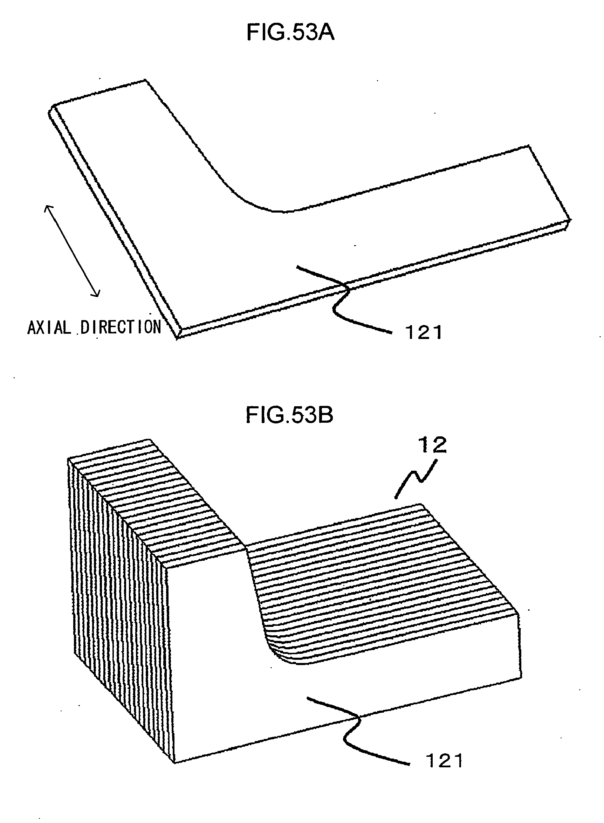

FIGS. 53A and 53B show in detail the structure of a laminated assembly used to form a claw pole 12a or 12b in the embodiment. FIG. 53A shows a metal sheet blank 121 used to form the laminated assembly to constitute a claw pole 12. The width of the claw portion located on the left-hand side in the figure, smallest at the front end, gradually increases toward the base along the axial direction and the claw portion achieves a curved shape at the base, since the sectional area at the base must be set greater than the sectional area at the front end to accommodate the magnetic flux flowing in from the rotor side of the claw pole and traveling toward the base. FIG. 53B shows a laminated assembly formed by layering or laminating a plurality of blanks 121, one of which is shown in FIG. 53A. The assembly is formed by layering, one on top of another, blanks 121 formed in identical shapes. This laminated assembly forms a single claw pole 12.

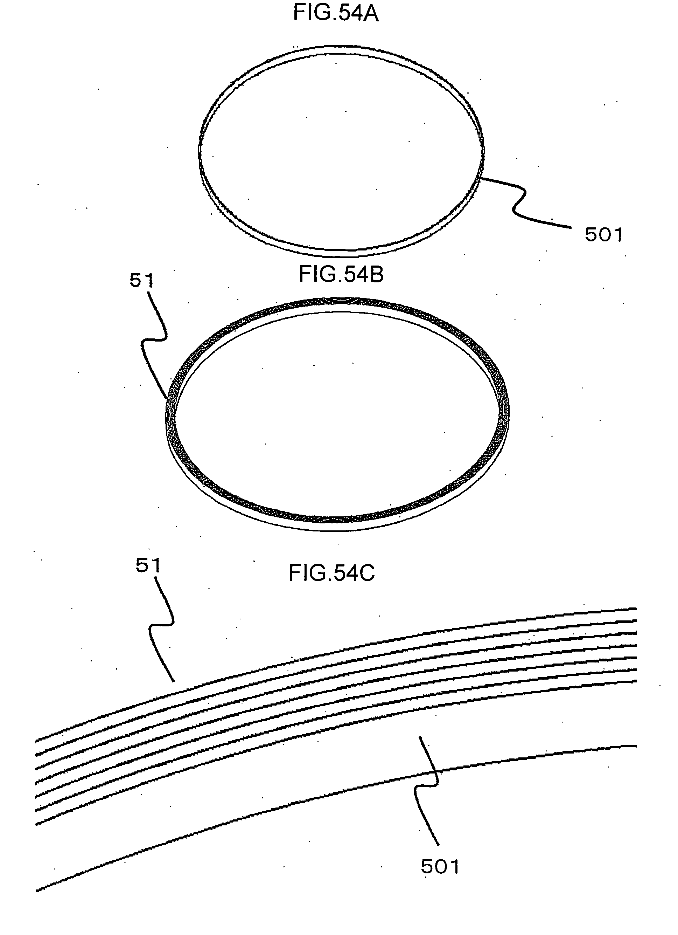

FIGS. 54A through 54C show in detail the structure of the ring-shaped yoke portion 51. FIG. 54A shows a metal sheet 501 used to form the ring-shaped yoke portion 51. The metal sheet 501 is constituted with a rectangular metal sheet rolled into a ring shape. FIG. 54B shows a laminated assembly formed by layering a plurality of metal sheets similar in shape to the metal sheet 501 shown in FIG. 54A. The metal sheets are layered along the direction along which the radius of the ring shape extends. FIG. 54C shows the layered structure in an enlarged view. The yoke portion 51 is constituted with this laminated assembly.

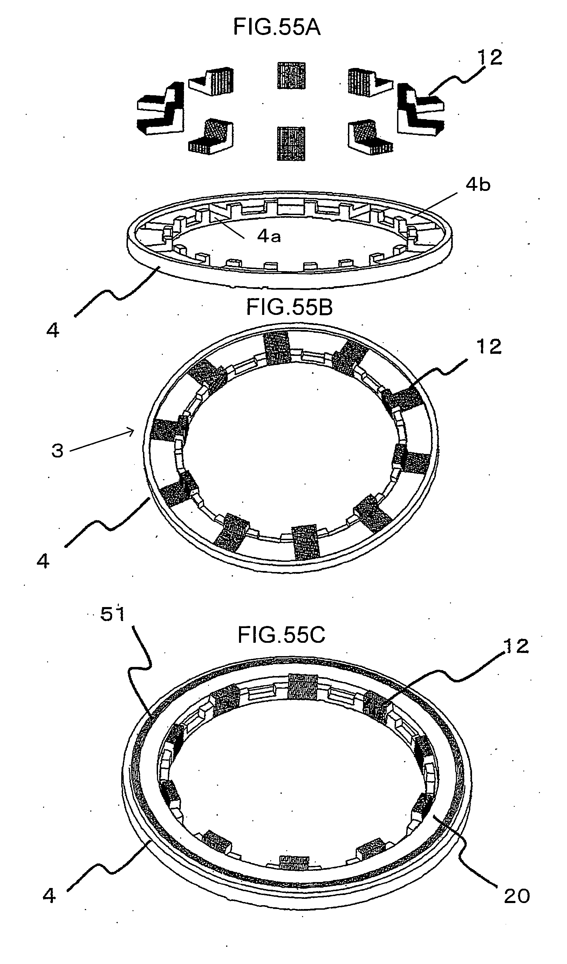

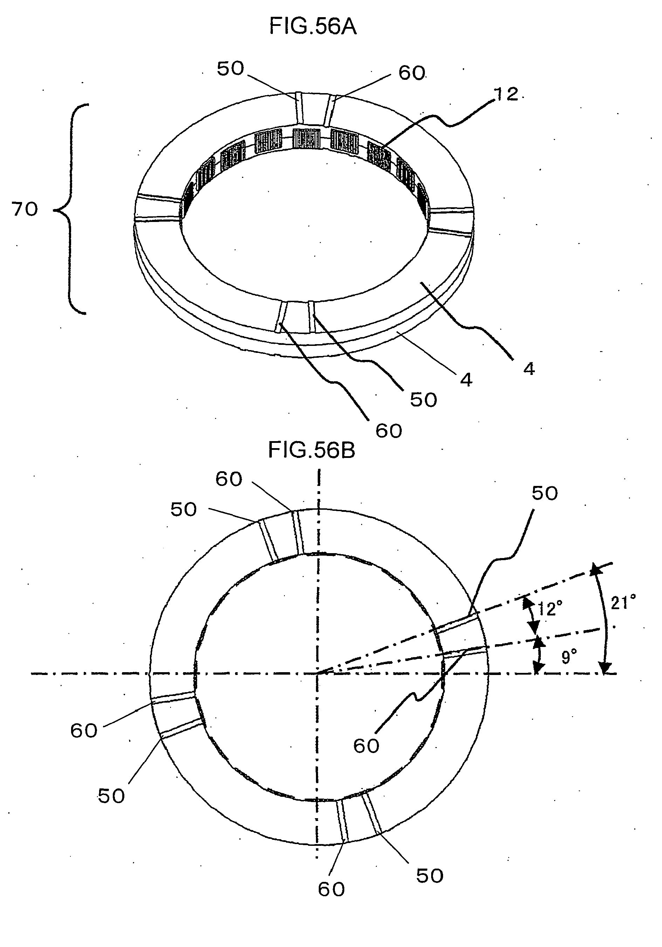

FIGS. 55A through 55C illustrate how a phase stator corresponding to a given phase may be obtained by setting the claw poles 12 in FIGS. 52A and 52B and the yoke portion 51 in FIGS. 54A through 54C in a specific positional arrangement. FIG. 55A shows ten laminated assemblies each to constitute a claw pole 12 as shown in FIGS. 53A and 53B set along the circumferential direction. A holding plate 4 includes grooves 4a formed therein, via which the individual laminated assemblies are positioned and held with a high level of accuracy. By setting the claw poles 12 constituted with the laminated assemblies at the grooves 4a, a half phase stator 3 corresponding to a single phase, constituting one side of the phase stator, is formed as shown in FIG. 55B. Then, the ring-shaped yoke portion 51 and the ring-shaped coil 20 are mounted at the half phase stator 3, as shown in FIG. 55C. Then, by disposing two half phase stators 3, such as that shown in FIG. 56B, so that they face opposite each other along the axial direction, a phase stator 70 such as that shown in FIG. 56A is formed.

FIG. 56A presents an external view of the phase stator 70. The claw poles 12 of the phase stator 70 are held between a pair of holding plates 4. This means that the mechanical strength of the phase stator is basically determined in correspondence to the level of strength achieved at the holding plates 4. The structure of the holding plates 4 assumed at their surfaces perpendicular to the axial direction as shown in FIG. 56A is now described. Positioning grooves 60 and positioning projections 50 set with a predetermined positional relationship relative to each other are formed at least at three positions along the circumferential direction at the surface of each holding plate 4 perpendicular to the axial direction at the phase stator 70. FIG. 56B illustrates this positional relationship. The positional relationship shown in the figure is adopted in the 20-pole three-phase motor achieved in the embodiment. As described earlier, when stacking phase stators over three stages along the axial direction to constitute a three-phase motor, the individual phase stators are disposed with an offset of 120° electrical angle (12° mechanical angle) relative to one another along the circumferential direction. The grooves 60 and the projections 50 shown in the figures are formed so as to position the individual phase stators 70 with such an offset relative to one another.

For this reason, each groove 60 and the corresponding projection 50 are set at positions with an offset of 12° relative to each other along the circumferential direction. Namely, the projections 50 at a given stator 70 fit in the groove 60 at another stator 70 facing opposite the first stator 70 along the axial direction and the projections 50 at the other stator 70 fit inside the groove 60 at the first stator 70. In addition, since a half phase stator 3a and the other half phase stator 3b are integrated along the axial direction, the positions of the grooves and the projections need to be selected accordingly. In this example, the positional relationship between the upper projections/grooves and the lower projections/grooves is reversed at a position offset by 9° from the centers of the claw poles 12, i.e., relative to the positions each matching one quarter of the full cycle of the electrical angle. Accordingly, a positioning groove 60 is formed at a position offset by 9° from the center of the claw pole 12 and the corresponding projection 50 is formed at a position offset by 12° from the positional groove 60. By forming positioning projection/groove pairs each made up with a projection 50 and a groove 60 at positions set over 90° intervals, positioning along the circumferential direction is enabled.

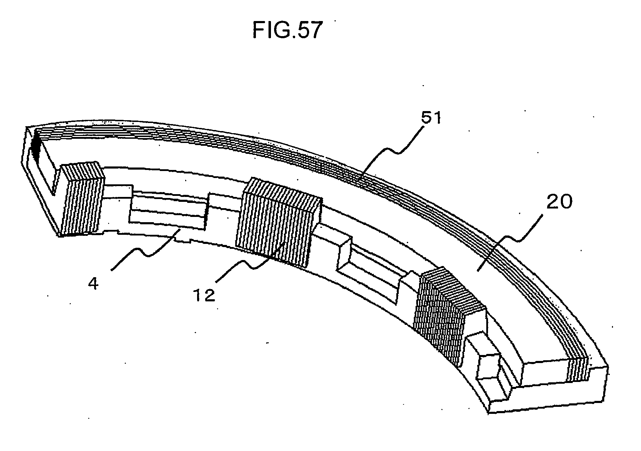

FIG. 57 presents an example of a structure that the holding plates 4 may assume in a sectional view. The holding plates 4 each include a guide portion via which the ring-shaped yoke portion 51 is held fast, in addition to the grooves formed to hold the claw poles of the stator. More specifically, the yoke portion 51 is uniformly positioned at the holding plates 4 by forming the holding plates 4 so that it assumes a greater thickness along the axial direction than the claw poles 12 and that it assumes a greater measurement along the circumferential direction than the outer diameter of the yoke portion 51. The holding plate also includes a guide portion at which the annular coil 2 is held from the inside. More specifically, the holding plates 4 is formed so as to assume a greater thickness along the axial direction than the core assembly and assume a smaller measurement along the circumferential direction than the inner diameter of the coil 2. Via this guide portion, the annular coil 2 is uniformly positioned between the yoke portion 52 and the guide portion.

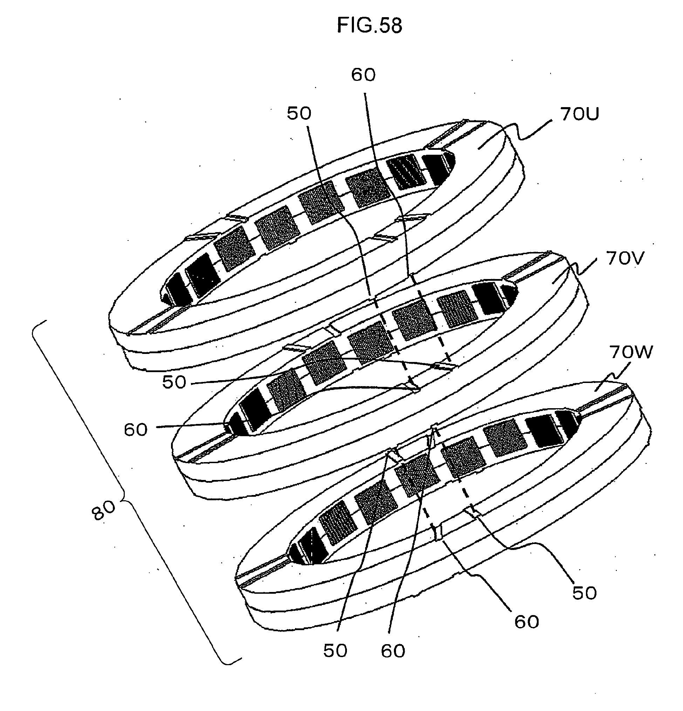

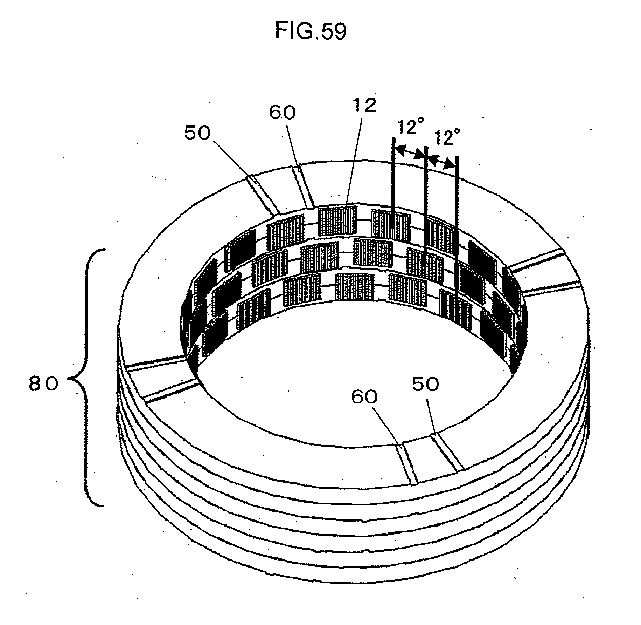

FIG. 58 presents an example of a positional arrangement that may be assumed when disposing the individual phase stators 70 to form a three-phase stator 80. As has been described in reference to FIGS. 56A and 56B, the positional relationship among the phase stators 70 is uniformly determined as the grooves 60 and the projections 50 formed at the holding plates 40 along the axial direction are interlocked. The positioning projections 50 and the positioning grooves 60 formed at the upper surface of the phase stator 70W in FIG. 58 are made to fit with the positioning grooves 60 and the positioning projections formed at the lower surface of the phase stator 70V. The grooves 60 are made to interlock with the projections 50 on the other side at four positions along the circumferential direction and as they interlock at these four positions, the two phase stators are assembled. Since the two phase stators are held together without being allowed to move in any direction over a plane perpendicular to the axis, univocal positioning is enabled. The phase stator 70V and the phase stator 70U are assembled together with a similar positional relationship and are thus positioned uniformly relative to each other. FIG. 59 shows the three-phase stator 80 achieved by assembling the phase stators 70U, 70V and 70W. The claw poles 12 at the phase stators 70U, 70V and 70W positioned relative to each other in a univocal relationship, as has been explained in reference to FIG. 58, are offset by 120° electrical angle, measured from a given claw center to the claw center at the adjacent phase stator, as shown in FIG. 52 (with a 12° mechanical angle in conjunction with the 20-pole configuration in the example presented in the figure).

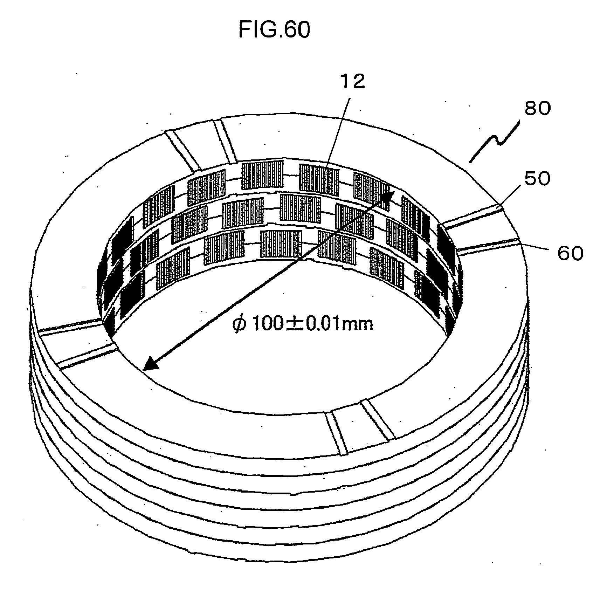

FIG. 60 shows a three-phase stator 80 with its inner circumferential surface and the outer circumferential surface machined so as to provide an optimal stator in a rotating electrical machine used as a motor or a generator. With the individual phase stators positioned via the positioning projections 50 and the positioning grooves 60 at the holding plates 4, the inner circumferential surface and the outer circumferential surface are machined so as to achieve a high level of circularity by using a machining tool such as a lathe. As shown in FIG. 56B, the inner circumferential surface and the outer circumferential surface in the assembled state both assume an angular contour forming a polygonal shape along the circumference due to the presence of the end surfaces of the claw poles 12 constituted with laminated assemblies. For this reason, when the rotor with a round section is disposed on the inner circumferential side, non-uniform gaps may be formed and, in such a case, the rotating electrical machine may fail to achieve a satisfactory magnetic flux distribution. Accordingly, by machining the inner circumference through trimming or grinding, better characteristics can be assured. It will be obvious, however, that the rotating electrical machine may be utilized without first machining the inner circumference as long as the desired characteristics are already assured. In addition, the rotating electrical machine may be assembled by ensuring that the claw poles are disposed so as to achieve a smooth, round contour along the circumferential direction. In the example presented in FIG. 60, the inner circumferential side is machined to achieve a diameter of ⌀100 mm ± 0.01 mm.

A motor similar to that shown in FIG. 29 may be assembled by adopting the embodiment. Namely, a compact motor achieving a low profile along the axial direction with no coil ends present along the axial direction, equipped with a ring magnet rotor, a squirrel-cage conductive motor, a rotor equipped with embedded magnets, a salient-pole rotor with no magnet, a reluctance type rotor assuming varying levels of magnetic resistance or a randle type rotor, can be formed by adopting the present invention.

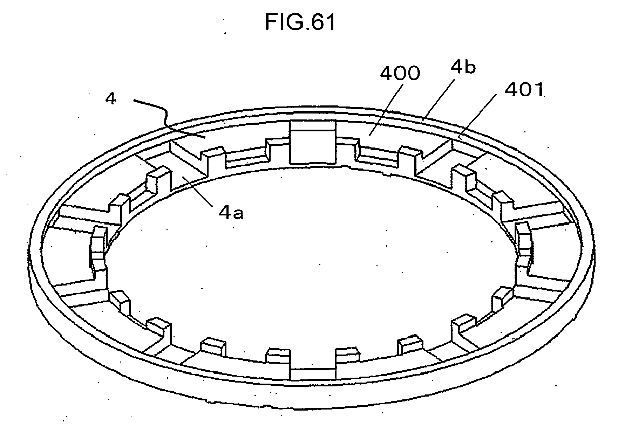

FIG. 61 shows a structure that may be adopted in the holding plates 4. By assuming a specific structure in the holding plates, the motor productivity and characteristics can be improved. The holding plates each include grooves 4a at which the claw poles 12 are held and an outer side wall 4b via which the annular yoke portion 51 is uniformly positioned and held. In addition, the annular coil 2 is held via the outer side wall 4b and the yoke portion 51. Such holding plates 4 may be manufactured by using any of the materials listed in reference to the holding plates 4 shown in FIG. 24A through any manufacturing method that may be adopted to manufacture the holding plates 4 in FIG. 24A.

-23rd Embodiment-

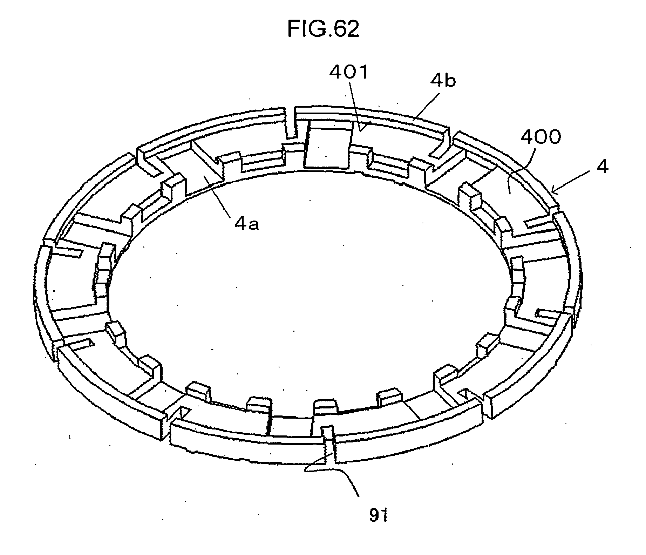

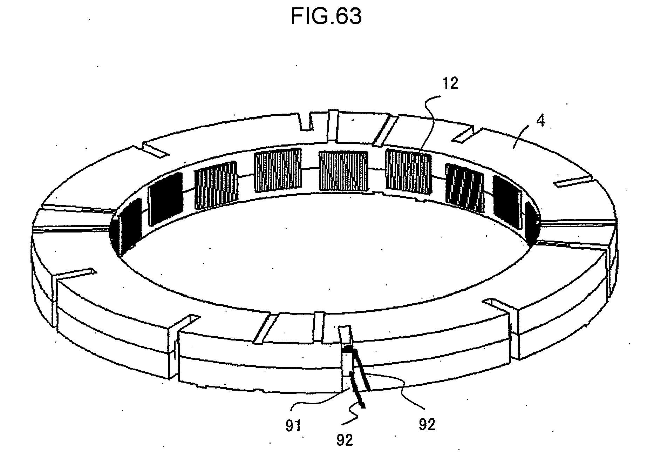

In reference to FIGS. 62 through 64, an embodiment achieved by forming lead grooves via which the ends of the coil 20 are led out at the holding plate 4 shown in FIG. 61 is described. The 23rd embodiment is identical to the 22nd embodiment except for the particular features described below.

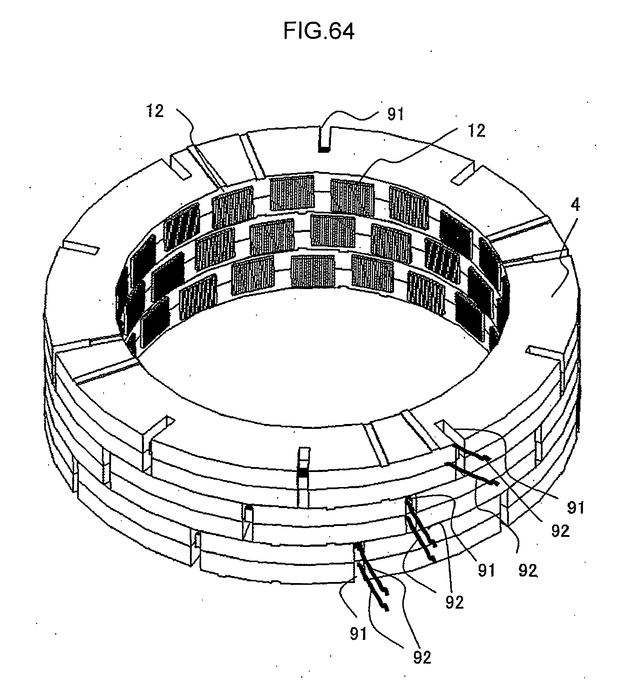

When the present invention is adopted in, for instance, a generator, the lead wires of the individual coils need to be led out from the phase stators, in order to output the electric currents flowing through the coils 20 corresponding to the U-phase, the V-phase and the W-phase to the rectifier circuit 18 such as that shown in FIG. 21. It is to be noted that when the present invention is adopted in a motor, connectors used to connect the coils to the U, V and W arms at the inverter are equivalent to the lead wires. In the embodiment, lead grooves 91, through which the coils 20 are led out are formed at the holding plates 4 so as to draw out lead wires 92 of the coil 20 from the holding plates 4 via the lead grooves, as shown in FIGS. 62 through 64. As shown in FIG. 64, a lead groove 91 should be formed between a claw pole 12 and another claw pole 12. The lead grooves 91 may be formed in a quantity other than that shown in the figure. For instance, the number of lead grooves 91 may match the number of lead wires 92 required in the generator. In addition, the lead grooves 91 may be each constituted with a hole or a clearance instead of a groove. Furthermore, it is not necessary to lead out a plurality of lead wires 92 through a single lead grooves 91 and they may be led out through any lead groove 91. While the lead grooves 91 corresponding to adjacent phase stators are formed in close proximity to one another in the example presented in FIG. 64, the lead wires may be led out through any lead groove 91 depending upon the particulars of the coil structure or the motor/generator product specifications.

-24th Embodiment-

In reference to the 24th embodiment, an application mode developed to improve the productivity of the stator adopting the structure explained in reference to the 22nd embodiment is described.

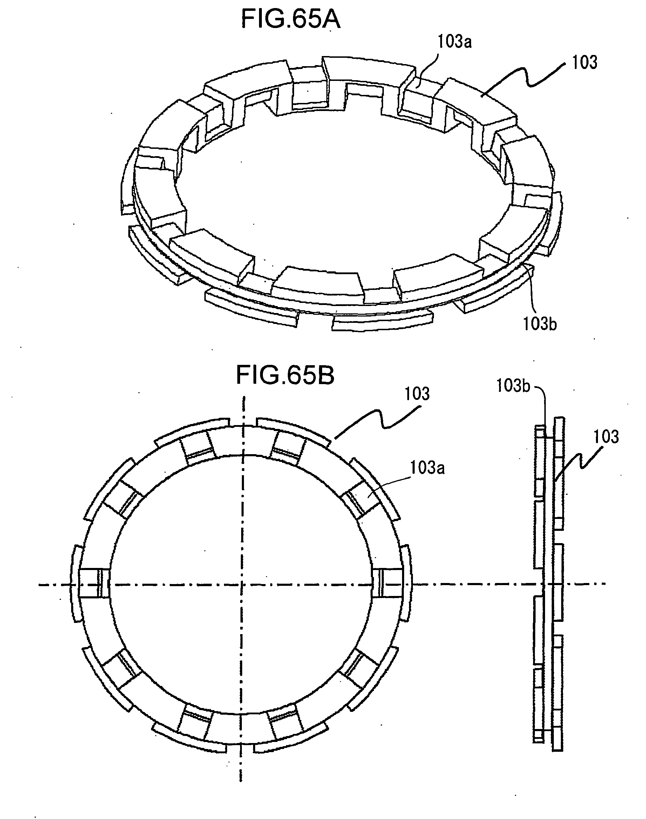

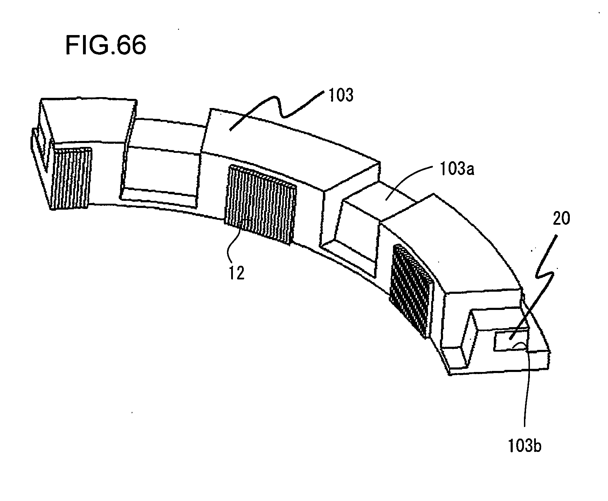

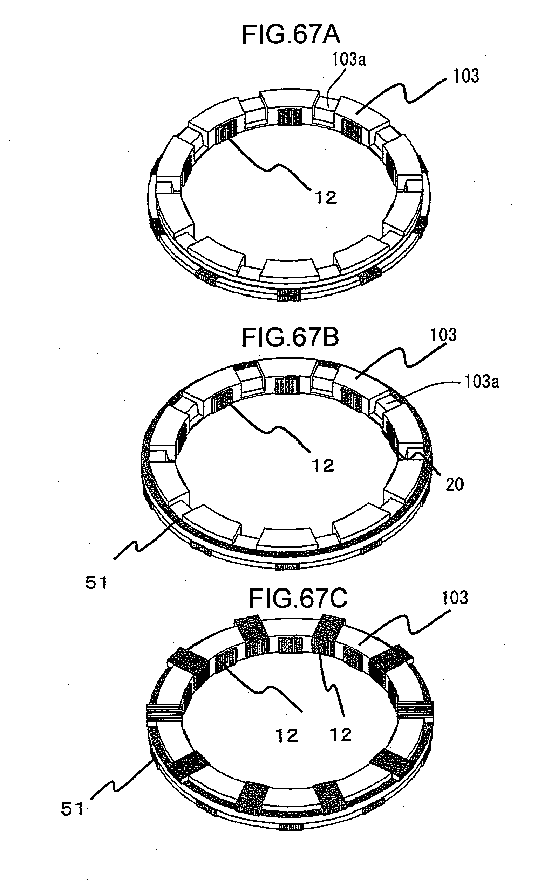

FIG. 65A is a perspective of a coil bobbin 103, which functions as a holding plate to hold a coil. FIG. 65B presents a front view and a side elevation of the coil bobbin 103. As does the holding plates 4 shown in FIG. 61, the coil bobbin 103 includes grooves 103a at which the claw poles 12 are held. The grooves 103a used to hold the claw poles 12 are formed both at the front surface and at the rear surface of the coil bobbin 103. In addition, the grooves 103a formed at the front surface to hold the laminated assemblies and the grooves 103a formed at the rear surface to hold the laminated assemblies are offset relative to each other by a predetermined angle along the circumferential direction. The bobbin also includes a groove 103b through which an annular winding is disposed. FIG. 66 shows the coil bobbin 103 in a sectional view, so as to better show the annular coil 20 wound around the bobbin. Through the groove 103b, the annular coil 20 is installed. FIGS. 67A through 67C illustrate an assembly procedure through which each phase stator may be assembled by using the coil bobbin 103. FIG. 67A shows claw poles 12 mounted in the grooves 103a formed on the rear side of the coil bobbin 103 with the annular coil 20 disposed through the groove 103b. FIG. 67B shows the yoke portion 51 disposed on the outer circumferential side of the annular coil 20. FIG. 67C shows the annular coil 20 set through the plurality of grooves 103b formed on the front surface side of the coil bobbin 103. As a result, a phase stator similar to that shown in FIG. 56A is formed.

-25th Embodiment-

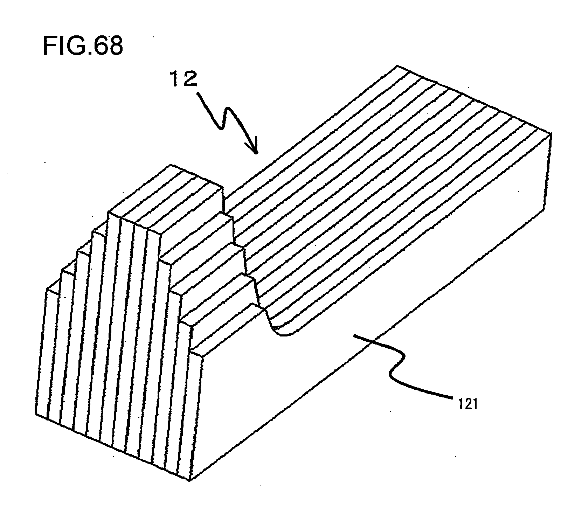

Next, a method that may be adopted in order to improve the characteristics of a motor adopting the 22nd embodiment is described in reference to FIG. 68. The 25th embodiment is similar to the 22nd embodiment except for the specific features detailed below.

The claw poles at a claw pole motor normally assume a crested shape tapering toward the claw front ends. Such a shape may be formed by punching individual metal sheets or individual groups of metal sheets in different shapes and layering them one on top of another. FIG. 68 shows a claw pole formed through such a method. Blanks 121 such as that shown in FIG. 53A are obtained through punching by adjusting the height of the area corresponding to the claw portion of the claw poles 12 in correspondence to each blank, and then the blanks are layered to form a laminated assembly so as to achieve the shape illustrated in the figure. The taper angle of the claw is determined in relation to the number of poles. It is to be noted that the relationship between the taper angle assumed at the claw portions and the motor characteristics, having been explained in reference to FIGS. 34A through 34C and FIGS. 35A through 35C also applies in the embodiment.

Furthermore, the method for reducing the cogging torque described in reference to the 13th embodiment may be adopted in the 25th embodiment to achieve advantages similar to those of the 13th embodiment.

In addition, the method for reducing the cogging torque described in reference to the 14th embodiment may be adopted in the 25th embodiment to achieve advantages similar to those of the 14th embodiment.

-26th Embodiment-

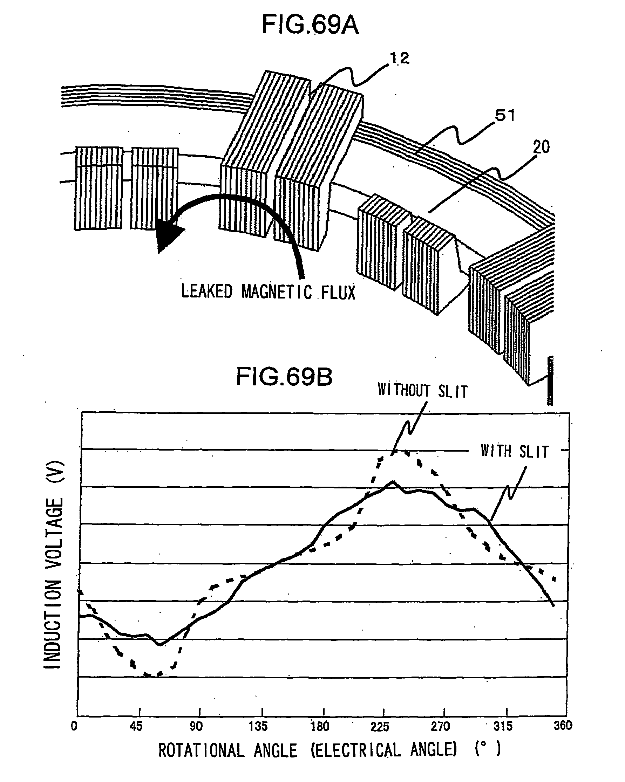

In reference to FIGS. 69A and 69B, a structure that may be adopted in the laminated core assembly to improve the motor efficiency by reducing the extent of distortion of the induction voltage is described. The 26th embodiment is similar to the 22nd embodiment except for the specific features detailed below.

Since the motor output torque is in proportion to the level of induction voltage, a distortion of the induction voltage causes pulsation in the motor output torque, which, in turn, causes motor vibration and noise. For this reason, the induction voltage should assume a waveform as close as possible to a sine wave. One of the primary causes of induction voltage distortion is magnetic flux leakage. The leakage flux shown in FIG. 69A does not interlink with the coil and thus does not contribute in any way whatsoever to the motor characteristics. It simply induces magnetic saturation at the core, which leads to distortion of the induction voltage. In addition, the leakage flux flowing along the direction in which the metal sheets are layered to form the claw poles 12 induces an eddy current inside the claw poles (core) to lower the motor efficiency. The structure assumed for the claw poles 12 shown in FIG. 69A reduces such magnetic flux leakage. In FIG. 69A, two claw pole portions 12 form a single pole. Namely, a slit is formed at a halfway position along the circumferential direction at a claw pole. In this structure, the magnetic resistance in the magnetic path of the leakage flux is increased via the slit, thereby reducing the leakage flux. As a result, the extent of magnetic saturation at the core attributable to leakage flux is lessened, which, in turn, reduces the extent of distortion of the induction voltage. FIG. 69B presents examples of the voltage waveforms of voltages induced at claw poles with/without slits formed at the halfway positions. The graph presented in FIG. 69B indicates that the presence of the slit reduces the extent of distortion of the induction voltage. Furthermore, since the eddy current loss attributable to the leakage flux is reduced, the motor efficiency is improved.

-27th Embodiment-

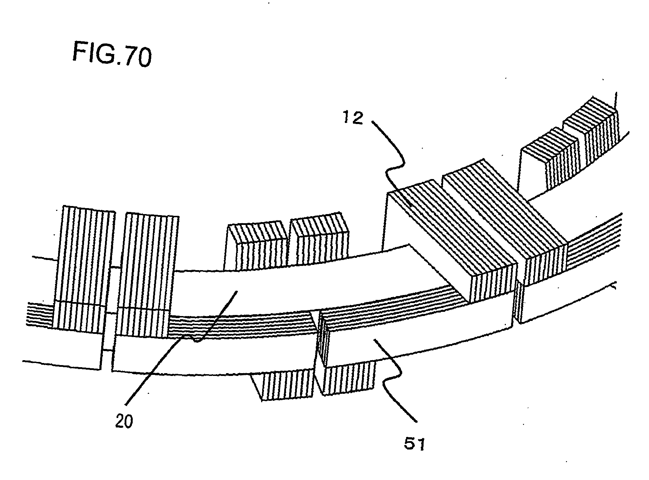

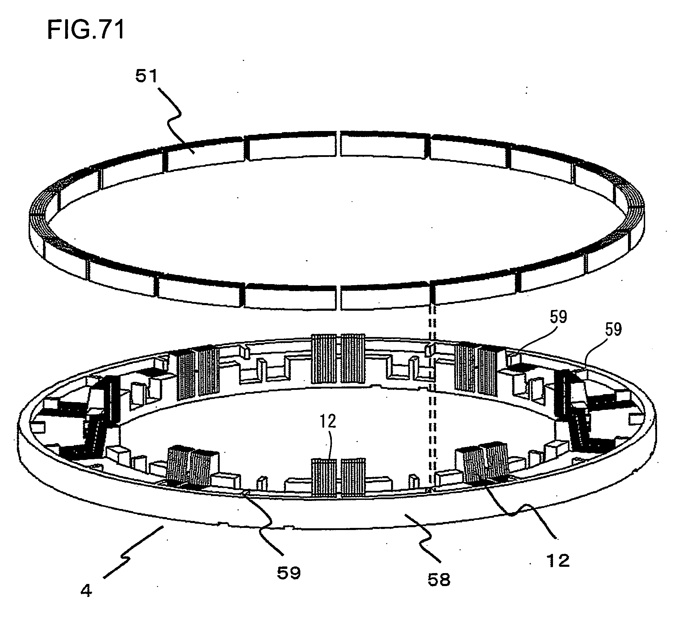

FIG. 70 shows a structure achieved in the 27th embodiment that may be adopted in the 26th embodiment to manufacture a large unit with a high level of productivity. FIG. 70 shows two laminated assemblies (claw poles 12) forming a single pole. In addition, the yoke portion 51 is split into a plurality of separate blocks along the circumferential direction. In the example presented in FIG. 70, the yoke portion 51 is separated into a plurality of blocks at halfway positions of the poles. Namely, a magnetic flux originating from the rotor and flowing in through a claw pole 12 flows to the yoke portion blocks 51 on the left side and the right side thereof and then flows out toward the rotor through the claw poles 12 present next to the entry pole along the circumferential direction. Since this structure simplifies the process of layering or laminating the metal sheets to form the yoke portion 51, compared to the process that must be performed to form a ring-shaped yoke portion 51, the productivity is improved. In addition, compared to the ring-shaped yoke portion 51, the yoke portion blocks 51 can be formed with ease. FIG. 71 shows a structure that may be adopted in the holding plate 4 in conjunction with the split yoke portion blocks. The holding plate 4 includes grooves at which the plurality of claw poles 12 are held and also includes recesses and projections used to uniformly position and hold the split yoke portion blocks 51. More specifically, an outer circumferential wall 58 of the holding plate 4 uniformly determines the positions of the split yoke portion blocks 51 along the radial direction, whereas a plurality of projections 59 formed along the circumferential direction uniformly determines the position of the split yoke portion blocks 51 along the circumferential direction. As a result, a half phase stator 3 with the split yoke portion blocks 51 thereof positioned uniformly is obtained.

-28th Embodiment-

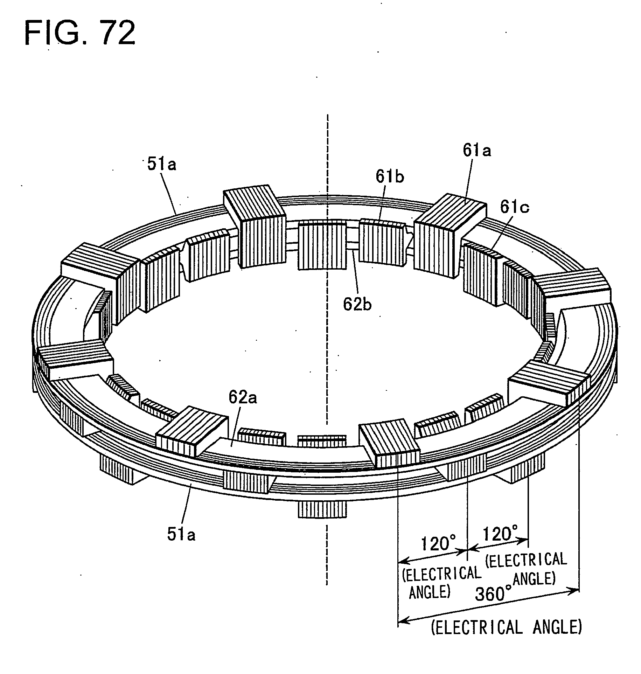

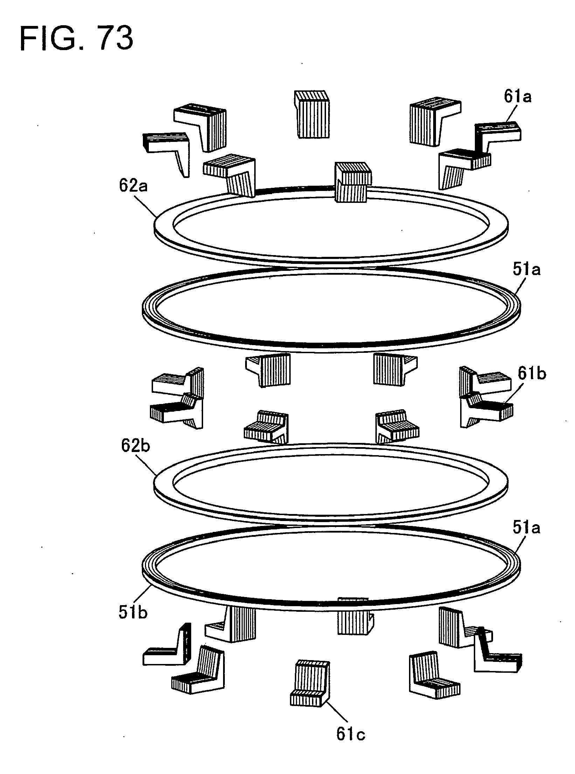

FIG. 72 shows the positional arrangement assumed at a stator core in the claw pole rotating electrical machine achieved in the 28th embodiment of the present invention. FIG. 73 presents an assembly diagram taken along the axis of the stator in the claw pole rotating electrical machine shown in FIG. 72. As shown in FIG. 72, the stator core in the claw pole motor is constituted with iron sheets layered one on top of another.
While the operational principal adopted in the embodiment is different from the operational principle adopted in the embodiments described in reference to FIGS. 22 through 70, it is described in detail in Japanese Laid Open Patent Publication No. 2005-20981 and accordingly, its explanation is omitted. While the operational principle adopted in conjunction with the art taught in the publication differs from that adopted in the previous embodiments, the laminated claw poles and the laminated yoke portion described earlier may be used in the stator structure adopting the particular operational principle. Through the embodiment, the occurrence of eddy currents is reduced through the laminated structure and the inductance can also be reduced by minimizing the core area to the smallest possible.
Claw poles constituting the claw pole motor are formed by using laminated metal sheets such as electromagnetic steel sheets, cold-rolled steel sheets or electromagnetic stainless steel sheets. The metal sheets are layered one on top of another along a specific direction so that they range parallel to the direction in which magnetic fluxes originating from the rotor flow in. Namely, the magnetic poles are formed by layering metal sheets, i.e., magnetic sheets, along the circumference of the stator. The metal sheets set next to each other along the circumferential direction remain uncoupled with each other either electrically or magnetically (they are formed by layering metal sheets with a nonmagnetic and nonconductive material inserted between them). In addition, each claw pole is constituted with a laminated assembly 61.
Laminated assemblies 61a range inward along the radial direction from specific positions set over equal intervals along the circumference of a yoke portion 51a assuming a ring shape, are bent to form an L shape at the inner end along the radial direction and range toward one side along the axial direction in a tapered shape. Laminated assemblies 61b range inward along the radial direction from specific positions set over equal intervals along the circumferential direction at which they are clamped along the axial direction between the ring-shaped yoke portion 51a and a ring-shaped yoke portion 51b, assume a T shape at the inner end along the radial direction and range toward the two sides along the axial direction in a tapered shape. Laminated assemblies 61c range inward along the radial direction from specific positions set over equal intervals along the circumference of the ring-shaped yoke portion 51b, are bent to form an L shape at the inner end along the radial direction and range in a tapered shape toward the opposite side from the side to which the laminated assembly 61a along the axial direction. The laminated assemblies 61c are identical to the laminated assemblies 61a in shape. The front ends of the laminated assemblies 61 constituting the individual claw poles reach to the very end of the stator along the axial direction. In the motor achieved in the embodiment, adopting a three-phase AC drive system, the laminated assemblies 61a, 61b and 61c are disposed with an offset relative to one another along the circumferential direction by a 120° electrical angle (360°/3 = 120°).

In the gap between the laminated assemblies 61a and the laminated assemblies 61b along the axial direction, a slot 62a, in which the ring-shaped yoke portion 51a and an annular coil are housed is formed, whereas in the gap between the laminated assemblies 61b and the laminated assemblies 61c along the axial direction, a slot 62b, in which a ring-shaped yoke portion 51a and an annular coil are housed is formed. The ring-shaped yoke portions 51 are each formed by layering metal sheets along the radius of the ring shape.

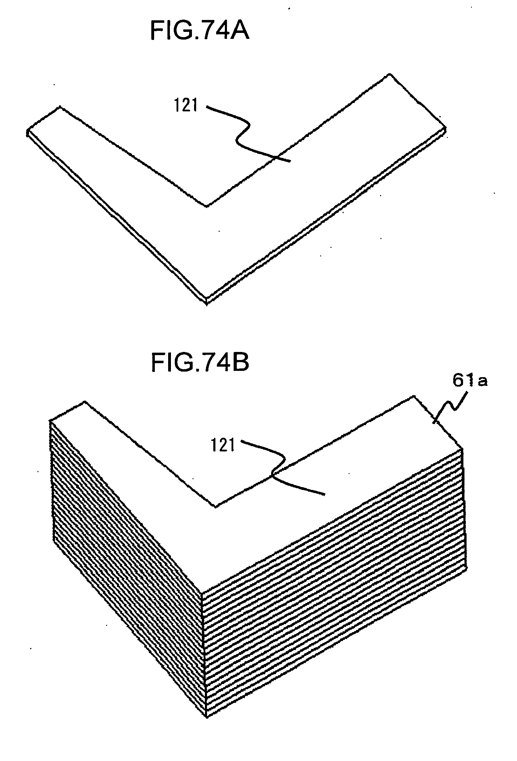

FIGS. 74A and 74B show the structure of the laminated assemblies 61a and 61c. FIG. 74A shows a metal sheet blank 121 used to form a laminated core assembly to constitute a claw pole. The blank assumes a shape such that the width of the claw, smallest at the front end, gradually increases toward the base along the axial direction, since the sectional area at the base must be set greater than the sectional area at the front end to accommodate the magnetic flux flowing in from the rotor side of the claw pole and traveling toward the base. FIG. 74B shows a laminated assembly formed by layering a plurality of blanks 121, one of which is shown in FIG. 74A. The assembly is formed by layering blanks 121 formed in identical shapes one on top of another. This laminated assembly forms each laminated assembly 61a or 61c.

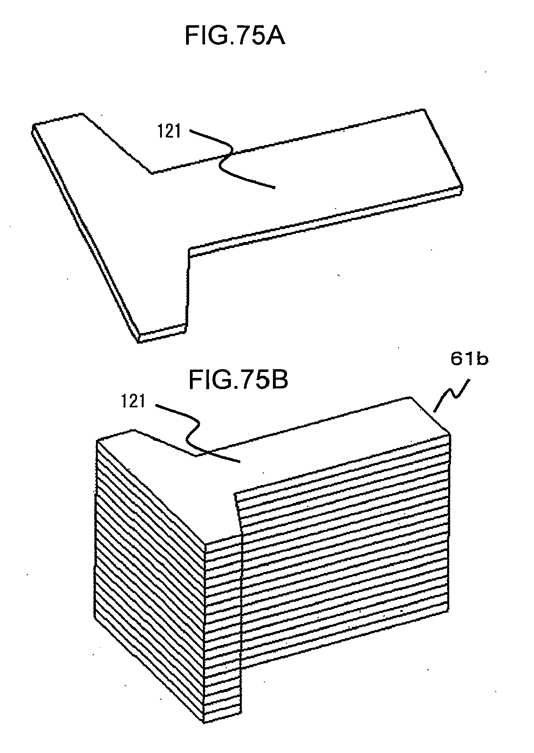

FIGS. 75A and 75B show the structure of the laminated assemblies 61b. FIG. 75A shows a metal sheet blank 121 used to form a laminated assembly to constitute a claw pole. The blank assumes a shape such that the width of the claw, smallest at the tips on the two sides along the axial direction of the claw, gradually increases toward the base along the axial direction, since the sectional area at the base must be set greater than the sectional area at the front ends of the claw to accommodate the magnetic flux flowing in from the rotor side of the claw pole and traveling toward the base. FIG. 75B shows a laminated assembly formed by layering a plurality of blanks 121, one of which is shown in FIG. 75A. The assemblies 61b are formed by layering one on top of another, blanks 121 formed in identical shapes. This laminated assembly forms each claw pole 61b.

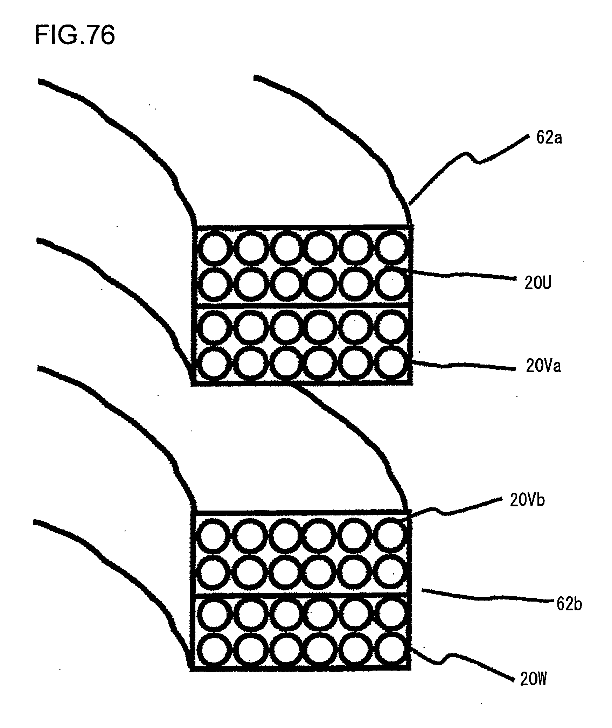

FIG. 76 presents a sectional view of the slots 62a and 62b in which the annular coils are housed. FIG. 76 does not include illustration of components other than the slots. In the slot 62a, a U-phase coil 20U and a V-phase coil 20Va, both assuming a ring shape, are housed, whereas in the slot 62b, a V-phase coil 20Vb and a W-phase coil 20W, both assuming a ring shape, are housed. The individual coils 20U, 20Va, 20Vb and 20W assume a uniform number of turns, and a three-phase AC system is obtained by connecting the V-phase coils 20Va and 20Vb in series. Namely, a stator in a motor that enables three-phase drive is obtained.

The laminated assemblies 61 used to form the claw poles in the embodiment may be constituted with compressed powder cores obtained by compressing magnetic soft composite into moldings. However, the distance from the claw base to the claw front end at each claw pole is set to a great length in the embodiment so as to receive the magnetic fluxes originating from the rotor in great quantity. If claw poles assuming such a shape are formed with compressed powder cores, a problem may occur in that the required level of strength may not be assured at the claw poles. In other words, if the claw poles in the embodiment are formed by using compressed powder cores, the distance from the claw base toward the claw front end at each claw pole will have to be reduced, which, in turn, makes it difficult to obtain a sufficient output torque area however, the claw poles in the embodiment are actually formed by using laminated assemblies constituted with metal sheets layered one on top of another along the circumferential direction, assuring the required level of strength at the claw poles even with a significant distance allowed between the claw base toward the claw front end and thus, a sufficient level of output torque can be obtained.

In reference to the 9th through 28th embodiments, rotating electrical machines, generators and vehicle drive rotating machines assuming the following structures have been described.

(a1) A rotating electrical machine including a stator constituted with claw poles formed by layering one on top of another metal sheets along a laminating direction matching the direction of the circumference relative to the rotational axis and a stator coil wound on the outside of the claw portions at the claw poles with a magnetic path (10b) connecting the claw poles with one another formed further outward relative to the stator coil (20U) and a rotor rotatably disposed at a position facing opposite the claw poles.

(a2) A rotating electrical machine described in (a1), inwhich the claw poles are each constituted with at least two laminated assemblies each having a yoke portion, and the yoke portion at the claw pole is connected to the yoke portion of another claw pole present next to the first claw pole along the circumferential direction and assuming the opposite polarity.

(a3) The rotating electrical machine described in (a2) with the laminated assemblies each formed by layering one on top of another punched metal sheets assuming identical shapes.

(a4) The rotating electrical machine described in (a2), in which laminated assemblies are each formed by layering one on top of another punched metal sheets assuming shapes different from one another over areas corresponding to the claw portion, and the surface of the claw pole facing opposite the rotor, assumes a tapered shape such as a substantially trapezoidal shape or a substantially triangular shape with the width thereof decreasing along the axial direction.

(a5) The rotating electrical machine described in (a2), with the metal sheets forming each laminated assembly fixed together through welding.

(a6) The rotating electrical machine described in (a2), with the metal sheets forming each laminated assembly fastened together through caulking.

(a7) The rotating electrical machine described in (a2) , with the metal sheets forming each laminated assembly fastened together through taping or bonding.

(a8) The rotating electrical machine described in (a2) , with the laminated assemblies each formed to achieve a specific shape by bending a plurality of metal sheets layered along the circumferential direction.

(a9) The rotating electrical machine described in (a2) , with the laminated assemblies each formed by layering one on top of another sheets obtained from a thin sheet or ribbon material constituted of electromagnetic steel, an amorphous material or Permendur.

(a10)An on-vehicle generator equipped with the rotating electrical machine described in (a1).

(a11) The on-vehicle generator described in (a10), the rotor of which is a randle type claw pole rotor.

(a12) A vehicle drive rotating machine equipped with the rotating electrical machine described in (a1).

(a13) An aerogenerator equipped with the rotating electrical machine described in (a1).

(a14) The rotating electrical machine described in (a1), with the claw poles assuming a skew angle of $0 \sim 20°$ relative to the axial line.

(a15) The rotating electrical machine described in (a1), with the claw poles assuming a skew angle of 5 through 20° relative to the axial line.

(a16) The rotating electrical machine described in (a1), with the claw poles assuming a skew angle of 15 through 20° relative to the axial line.

(a17) The rotating electrical machine described in (a2) , with the claw poles disposed along the circumferential direction with a gap continuous from one end to another end of the stator core along the axial direction, formed therebetween.

(a18) The rotating electrical machine described in (a1), in which the stator is equipped with stator cores and stator coils corresponding to a plurality of phases, and a stator coil corresponding to each phase is led out toward one end of the stator along the axial direction through a gap between the claw poles.

(a19)The rotating electrical machine described in (a1), in which the stator is equipped with stator cores and stator coils corresponding to a plurality of phases and a continuous body of a nonmagnetic material fills the gaps between the claw poles at the individual phases.

(a20)The rotating electrical machine described in (a1), equipped with an air supply device via which air is distributed along the axial direction, through the clearance between the rotor and the stator.

(a21)The rotating electrical machine described in (a2), equipped with a randle rotor that includes a field coil and magnetic poles, with a base area of each magnetic pole at the rotor assuming a greater width than a middle area thereof, the middle area of the magnetic pole assuming a greater width than a front end area thereof and the middle area assuming a substantially uniform width.

(a22)The rotating electrical machine described in (a2), equipped with a randle rotor that includes a field coil and magnetic poles and a stator core disposed at a position facing opposite the outer circumference of the rotor and having claw poles formed thereat, with the claw poles alternately extending from either side along the axial direction at positions facing opposite the rotor.

(a23)The rotating electrical machine described in (a1), in which the number of poles at the rotor matches the number of claw poles at the stator.

(a24)The rotating electrical machine described in (a1), in which the number of poles at the rotor and the number of poles at the stator are both 20.

(a25) A claw pole-type rotating electrical machine having a plurality of claw poles formed along the circumferential direction, with a claw pole to assume a given polarity constituted with a laminated assembly formed by layering one on top of another magnetic sheets along the circumferential direction, connected via a yoke with an adjacent claw pole to assume the opposite polarity, and held by a holding plate having grooves formed therein via which the laminated assemblies are held.

(a26) The rotating electrical machine described in (a25), in which a single phase stator constituted with laminated assemblies and an annular coil is held between two holding plates along the axial direction.

(a27) The rotating electrical machine described in (a26), in which the holding plates each include formed therein a projecting portion that determines a positional relationship with which a plurality of phase stators are stacked one on top of another along the axial direction and a groove to fit with the projecting portion at another holding plate with a high level of accuracy.

(a28) The rotating electrical machine described in (a25), in which a stator constituted with laminated assemblies and a coil is held between two holding plates along the axial direction and the holding plates each include a seat surface at which the annular coil is held so as to form a gap between the laminated assemblies and the annular coil.

(a29) The rotating electrical machine described in (a25), in which a half phase stator corresponding to a given phase, constituted with laminated assemblies, is formed as an integrated molding by holding the laminated assembly in a die and integrating the laminated assemblies with a resin or a metal material such as aluminum through injection molding, die casting or the like.

(a30) The rotating electrical machine described in (a25), in which a single phase stator constituted with laminated assemblies and a coil is formed as an integrated molding by holding the laminated assemblies, the coil, an insulating sheet and the like and integrating them with a resin material through injection molding or the like.

(a31) The rotating electrical machine described in (a25), with the holding plate constituted of a nonmagnetic material.

(a32) The rotating electrical machine described in (a25), with the holding plate constituted of a nonconductive material.

(a33) A claw pole-type rotating electrical machine having a plurality of claw poles formed along the circumferential direction, in which a claw pole to assume a given polarity is constituted with a laminated assembly formed by layering one on top of another magnetic sheets along the circumferential direction and is connected via a yoke with an adjacent claw pole to assume the opposite polarity. The claw pole rotating electrical machine further includes a bobbin assuming a cylindrical shape around which a stator coil is wound and having formed at the outer side surface thereof grooves at which the laminated assemblies are held.

(a34) The rotating electrical machine described in (a33), with the bobbin constituted of a nonmagnetic material.

(a35) The rotating electrical machine described in (a33), with the bobbin is constituted of a nonconductive material.

(a36) A rotating electrical machine in which a rotor rotates relative to a stator, including a randle rotor equipped with a field coil and a plurality of rotor claw poles and a stator constituted with a stator core disposed at a position facing opposite the outer circumference of the rotor and the stator coil wound around within the stator core, with the stator coil wound in an annular shape, the stator core having formed therein stator claw poles alternately extending from either side along the axial direction at positions facing opposite the rotor and a ratio (width of each stator claw pole measured at a substantial center thereof along the axial direction) / (width of the gap between stator claw poles) taking on a value in a range of 0.05 through 0.3.

(a37) The rotating electrical machine described in (a36), in which the ratio (width of each stator claw pole measured at a substantial center thereof along the axial direction) / (width of the gap between stator claw poles) taking on a value in a range of 0.1 through 0.2.

(a38) The rotating electrical machine described in (a36), in which a ratio (width of each rotor claw pole measured at a substantial center thereof along the axial direction) / (width of the gap between rotor claw poles) taking on a value in a range of 0.3 through 0.6.

(a39) The rotating electrical machine described in (a36), in which the ratio (width of each rotor claw pole measured at a substantial center thereof along the axial direction) / (width of the gap between rotor claw poles) taking on a value in a range of 0.35 through 0.45.

(a40) A rotating electrical machine that includes a stator formed by disposing side-by-side along the rotational axis phase stators each constituted with a stator coil wound in a ring shape, a yoke portion disposed so as to cover the outer circumference of the stator coil and formed by layering one on top of another a plurality of ring-shaped metal sheets along the radial direction relative to the rotational axis and a plurality of claw poles alternately disposed at one side surface of the yoke portion ranging along the axial direction and at a surface present on the opposite side, formed so as to surround the stator coil together with the yoke portion. The stator claw poles are each formed by layering metal sheets along the circumferential direction relative to the rotational axis and are each connected to the yoke portion so as to form a magnetic path connecting between adjacent magnetic poles via the yoke portion. The rotating electrical machine further includes a rotor rotatably disposed at the position facing opposite the claw poles at the stator.

(a41) The rotating electrical machine described in (a40), in which the stator includes a holding plate that holds the stator coil, the yoke portion and the claw poles.

(a42) The rotating electrical machine described in (a41), in which the holding plate is disposed with an offset along the circumferential direction relative to another holding plate by an extent matching a phase difference between the phase of the coil held by the holding plate and the phase of the coil held by the other holding plate. A groove and a projection are formed at a contact surface of each holding plate that comes in contact with the contact surface of the holding plate so as to position the holding plate and the other holding plate with an angular shift relative to each other corresponding to the offset.

(a43) The rotating electrical machine described in (a41), in which the holding plate includes a lead opening through which a lead wire of the stator coil is led out, located between claw poles sat next to each other.

(a44) The rotating electrical machine described in (a40), with the claw poles each formed by steel sheets assuming varying lengths along the axial direction so as to form a tapered shape with a predetermined taper angle ranging from the base of the claw portion facing opposite the rotor toward the front end.

(a45) The rotating electrical machine described in (a40), with the claw poles each constituted with two pole portions separated from each other along the circumferential direction.

(a46) The rotating electrical machine described in (a45), in which the yoke portion is divided into blocks at positions where the claw magnetic electrodes are each separated into two pole portions and forms a magnetic circuit between one of the two magnetic poles at a claw pole and one of the two pole portions at another claw pole adjacent to the first claw pole.

(a47) A rotating electrical machine including a stator constituted with a first stator coil wound in an annular shape, a second stator coil wound in an annular shape and set apart by a predetermined distance along the axial direction from the first stator coil, a first yoke portion disposed so as to cover the outer circumference of the first stator coil and formed by layering one on top of another a plurality of ring-shaped metal sheets along the radial direction relative to the rotational axis, a second yoke portion disposed so as to cover the outer circumference of the second stator coil and formed by layering one on top of another a plurality of ring-shaped metal sheets along the radial direction relative to the rotational axis, a plurality of outer claw poles alternately positioned at outer surfaces of the first yoke portion and the second yoke portion that do not face opposite each other and each formed by layering one on top of another metal sheets formed so as to, together with the yoke portions, surround the stator coils along the circumferential direction relative to the rotational axis and a plurality of inner claw poles alternately positioned between the outer claw poles set next to each other, each formed by layering one on top of another metal sheets along the circumferential direction relative to the rotational axis and connected to the yoke portions so as to form a magnetic path between adjacent magnetic poles, and a rotor rotatably disposed at a position facing opposite the claw poles at the stator which is constituted with the stator coils, the yoke portions, the outer claw poles and the inner claw poles.

- 29th Embodiment-

While a claw pole-type stator usually includes claws ranging along the axial direction between the stator coil wound along the circumferential direction and the rotor surface, the presence of such claws is eliminated in the embodiment to be described next, and thus, the production of stator cores is facilitated.

The following embodiment, which does not include any claws ranging along the rotational axis between the stator coil wound along the circumferential direction and the rotor surface and assuming a shape that allows them to interlink with the stator core, achieves an advantage of a lower inductance level at the stator coil compared to that at a standard claw pole-type stator.

Since the stator achieved in the embodiment includes a smaller area constituted of a magnetic material that encloses the stator coil 222, compared to a standard claw pole type stator, the inductance at the stator coil is greatly reduced by adopting the embodiment.

In the embodiment to be described below, a stator coil is disposed along the rotational axis and a rotor core is split into separate blocks each corresponding to a specific phase, which are disposed side-by-side along the rotational axis, as in a standard slot teeth rotating electrical machine. As a result, the stator coil assumes a shape that facilitates production to assure outstanding productivity.

In the embodiment to be described below, the field coil is disposed along the rotational axis between magnetic poles set along the circumferential direction. Since this positional arrangement increases the areal size of the surfaces of the stator magnetic poles to face opposite the rotor, over that at standard claw pole-type magnetic poles, better efficiency is achieved.

In the embodiment to be described below, the stator magnetic poles are formed at a stator core by layering sheets along the axial direction so as to greatly reduce the core loss attributable to eddy currents.

In the embodiment to be described below, laminated steel sheets are used instead of compressed powder cores, thereby achieving a very high level of mechanical strength.

(Basic structures that may be adopted in stator)

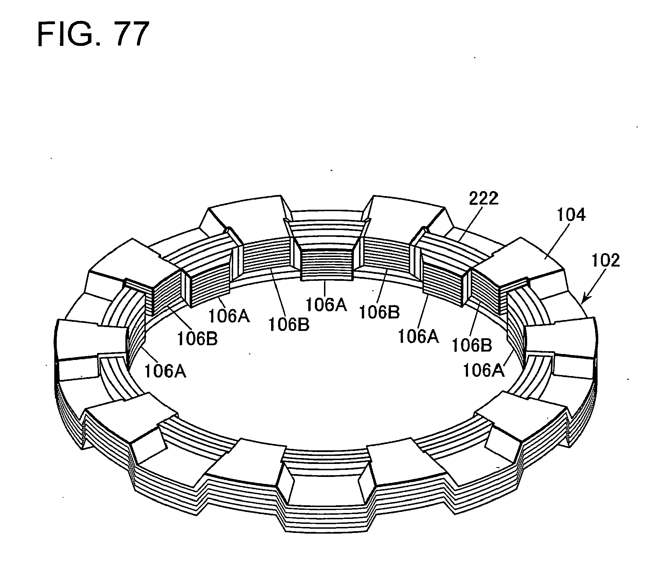

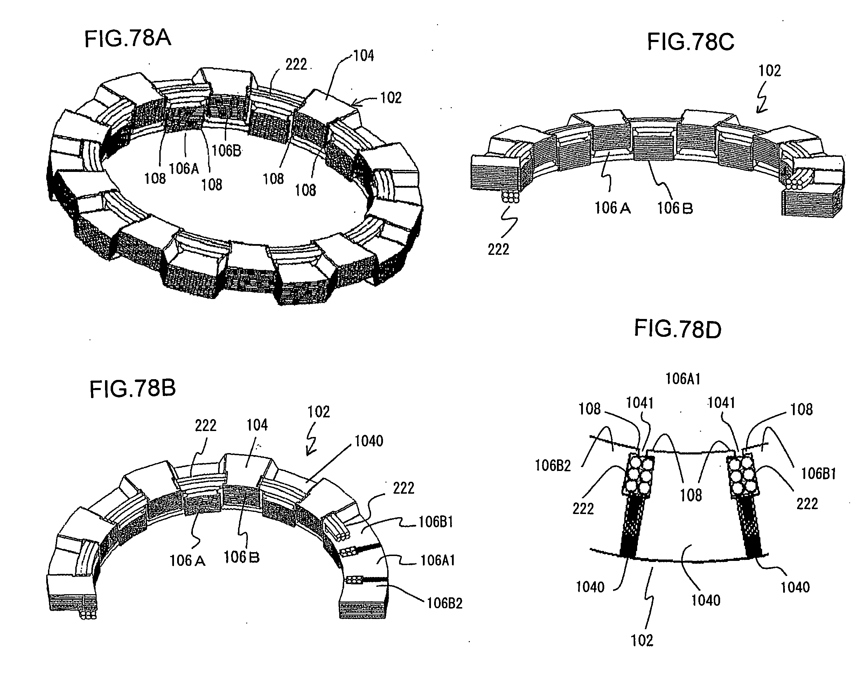

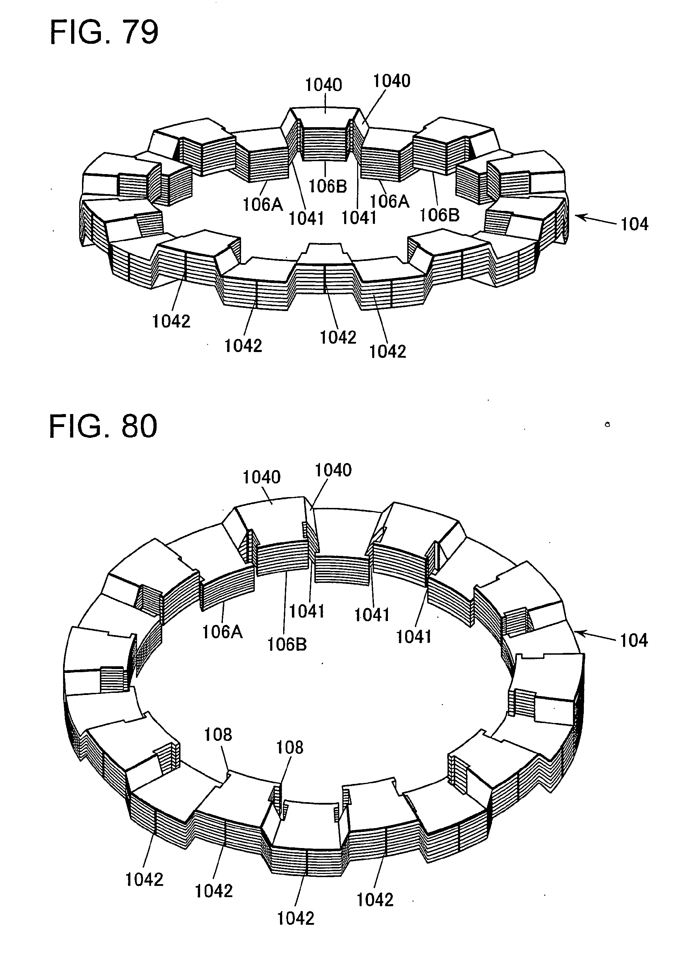

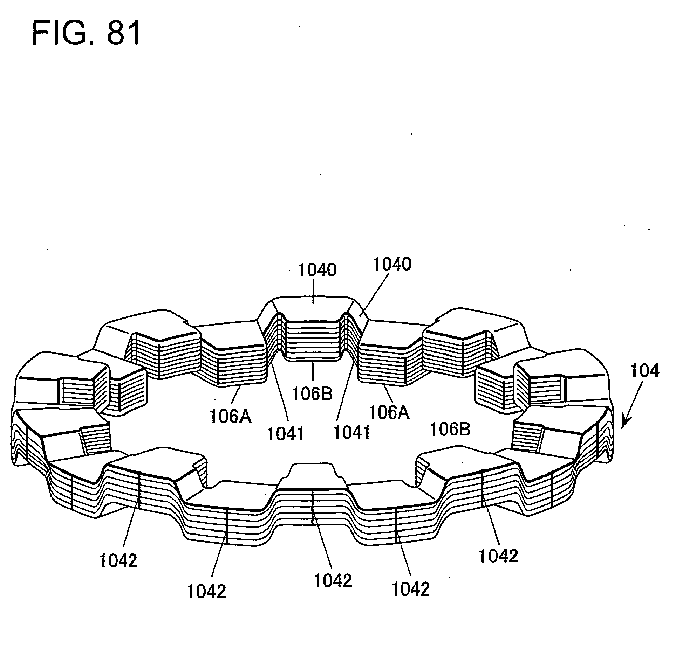

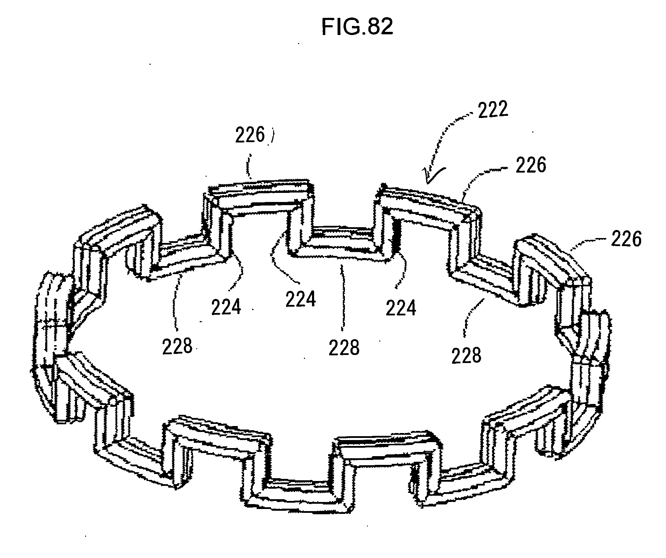

In reference to FIGS. 77 through 82, basic structures that may be adopted in stator in the 29th embodiment of the present invention are described. FIG. 77 is a perspective showing a basic structure of a stator. FIGS. 78A through 78D present another example of a basic structure that may be adopted in the stator in FIG. 77, with a collar disposed at each of the teeth in the basic structure shown in FIG. 77. FIG. 78A is an overall view of the basic structure for the stator achieved in the other example, FIG. 78B is a partial sectional view of the stator basic structure shown in FIG. 78A, FIG. 78C is a partial sectional view of the stator basic structure in FIG. 78A taken from a different angle and FIG. 78D is a partial sectional view of the stator basic structure in FIG. 78A taken over a plane perpendicular to the rotational axis. FIG. 79 is a perspective of the stator core included in the stator basic structure shown in FIG. 77, whereas FIG. 80 is a perspective of the stator core included in the stator basic structure in the other example presented in FIGS. 78A through 78D. In addition, FIG. 81 presents another structural example that may be adopted in the stator core 104 in FIG. 79. FIG. 82 shows a stator coil that may be included in the stator basic structure shown in FIG. 77 or FIG. 78.

The stator basic structures 102 shown in FIG. 77 and FIGS. 78A through 78D each include a stator core 104 and a stator coil 222. Teeth 106 each to function as a stator magnetic pole are formed along the entire circumference over equal intervals on the side to face opposite the rotor in the stator basic structure 102. While the teeth are alternately assigned with reference numerals 106A and 106B so as to facilitate the subsequent explanation of the operation, the teeth 106A and the teeth 106B fulfill functions similar to each other. Further inward relative to the teeth 106A and 106B, the rotor is rotatably disposed, although the rotor is not included in the illustrations provided in FIGS. 77 through 80 for purposes of simplification. When the present invention is adopted in an alternator, a randle-type rotor may be used. In addition, the rotating electrical machine according to the present invention may be utilized as a motor or a generator by combining the stator mentioned above with a permanent magnet rotor that includes permanent magnets disposed at the surface thereof or embedded therein, a flux barrier rotor that generates a reluctance torque by regulating a magnetic flux along the D axis or the Q axis, or a squirrel-cage rotor.

While the stator basic structure 102 shown in FIG. 77 and the stator basic structure 102 shown in FIG. 78A through 78D are substantially identical to each other, the stator basic structure 102 in FIGS. 78A through 78D includes collars 108 each disposed on the rotor side at one of the teeth 106 to range toward the adjacent magnetic pole, so as to improve the output characteristics by increasing the area of the surfaces in the stator basic structure 102 to face opposite the rotor. The stator core 104 in FIG. 81 adopts an alternative structure to those of the stator cores 104 in FIGS. 79 and 80, and assumes a curved contour at core backs 1040 connecting neighboring teeth 106 with each other so as to assure better productivity.

As shown in FIGS. 78A through 78C, the teeth 106 are formed with equal intervals at a surface ranging perpendicular to the rotational axis along the circumferential direction. The teeth 106 are alternately set with an offset along the rotational axis. For this reason, a recess is formed at every other tooth 106 at an end of the stator basic structure 106 along the rotational axis. The stator coil 222 is disposed in these recesses so as to minimize or eliminate altogether the portion of the stator coil 222 projecting out of the stator core 104 at the end along the rotational axis.

FIG. 78D presents a partial sectional view taken through a plane perpendicular to the rotational axis, showing a tooth 106A1, a tooth 106B1 and a tooth 106B2 in FIG. 78B. As shown in FIG. 78D, a slot-like groove 1041 ranging along the rotational axis is formed between each tooth 106A and the next tooth 106B. The stator coil 222 is housed in these grooves 1041. This structure differs from the stator structure in the related art in that with a single phase winding inserted through the grooves 1041, the stator coil 222 is allowed to assume a simpler structure, which, in turn, assures better productivity and reliability. As shown in FIG. 78D, the individual teeth 106 are connected to each other via the core backs 1040. In addition, a collar 108 is formed at each tooth 106 on the side toward the rotor, and the presence of the collars 108 reduces the width of the grooves 1041 on the rotor side. This structure increases the areal size of the surfaces of the teeth 106 to face opposite the rotor to improve the characteristics of the rotating electrical machine.

The stator cores 104 shown in FIGS. 79 through 81 each adopt the stator basic structure 102 shown in FIG. 77 or FIGS. 78A through 78D with a plurality of teeth 106 disposed over equal intervals along the entire circumference on the side toward the rotor. The stator core 104 in the embodiment includes 20 teeth 106 formed thereupon. The teeth 106 are each connected to the next tooth 106 via a core back 1040, with a space or a slot ranging along the rotational axis, i.e., the groove 1041 mentioned earlier, at which the stator coil is inserted, formed between each pair of neighboring teeth 106. The stator cores 104 shown in FIGS. 77 through 81 each assume a structure having the teeth 106 alternately disposed with an offset along the rotational axis. In other words, a tooth 106A is offset toward the other side relative to the next tooth 106B. By disposing a stator coil 222 in the space created on one side along the axial direction at every other tooth, a stator basic structure 102, which allows the stator to be provided as a compact unit without the stator coil 222 projecting out on one side is achieved. Such a stator basic structure also reduces the copper loss. Likewise, since each tooth 106B is offset toward one side relative to the next tooth 106A, a space is created on the other side along the axial direction at every other tooth. By disposing a stator coil 222 in the space created on the other side at every other tooth, a stator basic structure 102, which allows the stator to be provided as a compact unit without the stator coil 222 projecting out on one side is achieved. Such a stator basic structure also reduces the copper loss.

However, it is not essential that the teeth 106 be alternately disposed with an offset as described above. Even without the offset, any of the stator basic structures 102 may be adopted in a rotating electrical machine to greatly facilitate the installation of the stator coil 222 and thus assure a great improvement in the productivity of stators in rotating electrical machines compared with the related art. In addition, any of the stator basic structures may be adopted in a standard claw pole stator, such as that disclosed in Japanese Laid Open Patent Publication No. 2006-296188 or Japanese Laid Open Patent Publication No. 2005-151785, which includes numerous claws formed on the rotor side, to achieve a great reduction in the inductance at the stator.

The stator cores 104 shown in FIGS. 79 through 81 each include welded areas 1042 where the outer circumferential surfaces of the core backs 1040 located on the side opposite from the teeth 106 are fixed through welding. In order to improve the productivity and minimize material wastage, the stator core 104 is formed by winding along the circumferential direction a thin continuous magnetic steel sheet. The teeth 106 can be offset with ease along the rotational axis by fixing the continuous thin magnetic steel sheet wound along the circumferential direction over the welded areas 1042 located at the outer circumferential surfaces of the core backs 1040 each corresponding to one of the teeth 106 and then forming the core backs 1040 with a press or the like.

FIG. 82 shows a stator coil 222 that may be used in any of the stator basic structures 102. The stator coil 222 used in the embodiment is wave winding. It is to be noted that while a concentrated winding instead of a wave winding may be used in the embodiment, the following explanation is given by assuming that the stator coil 222 is constituted with a wave winding. The stator coil 222 constituted with the wave winding shown in FIG. 82 assumes a continuous shape created by connecting magnetic pole interval portions 224 of the stator coil via magnetic pole end portions 226 located on one side of the stator coil and magnetic pole end portions 228 located on the other side of the stator coil. The magnetic pole interval portions 224 at the stator coil 222 are connected with each other alternately via a magnetic pole end portions 226 located on one side of the stator coil 222 and a magnetic pole end portion 228 located on the other side of the stator coil 222 and are each inserted in one of the grooves 1041 at the stator core 104, ranging along the rotational axis as shown in FIGS. 78A through 81. Alternate recesses are formed each in correspondence to a tooth 106 and assuming every other position at the stator core 104 at either end along the axial direction, with the magnetic pole end portions 226 located on one side of the stator coil 222 inserted at the recesses formed at the one end of the stator core 104. The magnetic pole end portions 228 located on the other side of the stator coil 222 are inserted at the recesses formed at the other end of the stator core 104. It is to be noted that it is not strictly necessary to form the recesses at the two ends of the stator core 104 along the rotational axis. If no recess is formed, the magnetic pole end portions 226 on one side of the stator coil 222 and the magnetic pole end portions 228 on the other side of the stator coil 222 will project out along the rotational axis through the two ends of the stator core 104.

As the coil shown in FIG. 82 is mounted at any of the stator cores 104 shown in FIGS. 79 through 81, the coil will lie astride the grooves 1041 formed along the axial direction at the stator core 104 in a staggered pattern. In other words, the coil covers all the slots, by assuming a coil structure similar to that of a slot teeth motor. The electrical characteristics of such a stator are improved over those of a claw pole stator having claws present between the stator and the rotor.

(Stator in a three-phase AC rotating electrical machine)

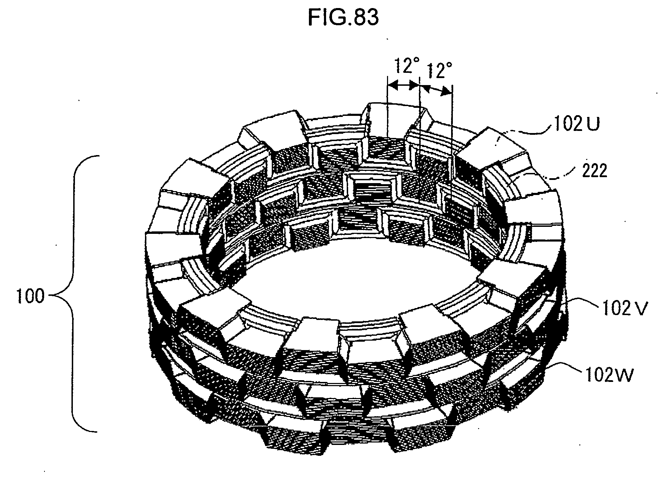

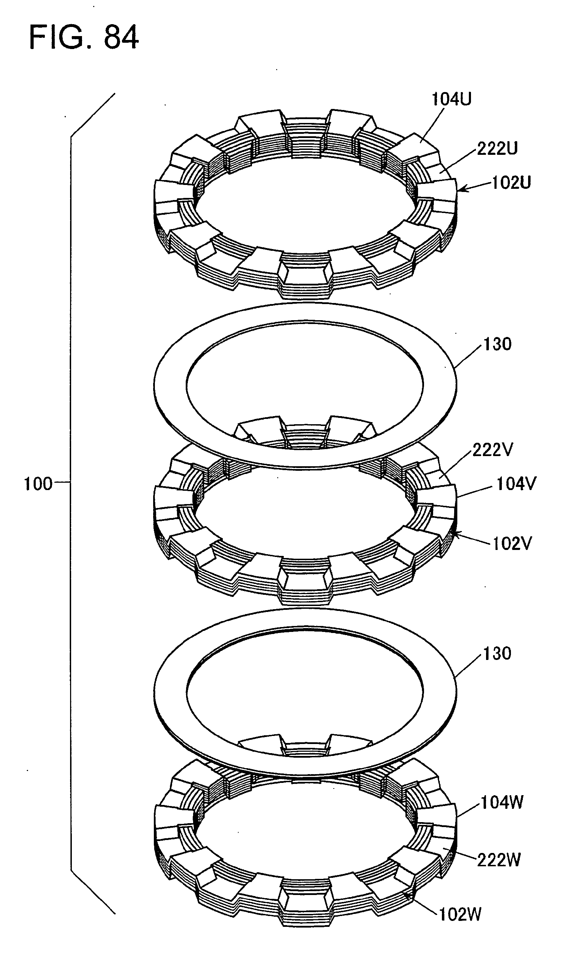

Any of the stator basic structures 102 described above may be adopted in the individual phase stators in a full stator. A stator 100 that may be used in a three-phase AC rotating electrical machine is now described in reference to FIGS. 83 and 84. FIG. 83 is a perspective of the stator 100 in a three-phase rotating electrical machine adopting the stator basic structure shown in FIG. 77 or FIGS. 78A through 78D. FIG. 84 is an exploded perspective of the three-phase AC stator 100 shown in FIG. 83.

In the stator 100 shown in FIG. 83, the stator basic structure 102 is adopted in each of a U-phase stator 102U, a V-phase stator 102V and a W-phase stator 102W. The U-phase stator 102U, the V-phase stator 102V and the W-phase stator 102W are separated from one another along the rotational axis. These phase stators share a common rotor, and the individual phase stators adopting the basic structure 102 are disposed with an offset relative to one another.

(Phase shift between individual phases)

A stator 100 in a multiple-phase rotating electrical machine adopting any of the stator basic structures 102 described above is configured by disposing the individual phase stators corresponding to the various phases along the axial direction. At a two-phase rotating electrical machine, the phase stators each adopting a stator basic structure 102, are disposed relative to each other with a phase difference matching a 90° electrical angle. The phase difference matching the 90° electrical angle corresponds to one quarter of the mechanical angle per pole pair on the rotor side, and the phase stators are disposed with an offset corresponding to this angle.

At a three-phase rotating electrical machine, the phase stators each adopting a stator basic structure 102, are disposed relative to each other with a phase difference matching a 120° electrical angle. The phase difference matching the 120° electrical angle corresponds to one third of the mechanical angle per pole pair on the rotor side, and the phase stators are disposed with an offset corresponding to this angle. FIG. 83 presents an example of a stator 100 that may be included in a three-phase rotating electrical machine. The phase stators in the three-phase rotating electrical machine in FIG. 83 each include 20 poles making up 10 pole pairs. Accordingly, the poles at different phases are offset by a mechanical angle of 12°, i.e., one third of a 36° mechanical angle corresponding to one of the 10 pole pairs.

In the structure described above, a common rotor used in conjunction with the various phase stators constituting the stator 100 and each adopting the stator basic structure 102, does not assume a phase difference. The use of such a common rotor simplifies the overall structure of the rotating electrical machine, which ultimately facilitates miniaturization and improves productivity. In particular, when the rotating electrical machine is used as an alternator, an outstanding advantage is achieved in that high output is achieved via the individual phase stators constituting the stator 100, each adopting the stator basic structure 102, which share the field coil.

As an alternative, instead of installing the individual phase stators in the stator with a phase difference relative to one another, the rotor may be split into blocks each corresponding to a specific phase and poles at the rotor present over an area corresponding to a specific phase stator may assume the corresponding phase in the multiple-phase rotating electrical machine. The relationship that should be achieved, among the various phases assumed at the rotor poles is identical to that having been described in reference to the stator above.

While a two-phase AC stator and a three-phase AC stator have been described as typical examples of the stator 100 in multiple-phase rotating electrical machines, a similar principle applies in a multiple-phase AC stator assuming a greater number of phases. For instance, the stator 100 in a six-phase alternator may be configured by disposing six phase stators each adopting the stator basic structure 102 along the axial direction, with a phase difference of 60° electrical angle. By splitting the six-phase alternator into two blocks each corresponding to three phases and then connecting in parallel the to three-phase blocks after rectification, the maximum current corresponding to each phase can be lowered, allowing the use of a rectifier circuit or the like with a smaller current capacity.

(Three-phase stator structure)

A stator 100 in a three-phase AC rotating electrical machine has been described in reference to FIG. 83 as a typical example of the stator 100 and a multiple-phase rotating electrical machine. A specific structure that may be adopted in this stator 100 is now described in reference to FIG. 84. The structure includes three stator blocks, i.e., a U-phase stator 102U, a V-phase stator 102V and a W-phase stator 102W, each adopting either stator basic structure 102 having been explained in reference to FIG. 77 or FIGS. 78A through 78D, disposed side-by-side along the axial direction. In order to reduce the extent of magnetic flux leakage occurring between the different phases, magnetic insulators 130 to function as a magnetic shield are each disposed between the individual phases. While the magnetic insulators 130 are essentially an option that may be installed as necessary, the reduction in magnetic flux leakage ultimately improves the efficiency and improves the characteristics.

It is desirable to form the magnetic insulators 130 by using a nonconductive material such as a nonmagnetic high polymer material or ceramic. In addition, by forming the magnetic insulators 130 with a material having high thermal conductivity, better heat releasing efficiency and the like may be achieved. Although not shown, the magnetic insulators 130 may each include a groove, a hole, a projection, a post or a spigot joint to be used when positioning the stator cores and thus assume a positioning function as well. In such a case, the phase stators 102U through 102W can be accurately positioned relative to each other. In other words, the phase stators must be positioned accurately, since the positions of the phase stators 102U through 102W assumed along the circumferential direction, their coaxial alignment and the like, affect the torque ripple in the rotating electrical machine.

The magnetic shield may be formed by using a metal material instead. More specifically, the magnetic insulators may be constituted of an aluminum alloy, a nonmagnetic stainless steel alloy or a copper alloy. Lightweight titanium, too, may be another option, although it is not as viable from the viewpoint of its cost performance. The resin materials that may be used to form the magnetic insulators include LCP (liquid crystal polymer), PPS (polyphenylene sulfide resin), PBT (polybutylene terephthalate resin), PET (polyethylene resin), nylon ® reinforced with glass fiber and PC (polycarbonate resin). Carbon fiber-reinforced resin and thermosetting resins such as epoxy resin and unsaturated polyester resin, too, are options that may be considered. It is desirable to select the optimal material in conformance to specific conditions set based upon the thermal and mechanical strength requirements of the particular motor or generator. The magnetic insulators may be manufactured by using aluminum or copper alloy through die casting, whereas they may be manufactured by using a stainless steel alloy through machining or cold or warm casting. The magnetic insulators may be manufactured by using a resin material through injection molding or the like. When a metal material is used, the shape of the magnetic shield should be determined by considering the likely path of eddy currents.

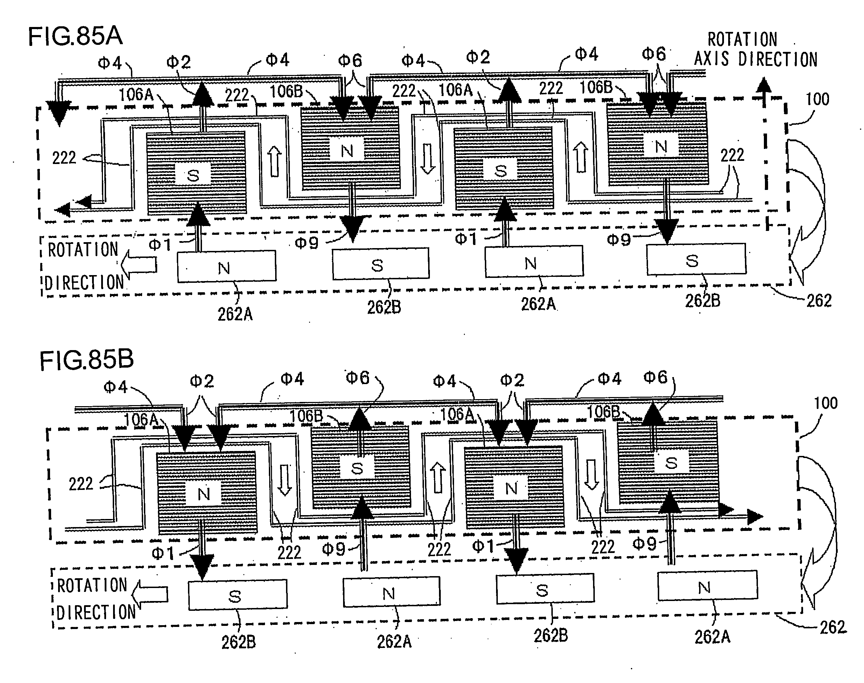

FIGS. 85A and 85B illustrate the operation of an alternator. The alternator in this example is the automotive alternator shown in FIGS. 18 to 21 that includes the stator 100 in FIG. 83. FIG. 85A and 85B each present a conceptual development indicating the relationship between the magnetic poles (the teeth 106A and 106B) at the stator 100 and the rotor claw poles 262A and 262B at the Rondell-type rotor 252. While the teeth 106A and 106B and the rotor claw poles 262A and 262B are actually disposed so as to face opposite each other, the FIGS. 85A and 85B each illustrate the teeth and the rotor claw poles side-by-side on the upper side and the lower side of the figure so as to better illustrate the positional relationship between them. While the rotor claw poles 262A and 262B face opposite the teeth 106 at all the phase stators set side-by-side along the axial direction, FIGS. 85A and 85B only shows the teeth at a single phase stator. It is to be noted that the operational principle described below also applies to the basic operations of the stators shown in FIG. 77 and FIGS. 78A through 78D. FIG. 85A illustrates a state in which the rotor claw poles 262A at the rotor are pulled toward the teeth 106A at the stator 100, whereas FIG. 85B illustrates a state in which the other rotor claw poles 262B are pulled toward the teeth 106A.

In the state shown in FIG. 85A, a magnetic flux Ø1 flowing from each rotor claw pole 262A toward a nearby tooth 106A increases, a magnetic flux Ø2 passing through the tooth 106A to advance toward the corresponding core back 1040 increases, a magnetic flux Ø4 passing through the core back 1040 increases, and magnetic fluxes Ø6 and Ø9 flowing from the core back 1040 to pass through the tooth 106B to flow back to the other rotor claw pole 262B increase. These magnetic fluxes interlink with the stator coil 222 disposed inside the grooves 1041, thereby inducing an electric current flowing as indicated by the arrows at the stator coil 222.

As the rotor claw poles 262A pull away from the teeth 106A and instead the rotor claw poles 262B are drawn toward the teeth 106A, as shown in FIG. 85B, the magnetic flux direction at the stator is reversed, so that the magnetic flux increases along the direction in which the magnetic flux 09 is taken in from each rotor claw pole 262A to a nearby tooth 106B, the magnetic flux 06 at the tooth 106B passes through the corresponding core back 1040 as the magnetic flux Ø4, then passes through the teeth 106A as the magnetic flux Ø2 and the magnetic flux Ø1 returns to the other rotor claw pole 262B. Thus, as indicated by the arrows, an electric current flowing along the direction opposite from that shown in FIG. 85A is induced at the stator coil 222.

While the operation at a single phase stator in the stator 100 has been described above, the U-phase stator 102U, the V-phase stator 102V and the W-phase stator 102W each engage in the operation described above in conjunction with the common rotor, thereby generating three-phase AC currents. It is to be noted that the number of AC currents generated in the generator increases by increasing the number of phase stators constituting the stator 102, each adopting a stator basic structure 102 so as to assume a greater number of phases at the stator.

(Manufacturing method that may be adopted when manufacturing the stator core 104)

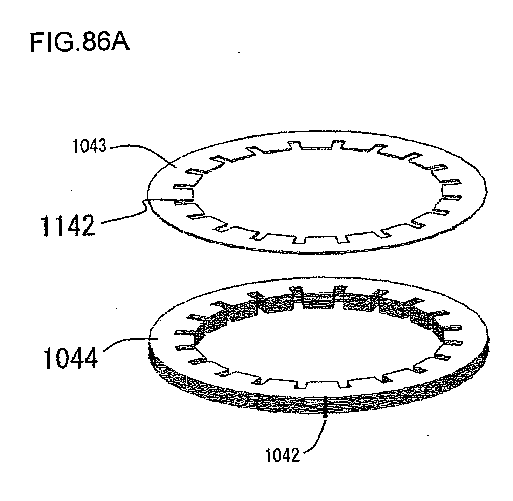

Next, in reference to FIGS. 86A through 86C, a method that may be adopted when manufacturing the stator core 104 is described. A metal sheet such as an electromagnetic steel sheet, a cold-rolled steel sheet or an electromagnetic stainless steel sheet to constitute stator magnetic poles in the rotating electrical machine is machined, e.g., press punched, thereby forming a stator core sheet 1042 shown in FIG. 86A. Notches 1142 to be used to form grooves 1040 are present at the stator core sheet 1043. Such stator core sheets 1043 are layered one on top of another along the rotational axis to manufacture a laminated core 1044. The laminated core 1044 is fixed through welding. While welded areas 1042 are present over equal intervals over the entire outer circumference of the laminated core 1044, FIG. 86A only shows a single welded area. It is desirable to set the welded areas in the outer circumferential areas of the core backs 1040 where they are not likely to affect the magnetic characteristics, and as explained above, the welded areas should be set over equal intervals, each to range over the entire outer circumferential area of a core back 1040. For instance, the welded areas may be set each in correspondence to a tooth 106 over the core back 1040 present on the outer circumferential side of the tooth.

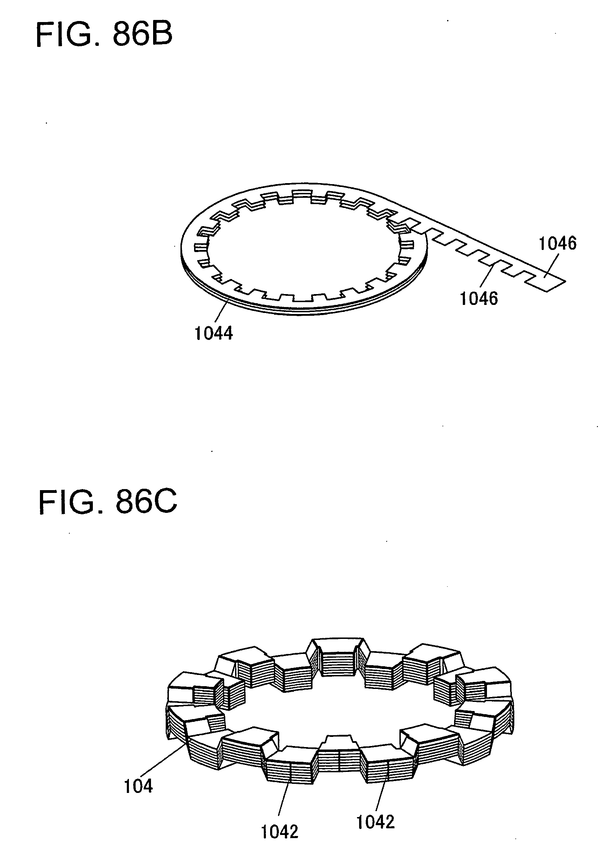

The stator core sheets 1043 may be formed through laser machining, electrical discharge machining or the like, instead of punching such as press machining. The laminated core 1044 formed as shown in FIG. 86A, may be further machined, e.g., into a shape having stator magnetic poles alternately offset along the rotational axis as shown in FIG. 86C. Any of the stator cores 104 shown in FIGS. 79 through 81 is thus manufactured. The stator coil 222 in FIG. 82 is inserted through the stator core 104 and is then fixed onto the stator core 104. In the example presented in FIG. 86A, stator core sheets 1043 each having notches 1142 formed therein are formed through punching and then the stator core sheets are stacked one on top of another to form a laminated assembly which is to constitute the laminated core 1044.

FIG. 86B illustrates another method that may be adopted when manufacturing the laminated core 1044. A thin steel sheet 1046 with notches 1146 to form grooves 1041 at which the stator coil 222 is to be inserted, set over equal intervals and similar to the notches 1143, is formed through punching with a press or the like. Next, the thin steel sheets are wound, as shown in FIG. 86B, to form a laminated core 1044. It differs from the laminated core 1044 shown in FIG. 86A in that the stator core 104 in FIG. 86B is constituted with a single piece of material. An advantage out of the method shown in FIG. 86B is a lesser extent of material wastage compared to the method shown in FIG. 86A. The stator core 104 is manufactured by using the laminated core 1044 in FIG. 86B in a manner similar to that described in reference to FIG. 86A, in which the layers of the thin steel 1046 are fixed together through welding.

As shown in FIG. 86C, the stator core 104 assumes an offset structure whereby each tooth is offset relative to the adjacent teeth along the rotational axis with recesses formed at alternate ends of the stator core 104 along the rotational axis, each in correspondence to one of the teeth. The stator coil 222 is disposed in these recesses to achieve the stator basic structure 102 in FIG. 77 or FIGS. 78A through 88D. However, the recesses formed at the two ends along the rotational axis by alternately offsetting the teeth as shown in FIG. 86C are not a critical requirement essential for the operation of a rotating machine. If no such recesses are present, the field coil 222 will alternately project out at the two ends of the stator core 104 along the rotational axis. In addition, while the core backs 1040 in the structure shown in FIG. 86C are formed with an acute angle, they may instead assume a smooth curved contour to facilitate the production process and minimize the extent of mechanical distortion. The stator core 104 shown in FIG. 81 includes core backs with such a smooth, curved contour.

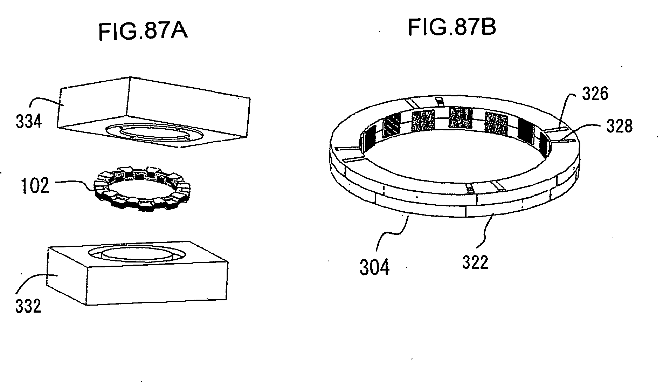

FIGS. 87A and 87B present an example of a method that may be adopted to manufacture a phase stator having a magnetic insulator, which may be included as an integrated part in the stator basic structure 102 in FIG. 77 or FIGS. 78A through 78D. It is to be noted that by combining stator blocks corresponding to the various phases and each having as an integrated part thereof a magnetic insulator, the stator 100 shown in FIG. 83 can be manufactured with great ease.

FIG. 87B shows a stator block 304 that includes a magnetic insulator formed as an integrated part thereof. The stator block 304 is formed by cladding a phase stator core 104 and a stator coil 222 corresponding to a given phase with a resin 322 or the like. By assembling a plurality of such phase stator blocks 304 along the rotational axis, the stator 100 can be manufactured with ease.

FIG. 87A shows the structure adopted in a die used in the production of the stator block 304. Inside a base die 332, a holding portion to be used to accurately regulate the positional relationship to be achieved along the circumferential direction in the stator basic structure 102 is present. It is to be noted that the stator basic structure 102 includes the stator core 104 having the stator coil 222 wound around it. The phase stator adopting the stator basic structure 102 is locked at the holding portion and the phase stator adopting the stator basic structure 102 is clamped via a die 334 having formed therein an intake port (gate). As the upper die and the lower die interlock, a space to be filled with resin is formed inside. As the resin is poured in, the space present between the laminated stator core 104 to constitute the magnetic poles and the stator coil 222 and the spaces formed at the two ends along the rotational axis to be used as the magnetic shield become filled with the resin. With the resin layer to function as the magnetic shield formed at the two ends of the stator core 104 and the stator coil 222 along the rotational axis, the quantity of magnetic fluxes leaking from one stator block 304 to another stator block 304 and visa versa as they are stacked one on top of another can be reduced via the resin layer.

The resin layer described above may include positioning portions formed therein. For instance, the stator block 304 shown in FIG. 87B includes projections 326 and grooves 328 formed at the surface of the resin layer. When manufacturing a multiple phase stator, the stator blocks 304 each corresponding to a given phase must be stacked one on top of another along the rotational axis with the individual stator blocks 304 held at predetermined phases along the circumferential direction. By forming the projections 326 and the grooves 328 at the surface of the resin layer so as to achieve a predetermined phase relationship, the projections 326 at one of the stator blocks 304 stacked one on top of another are inserted in the grooves 328 at the other stator block 304 and thus, accurate positioning along the circumferential direction is enabled.

The method described above may be adopted in conjunction with a resin material such as LCP (liquid crystal polymer), PPS (polyphenylene sulfide resin), PBT (polybutylene terephthalate resin), PET (polyethylene resin), nylon ® reinforced with glass fiber or PC (polycarbonate resin) . Carbon fiber-reinforced resin and thermosetting resins such as epoxy resin and unsaturated polyester resin, too, are options that may be considered. It is desirable to select the optimal material in conformance to specific conditions set based upon the thermal and mechanical strength requirements of the particular motor or generator.

(Other manufacturing methods that may be adopted when manufacturing the stator core 104)

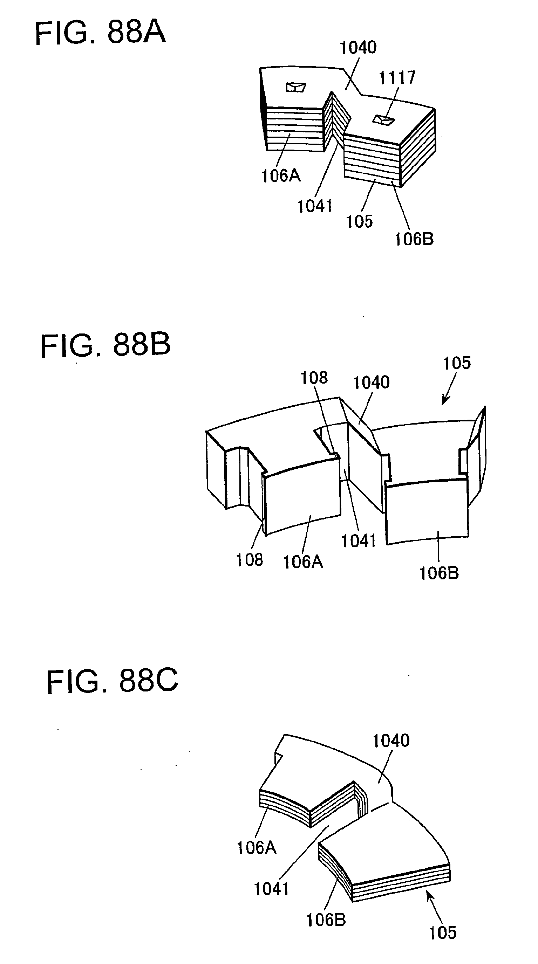

FIGS. 88A through 88C each illustrate another manufacturing method that may be adopted when manufacturing the stator core 104 in FIG. 86A, 86B or 86C or another shape that the stator core 104 may assume. In the examples presented in FIGS. 86A through 86C, the stator cores 104 are invariably constituted with layers of electromagnetic steel sheeting continuous along the entire circumference. However, desirable electrical characteristics may be achieved without using sheeting that ranges continuously over the entire circumference. In each of the examples presented in FIGS. 88A through 88C, a magnetic circuit at the stator is formed in units of core blocks each corresponding to a single pole pair (corresponding to two poles). FIG. 88A shows a pole pair 105 at the stator core 104 shown in FIGS. 79 through 81. In a rotating electrical machine functioning as a motor or a generator, the magnetic fluxes corresponding to a single pole pair originating from the rotor only need to flow through the pole pair 105 at the stator core 104 and thus, no magnetic flux flow between adjacent pole pairs is required. Accordingly, the core may be formed with split core blocks disposed along the circumferential direction and characteristics comparable to those in a rotating electrical machine adopting a single-piece core structure will still be achieved. A plurality of pole pairs 105, each made up with a tooth 106A and a tooth 106B as shown in FIG. 88A may be assembled together to form the stator core 104 achieving the structure described earlier to be included in a motor or a generator. It is to be noted that the same reference numerals are assigned to components fulfilling functions or advantages similar to those having been described earlier.

FIG. 88B shows a pole pair 105 made up with a tooth 106A and a tooth 106B each having a collar 108 formed at the front end thereof. The collars 108 fulfill a function of gathering the magnetic fluxes flowing in from the rotor with efficiency and a function of restraining the stator coil 222 wound around the core so as to prevent it from distending inward. While the teeth in the pole pair 105 in FIG. 88C assume a staggered pattern along the axial direction, the magnetic poles sustain a positional relationship in which they do not overlap along the rotational axis. This is an example in which a special shape is assumed on the core side in order to allow a greater space to be used for the installation of the stator coil 222 and improve the productivity and ease of work through simplification of the shape of the stator coil 222.

While the stator cores 104 shown in FIGS. 79 through 81 and the pole pairs 105 in FIGS. 88A through 88C invariably adopt a laminated structure achieved by layering thin magnetic sheets, stator cores and pole pairs may be constituted with compressed powder cores formed by compressing magnetic soft composite or the like. However, the use of laminated steel sheets assures better strength, reliability and magnetic characteristics. It is to be noted that in FIGS. 88B and 88C, the same reference numerals are assigned to components having similar functions or advantages to those described earlier so as to preclude the necessity for a repeated explanation thereof.

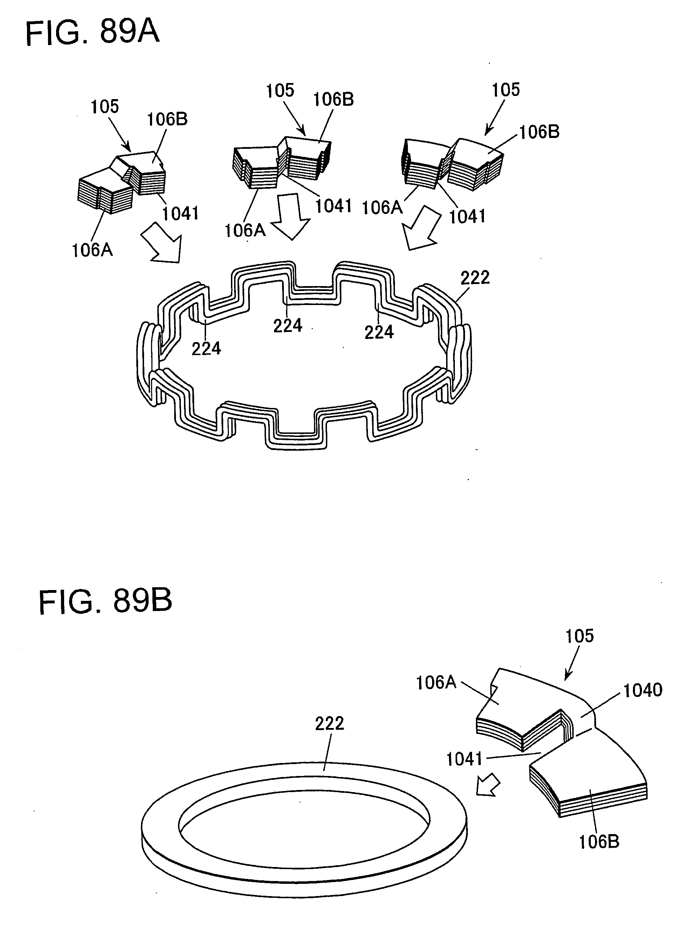

FIGS. 89A and 89B each illustrate a method that may be adopted when manufacturing a phase stator core 104 corresponding to a given phase by using a plurality of pole pairs 105, such as that shown in FIG. 88B. The magnetic pole interval portions 224 at the stator coil 222 shown in FIG. 82 are each inserted at one of the grooves 1041 ranging between the teeth 104A and 104B along the rotational axis. Then, the individual pole pairs 105 are linked to one another through welding or the like, thereby forming a stator core 104 as a unit integrated along the circumferential direction.

In the structure shown in FIG. 89A or any of FIGS. 77 through 81, the magnetic pole interval portions 224 at the stator coil 222 are inserted at the grooves 1041 ranging along the rotational axis. In the example presented in FIG. 89B, on the other hand, pole pairs 105 each made up with a tooth 106A and a tooth 106B completely offset relative to each other along the rotational axis, as shown in FIG. 88C are used. In this case, the stator coil 222 can be inserted at the grooves 1041 without having to form a significant bend along the rotational axis. The stator coil 222 can thus be manufactured with a higher level of productivity. In addition, since the stator coil 222 can be inserted at the grooves 1041 more easily, better ease of work is assured. It is to be noted that the structure may be found less than ideal, since the sectional area of the magnetic circuit facing opposite the rotor is reduced to result in a lower output. However, as long as very high output is not required, the structure shown in FIG. 89B may be advantageous, as manufacturing costs can be reduced.

The basic structure 102 of the stator in the assembled state is similar to that shown in FIG. 77 or FIGS. 78A through 78D. The stator coil 222 is wound around along the rotational axis so as to alternate between one end and the other end, as shown in FIGS. 78B through 78D. The tooth 106A and the tooth 106B in each pole pair are not completely offset relative to each other along the axial direction but partially overlap along the axial direction. This means that a positional arrangement substantially similar to that adopted in the coil installation at a slot teeth rotating electrical machine is achieved as shown in the sectional view in FIG. 78D. As a result, a magnetic circuit is formed at the surfaces facing opposite the rotor with a high level of efficiency and outstanding electrical characteristics are achieved. At the same time, the structure of the stator coil 222 is greatly simplified compared to that of the stator coil in the slot teeth rotating electrical machine, assuring outstanding productivity. In addition, the simpler shape achieved at the stator coil 222 assures better safety and liability.

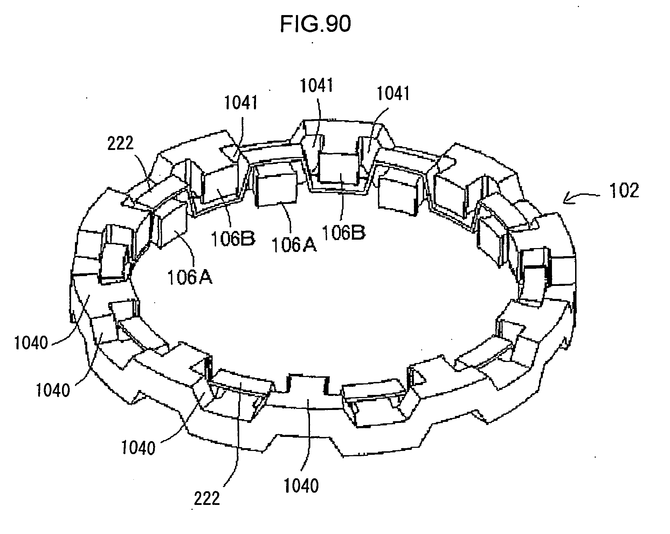

FIG. 90 presents another example of the stator coil 222. The stator coil 222 achieved in the structure shown in FIG. 77 or FIGS. 78A through 78D is bent with an angle substantially matching the right angle over the area where the portion of the stator coil ranging along the rotational axis connects with the portion ranging along the circumferential direction. In other words, the stator coil 222 includes an area ranging substantially parallel to the rotational axis. If a coated magnet wire used in practical applications is bent at a right angle, the resin coating applied for purposes of insulation may become damaged and, for this reason, extra care needs to be taken during the manufacturing process and thus, it is desirable to form the stator coil with a certain degree of bend radius. The stator coil 222, which is to take on the shape shown in FIG. 77 or FIGS. 78A through 78D therefore, needs to be formed by ensuring that the resin coating remains undamaged.

In the example presented in FIG. 90, the grooves 1041 each present between a tooth 106A and the next tooth 106B widen along the circumferential direction. The gaps between the magnetic poles at the core are widened so as to install the portion of the stator coil 222 ranging along the rotational axis with a tilt. The bend radius in this structure can be formed more gently and thus, the forming process is facilitated. However, the structure shown in FIG. 77 or FIGS. 78A through 78D is more advantageous in that higher output is achieved more easily by improving the space factor of the stator coil 222 (the ratio of the sectional area of the conductor to the slot). For this reason, it is desirable to ensure that the space factor of the stator coil 222 is not reduced, in order to sustain an acceptable level of efficiency when adopting the structure shown in FIG. 90.

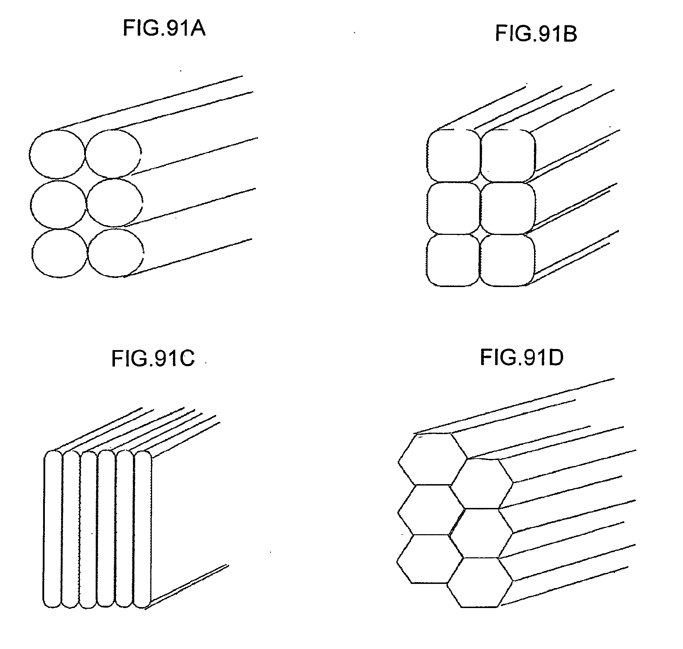

FIGS. 91A through 91D each present a sectional shape that the stator coil 222 may assume in order to improve the space factor. The stator coil may be normally constituted with a magnet wire having a round section such as that shown in FIG. 91A. A better space factor may be achieved, however, by using a flat magnet wire and aligning it in an arrangement such as that shown in FIG. 91B or FIG. 91C. In addition, if the stator coil 222 in FIG. 82 is manufactured in advance and then integrated with the stator core 104, an additional process of forming the stator coil 222 so as to achieve a desirable sectional shape should be performed. The sectional shape of the stator coil 222 may be modified by, for instance, altering a substantially round sectional shape to a substantially hexagonal shape such as that shown in FIG. 91D to improve the space factor.

(Applications in rotating electrical machines such as motors)

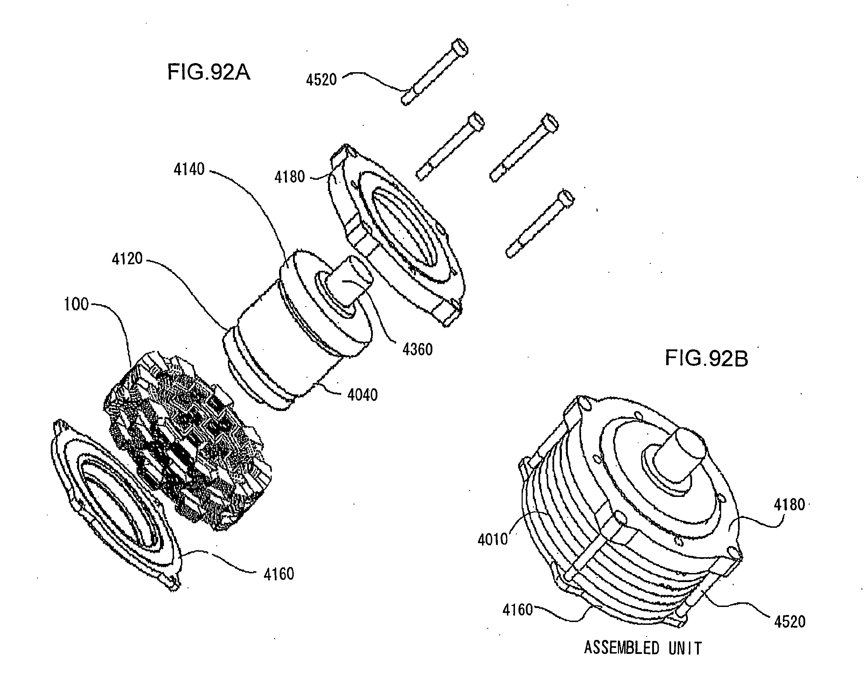

FIG. 92A is an exploded sectional view of a rotating electrical machine that includes the stator 100 shown in FIG. 83. A bearing 4140 and a bearing 4120 are respectively fixed at a front-side housing 4180 and a rear-side housing 4160 and a shaft 4360 is rotatably held at the bearings 4140 and 4120. A rotor 4040 is fixed to the shaft 4360. Outside the rotor 4040, the stator 100 shown in FIG. 83 is disposed via a void. As the housing 4180 and the rear-side housing 4160 are fastened together through bolts 4520, the stator 100 becomes locked and held between the front-side housing 4180 and the rear-side housing 4160. It is to be noted that although not shown, an outer ring 4010 constituted of an aluminum material or the like is disposed on the outer circumference of the stator 100 so as to seal the rotating electrical machine. FIG. 92B is a perspective of the assembled rotating electrical machine.

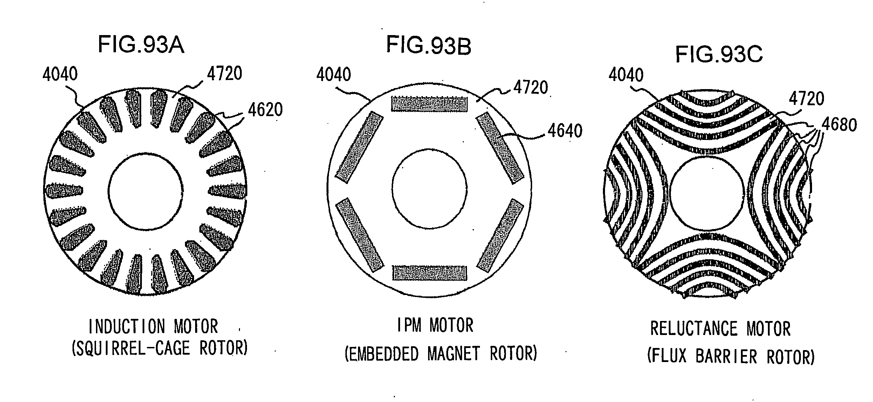

The rotor 4040 may be the squirrel-cage rotor shown in FIG. 93A, the rotor that includes permanent magnets shown in FIG. 93B, the rotor with built-in magnetic flux barriers shown in FIG. 93C or the like. It is to be noted that FIGS. 93A through 93C each present a sectional view taken through a plane perpendicular to the rotational axis of the rotor. The squirrel-cage rotor 4040 in FIG. 93A includes a plurality of conductor bars 4620 ranging along the rotational axis side-by-side with equal intervals along the entire outer circumference inside a rotor core 4720. The conductor bars 4620 are electrically shorted at the two ends of the rotational axis at the rotor 4040 via a shorting ring (not shown). As an AC current is supplied to the stator 100 and a rotating magnetic field is generated, electric currents are induced at the conductor bars 4620, which, in turn, generates a rotational torque. By controlling the relationship between the AC current supplied to the stator 100 and the electric currents induced at the rotor 4040, the rotational torque at the rotor 4040 or the level of power induced at the stator coil can be adjusted.

FIG. 93B shows a rotor 4040 constituted with a permanent magnet rotor. Permanent magnets 4640 may be disposed at the surface of the rotor core 4720 at the rotor 4040 or they may be embedded in the rotor core. In the example presented in FIG. 93B, the permanent magnets 4640 are embedded inside the rotor core 4720. As an AC current is supplied to the stator 100, a rotatingmagnetic field is generated, thereby generating a rotational torque at the rotor 4040 equipped with the permanent magnets 4640. By controlling the AC current supplied to the stator 100 and the phase of the magnetic poles at the stator 100 relative to the rotor 4040,the rotational torque at the rotor 4040 or the level of power generated in the generator can be adjusted.

FIG. 93C shows a rotor 4040 that includes magnetic flux barriers 4680. The magnetic flux barriers, constituted with, for instance, voids, are formed on the magnetic path along the q axis at the rotor core 4720 to create a difference between the magnetic resistance along the d-axis and the magnetic resistance along the q-axis due to the rotating magnetic field at the stator 100, and a rotational torque is generated based upon the difference in the magnetic resistance.

As described above, the stator 100 may be used in conjunction with various types of rotors and together they may function as generators or motors in diverse applications. Regardless of which of such applications the stator is to be used in, the simple shape of the stator 100 and particularly the simple shape of the stator coil 222 will assure excellent productivity. In addition, since the presence of coil ends of the stator coil 222 along the axial direction is reduced or eliminated altogether by adopting the embodiment, miniaturization is achieved and the extent of copper loss is reduced.

In reference to the 29th embodiment, rotating electrical machines assuming the following structures have been described.

(b1) A rotating electrical machine including a rotor rotatably held and a stator that includes at least two stator cores disposed side-by-side along the axis of the rotor, with the stator cores each having formed therein a plurality of magnetic poles disposed along the circumferential direction, grooves that range along the axial direction formed between the magnetic poles and a stator coil disposed inside the grooves.

(b2) A rotating electrical machine including a rotor rotatably held and a stator that includes at least three stator cores disposed side-by-side along the axis of the rotor, with the stator cores each having formed therein a plurality of magnetic poles disposed along the circumferential direction, grooves that range along the axial direction formed between the magnetic poles and a stator coil disposed inside the grooves.

(b3) The rotating electrical machine described in (b1) or (b2), in which the plurality of magnetic poles are alternately disposed with an offset along the rotational axis so as to form recesses and projections at the two ends of the stator core along the axial direction with the stator coil disposed through the grooves and the recesses.

(b4) The rotating electrical machine described in any of (b1) ~ (b3), in which the stator cores are each formed by winding multiple times a single-piece thin steel sheet along the circumferential direction to form a laminated assembly with layers stacked one on top of another along the axial direction.

(b5) The rotating electrical machine described in any of (b1) ~ (b3), in which the stator cores disposed side-by-side along the axial direction are each split along the circumferential direction into blocks each corresponding to a poll pair made up with two magnetic poles.

(b6) The rotating electrical machine described in any of (b1) ~ (b3), in which the stator cores disposed side-by-side along the axial direction are each formed as an integrated unit of thin metal sheets layered one on top of another along the axial direction, held together through caulking or welding.

(b7) The rotating electrical machine described in any of (b1) ~ (b6), which includes a rotor constituent with a randle claw pole rotor, in which an AC current is induced at the stator coil as the rotor rotates.

(b8) The rotating electrical machine described in (b7), in which the magnetic poles at the stator are claw poles with a skew of 0 ~ 20° relative to the axial line.

(b9) The rotating electrical machine described in (b7) or (b8), in which the number of poles at the rotor matches the number of magnetic poles at the stator.

(b10) The rotating electrical machine described in (b7) or (b8), in which the number of poles at the rotor and the number of poles at the stator are both set to 20.

**Claims**

1. A rotating electrical machine, comprising:

   a claw pole stator constituted with a stator core that comprises a plurality of claw poles and a stator coil wound inside the stator core; and
   a rotor rotatably disposed at a position facing opposite the claw poles, wherein:

      the stator core is constituted of split blocks each corresponding to at least one of magnetic pole pairs each made up with two claw poles assuming different magnetic polarities when an electric current is supplied to the stator coil.

2. A rotating electrical machine according to claim 1,
   wherein:

   the stator core is constituted of split blocks each corresponding to one magnetic pole pair.

3. A rotating electrical machine according to claim 1,
   wherein:

   each of the blocks comprises two members separated from each other along an axial direction over an area where the stator coil is wound, and is formed by integrating the two members.

4. A rotating electrical machine according to claim 1,
   wherein:

   the blocks are each positioned along a circumferential direction via a positioning member.

5. A rotating electrical machine according to claim 1,
   wherein:

   the blocks are held between holding plates each disposed on either side of the blocks along an axial direction.

6. A rotating electrical machine according to claim 5,
   wherein:

   the holding plates each comprises a holding portion constituted with a groove or a projection to be used to hold the blocks.

7. A rotating electrical machine according to claim 5,
   wherein:

   the holding plates paired up with each other enclose an outer circumference of the stator core.

**8.** A rotating electrical machine according to claim 5,
wherein:

the holding plates paired up with each other are constituted of a nonmagnetic material.

**9.** A rotating electrical machine according to claim 5,
wherein:

the holding plates paired up with each other are constituted of a nonconductive material.

**10.** A rotating electrical machine according to claim 5,
wherein:

the stator comprises a plurality of phase stators disposed along the axial direction;
a recess is formed at an outer end surface along the axial direction at one of the holding plates holding each of the phase stators and a projection that fits into the recess is formed at an outer end surface along the axial direction at the holding plate holding the phase stator on another side; and
the plurality of phase stators are disposed side-by-side along the axial direction by fitting the projection in the recess.

**11.** A rotating electrical machine, comprising:

a stator constituted with a stator core that comprises a plurality of claw poles and a stator coil wound inside the stator core; and
a rotor rotatably disposed at a position facing opposite the claw poles, wherein:

the stator core comprises a plurality of magnetic pole pairs each made up with at least two claw poles to assume different magnetic polarities, with the plurality of magnetic pole pairs disposed with an interval set therebetween along a circumferential direction.

**12.** A rotating electrical machine according to claim 11,
wherein:

a terminal end of the stator coil is led out to an outside through an area over which a magnetic pole pair is set apart from another magnetic pole pair.

**13.** A rotating electrical machine according to claim 12,
wherein:

the magnetic pole pairs are held between holding plates each disposed on either side thereof along an axial direction, with the holding plates each having formed therein a passing hole through which the terminal line of the stator coil passes.

**14.** A rotating electrical machine according to claim 13,
wherein:

the holding plates each comprise a guide groove ranging from the passing hole toward an outer circumferential side.

**15.** A rotating electrical machine according to claim 11,
wherein:

the magnetic pole pairs are held between holding plates each disposed on either side thereof along an axial direction; and
the holding plates each comprise seat surfaces where the stator coil is held so as to form a gap between the magnetic pole pairs and the stator coil, located over areas setting the magnetic pole pairs apart from one another.

**16.** A rotating electrical machine, comprising:

a stator constituted with a stator core formed by laminating magnetic sheets and a stator coil (114) wound inside the stator core; and
a rotor rotatably disposed relative to the stator,

wherein:

the stator core comprises first claw poles extending from one side toward another side along an axial direction and second claw poles extending from the other side toward the one side along the axial direction, with the first claw poles and the second claw poles disposed so as to alternate with each other along a circumferential direction at the stator core; and
at the first claw poles and the second claw poles, the magnetic sheets are laminated one on top of another along the circumferential direction so that layered surfaces face opposite the rotor.

17. A rotating electrical machine according to claim 16,
wherein:

the stator core comprises a plurality of blocks, each made up with a first claw pole and a second claw pole paired up with each other, disposed along the circumferential direction; and
the blocks are each formed to assume a curved contour so that the first claw pole and the second claw pole are set along the circumferential direction.

18. A rotating electrical machine according to claim 16,
wherein:

the first claw poles and the second claw poles are formed by laminating the magnetic sheets assuming different shapes.

19. A rotating electrical machine according to claim 18,
wherein:

a length of the magnetic sheets constituting the first claw poles and the second claw poles, measured along the axial direction, is greatest at a center along the circumferential direction and gradually decreases toward ends along the circumferential direction.

FIG.1A

FIG.1B

FIG.2A

FIG.2B

FIG.3

FIG.4

## FIG.5

FIG.6A

FIG.6B

FIG.6C

FIG.7

FIG.8A

FIG.8B

FIG.8C

FIG.8D

TIME T1

FIG.8E

TIME T2

FIG.9A

FIG.9B

FIG.9C

FIG.9D

FIG.10A

FIG.10B

FIG.10C

30a

311a

315

316

FIG.11A

30b

311b

317

FIG.11B

FIG.12A

FIG.12B

FIG.13A

FIG.13B

FIG.13C

FIG.13D

117    116

111

**FIG.14A**

117

111    116

**FIG.14B**

400b    400
410b
410a    400a

**FIG.14C**

116
1131a, 1131b
117
111

**FIG.14D**

## FIG.15

B-H CURVES OF VARIOUS MATERIALS

FIG.16

FIG.17A

FIG.17B

FIG.18

FIG.19

FIG.20

## FIG.21

FIG.22

45°   15°   15°

1 2 a

1 2 b

20U

20V

20W

# FIG.23A

# FIG.23B

122

121

AXIAL
DIRECTION

# FIG.23C

122

10b

10a

10c

# FIG.23D

122

10b

10a

# FIG.23E

10b

10b

122

10a

122

10a

12

# FIG.23F

10b

122

10b

10a

10a

12

## FIG.24A

## FIG.24B

## FIG.24C

## FIG.24D

## FIG.24E

FIG.25

FIG.26

# FIG.27

FIG.28

# FIG.29

ASSEMBLED UNIT

FIG. 30A

FIG. 30B

FIG. 30C

FIG.31A

3

1 2

4

FIG.31B

3

300b

4

1 2

FIG.31C

302

303

1 2

301

## FIG.32A

70   1 2   4

## FIG.32B

1 2

70   4

## FIG.32C

302

303

1 2

305

20

305

1 2

301

FIG.33

10b

10a

1 2

# FIG.34A

Gs

Bs

SKEW ANGLE = CONSTANT

12

12

# FIG.34B

RELATIONSHIP BETWEEN STATOR CLAW POLE GAP RATIO AND INDUCTION VOLTAGE

INDUCTION VOLTAGE (V)

0.0 0.1 0.2 0.3 0.4 0.5 0.6 0.7 0.8 0.9 1.0

STATOR CLAW POLE GAP RATIO (GS/BS)

# FIG.34C

RELATIONSHIP BETWEEN STATOR CLAW POLE GAP RATIO AND OUTPUT CURRENT

OUTPUT CURRENT (A) AT 6000 RPM

OUTPUT CURRENT (A) AT 1800 RPM

6000r/min

1800r/min

0.0    0.2    0.4    0.6    0.8    1.0

STATOR CLAW POLE GAP RATIO (GS/BS)

# FIG.35A

GS = CONSTANT VALUE

BS = CONSTANT VALUE

SKEW ANGLE = $\theta 1$

12

# FIG.35B

RELATIONSHIP BETWEEN STATOR CLAW POLE
SKEW ANGLE AND INDUCTION VOLTAGE

INDUCTION VOLTAGE (V)

-20    -10    0    10    20    30    40    50

STATOR CLAW POLE SKEW ANGLE $\theta 1$ (° )

# FIG.35C

RELATIONSHIP BETWEEN STATOR CLAW POLE
SKEW ANGLE AND RIPPLE VOLTAGE

RIPPLE VOLTAGE (V)

6
5
4
3
2
1
0

-20    -10    0    10    20    30    40    50

STATOR CLAW POLE SKEW ANGLE $\theta 1$ (° )

# FIG.36A

$$q=8, \Delta \beta =180/(3*8)=7.5°(\text{ELECTRICAL ANGLE})$$
$$= 0.47° \text{ (MECHANICAL ANGLE)}$$

CLAW INTERVAL $= 22.5° - 0.47° = 22.03°$

# FIG.36B

$$q=4, \Delta \beta =180/(3*4)=15°(\text{ELECTRICAL ANGLE})$$
$$= 0.94° \text{ (MECHANICAL ANGLE)}$$

CLAW INTERVAL $= 22.5° - 0.94° = 21.56°$

EP 2 012 409 A2

FIG.37A

FIG.37B

20

1 2

1 2

FIG.37C

70

120°
+α

120°
−α

70

70

FIG.38A

103a

103

FIG.38B

103b

103

103a

FIG.39

## FIG.40A

## FIG.40B

# FIG. 41A

36

36a 121 121

36b

# FIG. 41B

122

# FIG. 41C

122
12
122

## FIG. 42A

## FIG. 42B

## FIG. 42C

## FIG. 42D

## FIG. 42E

## FIG. 42F

## FIG. 42G

FIG.43A    FIG.43B    FIG.43C

FIG.44A  FIG.44B  FIG.44C

FIG.45A

FIG.45B

FIG.46A

FIG.46B

FIG.47A

FIG.47B

AXIAL DIRECTION

AXIAL DIRECTION

FIG.48A

FIG.48B

FIG.48C

# FIG.49A

# FIG.49B

## RELATIONSHIP AMONG PITCH/WIDTH RATIO, EDDY CURRENT LOSS AND INDUCTION VOLTAGE

# FIG.49C

## RELATIONSHIP AMONG DEPTH/WIDTH RATIO, EDDY CURRENT LOSS AND INDUCTION VOLTAGE

FIG.50A

FIG.50C

FIG.50B

FIG.50D

FIG.51A

201

202

201

FIG.51B

201

202

N POLE

S POLE

S POLE

N POLE

AC CURRENT

FIG.52

FIG.53A

AXIAL DIRECTION

121

FIG.53B

12

121

## FIG.54A

501

## FIG.54B

51

51

## FIG.54C

501

## FIG.55A

## FIG.55B

## FIG.55C

## FIG.56A

50    60    12

70

4    4

50

60

## FIG.56B

60    50    50

12°    21°

9°

60

50    60

50    50

60

FIG.57

FIG.58

FIG.59

FIG.60

φ 100±0.01mm

FIG.61

FIG.62

FIG.63

## FIG.64

# FIG.65A

103a

103

103b

# FIG.65B

103

103a

103b

103

# FIG.66

## FIG.67A

## FIG.67B

## FIG.67C

## FIG.68

## FIG.69A

LEAKED MAGNETIC FLUX

## FIG.69B

WITHOUT SLIT

WITH SLIT

INDUCTION VOLTAGE (V)

ROTATIONAL ANGLE (ELECTRICAL ANGLE) (° )

FIG.70

12

20

51

FIG.71

## FIG. 72

## FIG. 73

# FIG.74A

121

# FIG.74B

61a

121

# FIG.75A

# FIG.75B

FIG.76

62a

20U

20Va

20Vb

62b

20W

# FIG. 77

222    104    102
106A  106B  106A  106B
106B
106A
106A  106B
106A

FIG.78C

102

106 B

106 A

222

FIG.78D

108
106A1
1041
108
1040
106B1
222
1040
1040
102
108
1041
106B2
222
1040

FIG.78A

102
104
222
108
108
108
106B
108
106A
108

FIG.78B

102
1040
222
106B1
106A1
106B2
104
222
106 B
106 A
222

## FIG. 79

## FIG. 80

# FIG. 81

FIG.82

FIG.83

FIG. 84

FIG.85A

FIG.85B

FIG.86A

FIG. 86B

1046

1046

1044

FIG. 86C

104

1042    1042

FIG.87A

FIG.87B

FIG. 88A

1040

1117

106A

1041

105

106B

FIG. 88B

108    1040    105

108    106A

1041

106B

FIG. 88C

1040

106A

1041

106B

105

FIG. 89A

FIG. 89B

## FIG.90

FIG.91A

FIG.91B

FIG.91C

FIG.91D

FIG.92A

4520

4140

4180

4120

100

4360

4040

4160

FIG.92B

4180

4010

4160

4520

ASSEMBLED UNIT

FIG.93A

INDUCTION MOTOR
(SQUIRREL-CAGE ROTOR)

FIG.93B

IPM MOTOR
(EMBEDDED MAGNET ROTOR)

FIG.93C

RELUCTANCE MOTOR
(FLUX BARRIER ROTOR)

EP 2 012 409 A2

**REFERENCES CITED IN THE DESCRIPTION**

**Patent documents cited in the description**

- JP 2007160849 A
- JP 2007160981 A
- JP 2007274578 A
- JP 2007274580 A
- JP 2006180646 A
- JP 2005020981 A
- JP 2006296188 A
- JP 2005151785 A